# EUROPEAN PATENT SPECIFICATION

(11) **EP 3 438 502 B1**
(45) Date of publication and mention of the grant of the patent: **24.05.2023**
(21) Application number: 18195304.3
(22) Date of filing: 24.02.2012
(51) Int. Cl.: F16H 3/72, B62K 3/00

(54) **DUAL-DRIVE ELECTRIC MACHINE HAVING CONTROLLABLE EPICYCLE GEAR SET**
ELEKTRISCHE MASCHINE MIT DOPPELANTRIEB MIT STEUERBAREM UMLAUFRÄDERGETRIEBESATZ
MACHINE ÉLECTRIQUE DOUBLE COMMANDE DOTÉE D'UN ENSEMBLE À ENGRENAGES D'ÉPICYCLE CONTRÔLABLE

(30) Priority: 24.02.2011 US 201113033753; 24.02.2011 US 201113033866
(43) Date of publication of application: 06.02.2019
(62) Divisional of application: 12156918.0
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(56) References cited:
- EP-A1- 1 274 161
- EP-A2- 1 469 232
- CN-Y- 201 423 916
- GB-A- 2 466 967
- US-A- 4 467 230

## Description

### BACKGROUND OF THE INVENTION

### (a) Field of the Invention

The present invention is structured by a dual-drive electric machine being combined with an epicycle gear set (EG101) and a controllable brake device, through controlling the controllable brake device to perform brake locking or releasing, the operations of transmission function of combining transmission or releasing between a rotation shaft (S101) at an output/input end, a rotation shaft (S102) at an output/input end and a sleeve type rotation shaft (AS101) at an output/input end of the epicycle gear set (EG101) are enabled to be controlled, and the interacting operation between the dual-drive electric machine (EM100) and the output/input ends are also enabled to be controlled.

### (b) Description of the Prior Art

Conventionally, a friction type electromagnetic clutch device is often installed between the output/input end of a rotation electric machine and a load; and through electrically charging or breaking the friction type electromagnetic clutch device to perform operations of combining or releasing, the load is enabled to engaged or released with the rotary electric machine. One primary disadvantage of the conventional arts is that residual rotary torque is often remained during the releasing, which may cause the kinetic energy loss and the ineffective operation. CN 201423916Y discloses a similar dual drive electric machine.

### SUMMARY OF THE INVENTION

The present invention relates to a dual-drive electric machine as defined in claim 1.

### BRIEF DESCRIPTION OF THE DRAWINGS

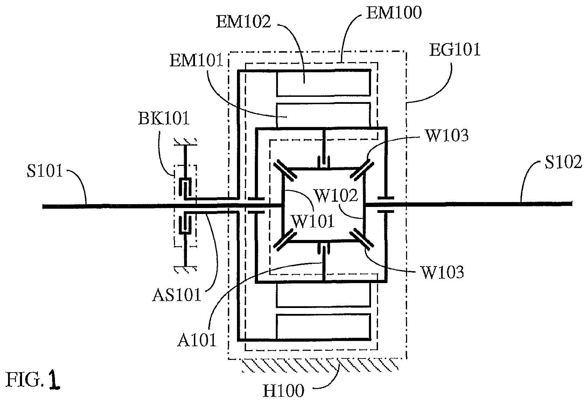

FIG. 1 is a schematic structural view showing the rotation shaft (S101) being combined with the input wheel (W101) of the epicycle gear set (EG101) for being served as an output/input end, the rocker arm (A101) linked by the epicycle wheel (W103) being combined with the inner rotation part of electric machine (EM101), the outer rotation part of electric machine (EM102) being combined with the sleeve type rotation shaft (AS101), the sleeve type rotation shaft (AS101) rotated and sleeved on the rotation shaft (S101) being served as an output/input end and provided for connecting to an action side of the controllable brake device (BK101) while the other action side of the controllable brake device (BK101) being fixed in the housing (H100), the epicycle gear set (EG101) also being fixed in the housing (H100), and the output wheel (W102) of the epicycle gear set (EG101) being provided for driving the rotation shaft (S102) to be served as an output/input end, according to one embodiment of the present invention.

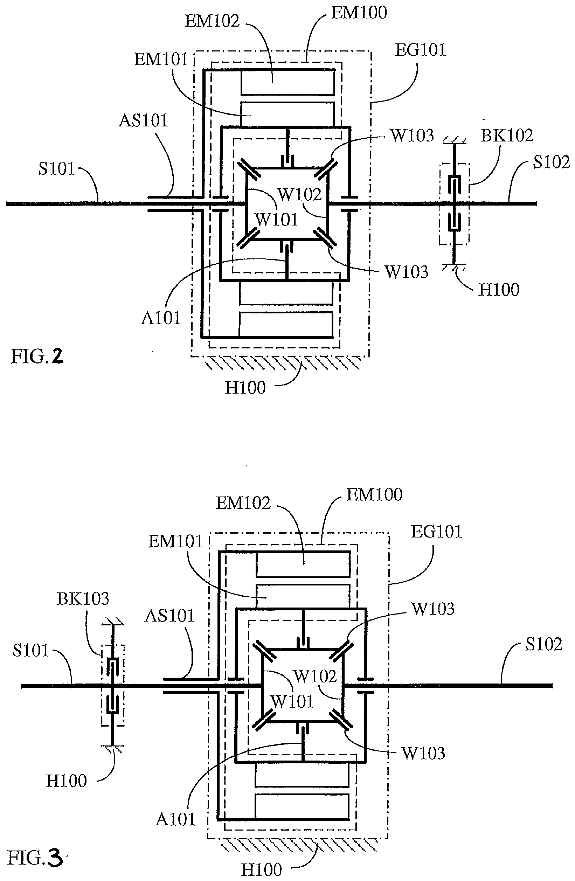

FIG. 2 is a schematic structural view showing the rotation shaft (S101) combined with the input wheel (W101) of the epicycle gear set (EG101) being served as an output/input end, the rocker arm (A101) linked by the epicycle wheel (W103) being combined with the inner rotation part of electric machine (EM101), the outer rotation part of electric machine (EM102) being combined with the sleeve type rotation shaft (AS101), the sleeve type rotation shaft (AS101) rotated and sleeved on the rotation shaft (S101) being served as an output/input end, the output wheel (W102) of the epicycle gear set (EG101) being provided for driving the rotation shaft (S102) to be served as an output/input end, and the rotation shaft (S102) being connected to an action side of the controllable brake device (BK102) while the other action side of the controllable brake device (BK102) being fixed in the housing (H100), according to one embodiment of the present invention.
FIG. 3 is a schematic structural view showing the rotation shaft (S101) being combined with the input wheel (W101) of the epicycle gear set (EG101) and provided for connecting to an action side of the controllable brake device (BK103) while the other action side of the controllable brake device (BK103) being fixed in the housing (H100), the epicycle gear set (EG101) also being fixed in the housing (H100), the epicycle wheel (W103) of the epicycle gear set (EG101) being provided for linking the rocker arm (A101) and combined with the inner rotation part of electric machine (EM101), the outer rotation part of electric machine (EM102) being connected to the sleeve type rotation shaft (AS101), the sleeve type rotation shaft (AS101) rotated and sleeved on the rotation shaft (S101) being served as an output/input end, and the output wheel (W102) of the epicycle gear set (EG101) being provided for driving the rotation shaft (S102) to be served as an output/input end, according to one embodiment of the present invention.

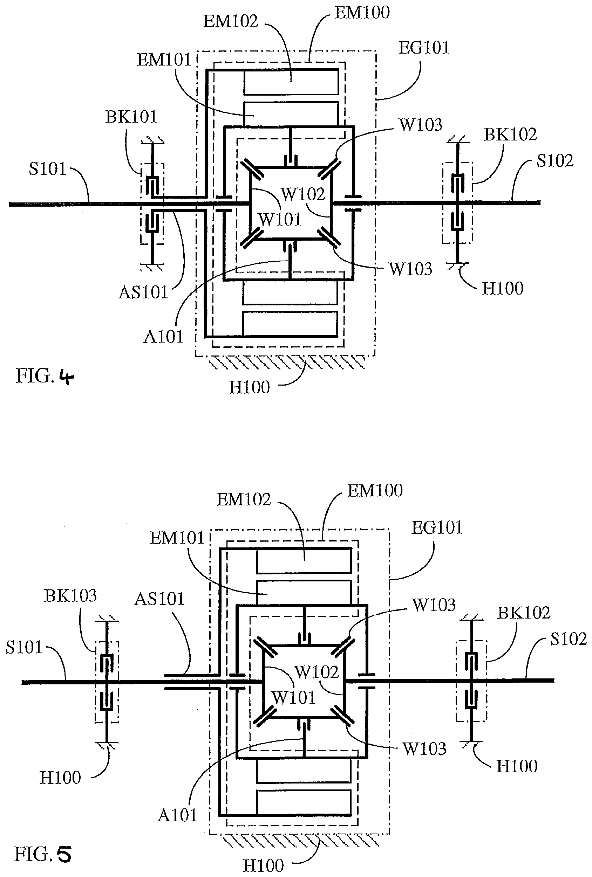

FIG. 4 is a schematic structural view showing the controllable brake device (BK102) being further installed between the rotation shaft (S102) and the housing (H100) as shown in FIG. 1.
FIG. 5 is a schematic structural view showing the controllable brake device (BK103) being further installed between the rotation shaft (S101) and the housing (H100) as shown in FIG. 2.

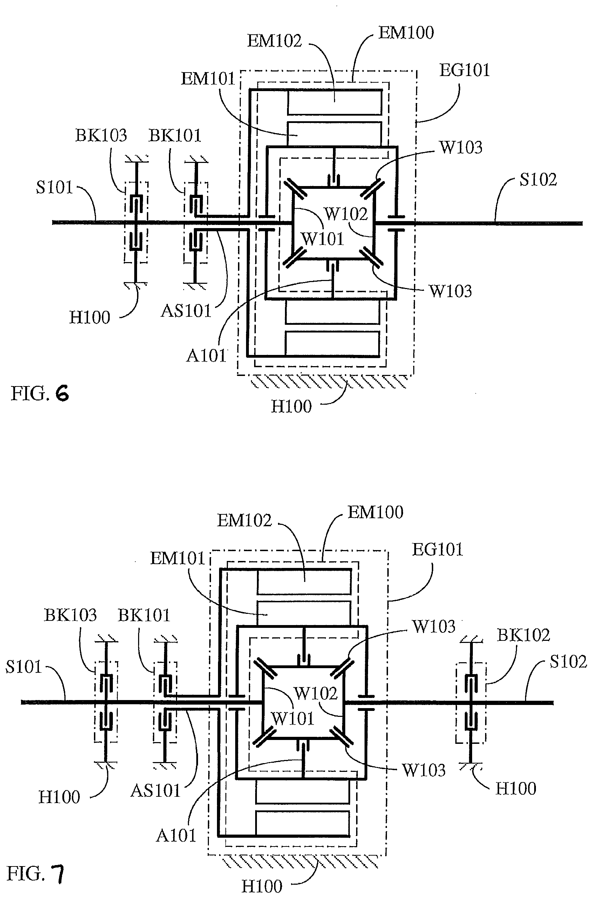

FIG. 6 is a schematic structural view showing the controllable brake device (BK101) being further installed between the sleeve type rotation shaft (AS101) and the housing (H100) as shown in FIG 3.
FIG. 7 is a schematic structural view showing the rotation shaft (S101) combined with the input wheel (W101) of the epicycle gear set (EG101) being served as an output/input end and provided for connecting to an action side of the controllable brake device (BK103) while the other action side of the controllable brake device (BK103) being fixed in the housing (H100), the epicycle wheel (W103) of the epicycle gear set (EG101) being provided for linking the rocker arm (A101) and combined with the inner rotation part of electric machine (EM101), the outer rotation part of electric machine (EM102) being connected to the sleeve type rotation shaft (AS101), the sleeve type rotation shaft (AS101) being rotated and sleeved on the rotation shaft (S101) for being served as an output/input end, the sleeve type rotation shaft (AS101) being connected to an action side of the controllable brake device (BK101) while the other action side of the controllable brake device (BK101) being fixed in the housing (H100), the epicycle gear set (EG101) also being fixed in the housing (H100), and the output wheel (W102) of the epicycle gear set (EG101) being provided for driving the rotation shaft (S102) to be served as an output/input end and provided for connecting to an action side of the controllable brake device (BK102) while the other action side of the controllable brake device (BK102) being fixed in the housing (H100), according to one embodiment of the present invention.

### DESCRIPTION OF MAIN COMPONENT SYMBOLS

A101 : Rocker arm
AS101 : Sleeve type rotation shaft
BK101, BK102, BK103 : Controllable brake device
EG101 : Epicycle gear set
EM100 : Dual-drive electric machine
EM101 : Inner rotation part of electric machine
EM102 : Outer rotation part of electric machine
H100 : Housing
S101, S102 : Rotation shaft
W101 : Input wheel
W102 : Output wheel
W103 : Epicycle wheel

### DETAILED DESCRIPTION OF THE PREFERRED EMBODIMENTS

Conventionally, a friction type electromagnetic clutch device is often installed between the output/input end of a rotation electric machine and a load; and through electrically charging or breaking the friction type electromagnetic clutch device to perform operations of combining or releasing, the load is enabled to engaged or released with the rotary electric machine. One primary disadvantage of the conventional arts is that residual rotary torque is often remained during the releasing, which may cause the kinetic energy loss and the ineffective operation.

The present invention provides a dual-drive electric machine having a controllable epicycle gear set, in which an inner rotation part of electric machine (EM101) of the dual-drive electric machine (EM100) is combined with an input wheel (W101) of an epicycle gear set (EG101) and a rotation shaft (S101) shared by the above two is served as an output/input end, a rotation shaft (S102) combined with an output wheel (W102) is served as an output/input end, and a rocker arm (A101) linked by an epicycle wheel (W103) of the epicycle gear set (EG101) combined with an outer rotation part of electric machine (EM102) and combined with a sleeve type rotation shaft (AS101) is served as an output/input end, so that a part or all of the three output/input ends are respectively connected to an action side of a corresponding controllable brake device, and the other action side of the controllable brake device is connected to a housing (H100); through controlling the controllable brake device to perform brake locking or releasing, the operations of transmission function of connecting transmission or releasing between the rotation shaft (S101) at the output/input end, the rotation shaft (S102) at the output/input end and the sleeve type rotation shaft (AS101) at the output/input end of the epicycle gear set (EG101) are enabled to be controlled, and the interactive operation between the dual-drive electric machine (EM100) and the output/input ends are also enabled to be controlled.

The structures and embodiments of the dual-drive electric machine having controllable epicycle gear set of the present invention are disclosed as followings:
FIG. 1 is a schematic structural view showing the rotation shaft (S101) being combined with the input wheel (W101) of the epicycle gear set (EG101) for being served as an output/input end, the rocker arm (A101) linked by the epicycle wheel (W103) being combined with the inner rotation part of electric machine (EM101), the outer rotation part of electric machine (EM102) being combined with the sleeve type rotation shaft (AS101), the sleeve type rotation shaft (AS101) rotated and sleeved on the rotation shaft (S101) being served as an output/input end and provided for connecting to an action side of the controllable brake device (BK101) while the other action side of the controllable brake device (BK101) being fixed in the housing (H100), the epicycle gear set (EG101) also being fixed in the housing (H100), and the output wheel (W102) of the epicycle gear set (EG101) being provided for driving the rotation shaft (S102) to be served as an output/input end, according to one embodiment of the present invention.

As show in FIG 1, it mainly consists of:
--Epicycle gear set (EG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (S102), the rocker arm (A101), the sleeve type rotation shaft (AS101) and a bearing, as well as installed with a shell for being combined in the housing (H 100);
The speed ratios of the input wheel (W101) and the output wheel (W102) of the mentioned epicycle gear set (EG101) are the same, and the speed ratios between the above two and the epicycle wheel (W103) can be the same or different; or
The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end being combined with the inner rotation part of electric machine (EM101);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS101) or the rocker arm (A101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rocker arm (A101), and the outer rotation part of electric machine (EM102) is combined with the sleeve type rotation shaft (AS101);
--The rotation shaft (S101) combined with the input wheel (W101) of the epicycle gear set (EG101) is served as an output/input end, the rocker arm (A101) linked by the epicycle wheel (W103) is combined with the inner rotation part of electric machine (EM101), the outer rotation part of electric machine (EM102) is combined with the sleeve type rotation shaft (AS101), the sleeve type rotation shaft (AS101) rotated and sleeved on the rotation shaft (S101) is served as an output/input end, the sleeve type rotation shaft (AS101) is connected to an action side of the controllable brake device (BK101) while the other action side of the controllable brake device (BK101) is fixed in the housing (H100), the output wheel (W102) of the epicycle gear set (EG101) is provided for driving the rotation shaft (S102) to be served as an output/input end, and the rotation shaft (S101) combined with the input wheel (W101) is also served as an output/input end;

According to the embodiment shown in FIG. 1, the operations include one or more than one of following functions:
-- When the controllable brake device (BK101) is controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
-- When the controllable brake device (BK101) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the rotation shaft (S101), the rotation shaft (S102) and the sleeve type rotation shaft (AS101);
-- When the controllable brake device (BK101) is controlled to be in the brake locking state, and the dual-drive electric machine (EM100) is not operated as the electric machinery function, the transmission relation between the rotation shaft (S101) and the rotation shaft (S102) is in a connecting relation allowing for transmission;
-- When the controllable brake device (BK101) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function for performing interactive operations according to the damping of the external load or the externally inputted rotary kinetic energy sustained by the rotation shaft (S101) and the rotation shaft (S102);

The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;

The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 2 is a schematic structural view showing the rotation shaft (S101) combined with the input wheel (W101) of the epicycle gear set (EG101) being served as an output/input end, the rocker arm (A101) linked by the epicycle wheel (W103) being combined with the inner rotation part of electric machine (EM101), the outer rotation part of electric machine (EM102) being combined with the sleeve type rotation shaft (AS101), the sleeve type rotation shaft (AS101) rotated and sleeved on the rotation shaft (S101) being served as an output/input end, the output wheel (W102) of the epicycle gear set (EG101) being provided for driving the rotation shaft (S102) to be served as an output/input end, and the rotation shaft (S102) being connected to an action side of the controllable brake device (BK102) while the other action side of the controllable brake device (BK102) being fixed in the housing (H100), according to one embodiment of the present invention.

As show in FIG 2, it mainly consists of:
--Epicycle gear set (EG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (S102), the rocker arm (A101), the sleeve type rotation shaft (AS101) and a bearing, as well as installed with a shell for being combined in the housing (H100);

The speed ratios of the input wheel (W101) and the output wheel (W102) of the mentioned epicycle gear set (EG101) are the same, and the speed ratios between the above two and the epicycle wheel (W103) can be the same or different; or

The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end being combined with the inner rotation part of electric machine (EM101);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rocker arm (A101), and the outer rotation part of electric machine (EM102) is combined with the sleeve type rotation shaft (AS101);
--The rotation shaft (S101) combined with the input wheel (W101) of the epicycle gear set (EG101) is served as an output/input end, the rocker arm (A101) linked by the epicycle wheel (W103) is combined with the inner rotation part of electric machine (EM101), the outer rotation part of electric machine (EM102) is combined with the sleeve type rotation shaft (AS101), and the sleeve type rotation shaft (AS101) rotated and sleeved on the rotation shaft (S101) is served as an output/input end;
--The output wheel (W102) of the epicycle gear set (EG101) is provided for driving the rotation shaft (S102) to be served as an output/input end, and the rotation shaft (S102) is connected to an action side of the controllable brake device (BK102) while the other action side of the controllable brake device (BK102) is fixed in the housing (H100);

According to the embodiment shown in FIG. 2, the operations include one or more than one of following functions:
-- When the controllable brake device (BK102) is controlled to be in the releasing state, and the dual-drive electric machine (EM100) is not operated as the electric machinery function, the transmission relations between the rotation shaft (S101) and the sleeve type rotation shaft (AS101) and the rotation shaft (S102) are in the releasing state allowing idle rotation;
-- When the controllable brake device (BK102) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
-- When the controllable brake device (BK102) is controlled to be in the brake locking state, and the dual-drive electric machine (EM100) is not operated as the electric machinery function, the transmission relation between the rotation shaft (S101) and the sleeve type rotation shaft (AS101) is in a connecting relation allowing for transmission;
-- When the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function for performing interactive operations according to the damping of the external load or the externally inputted rotary kinetic energy sustained by the rotation shaft (S101) and the sleeve type rotation shaft (AS101);

The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;

The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 3 is a schematic structural view showing the rotation shaft (S101) being combined with the input wheel (W101) of the epicycle gear set (EG101) and provided for connecting to an action side of the controllable brake device (BK103) while the other action side of the controllable brake device (BK103) being fixed in the housing (H100), the epicycle gear set (EG101) also being fixed in the housing (H100), the epicycle wheel (W103) of the epicycle gear set (EG101) being provided for linking the rocker arm (A101) and combined with the inner rotation part of electric machine (EM101), the outer rotation part of electric machine (EM102) being connected to the sleeve type rotation shaft (AS101), the sleeve type rotation shaft (AS101) rotated and sleeved on the rotation shaft (S101) being served as an output/input end, and the output wheel (W102) of the epicycle gear set (EG101) being provided for driving the rotation shaft (S102) to be served as an output/input end, according to one embodiment of the present invention.

As show in FIG 3, it mainly consists of:
--Epicycle gear set (EG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (S102), the rocker arm (A101), the sleeve type rotation shaft (AS101) and a bearing, as well as installed with a shell for being combined in the housing (H 100);
The speed ratios of the input wheel (W101) and the output wheel (W102) of the mentioned epicycle gear set (EG101) are the same, and the speed ratios between the above two and the epicycle wheel (W103) can be the same or different; or
The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end being combined with the inner rotation part of electric machine (EM101);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rocker arm (A101), and the outer rotation part of electric machine (EM102) is combined with the sleeve type rotation shaft (AS101);
--The rotation shaft (S101) combined with the input wheel (W101) of the epicycle gear set (EG101) is served as an output/input end and provided for connecting to an action side of the controllable brake device (BK103) while the other action side of the controllable brake device (BK103) is fixed in the housing (H100);
--The epicycle wheel (W103) of the epicycle gear set (EG101) is provided for linking the rocker arm (A101) and combined with the inner rotation part of electric machine (EM101), the outer rotation part of electric machine (EM102) is connected to the sleeve type rotation shaft (AS101), the sleeve type rotation shaft (AS101) rotated and sleeved with the rotation shaft (S101) is served as an output/input end, the output wheel (W102) of the epicycle gear set (EG101) is provided for driving the rotation shaft (S102) to be served as an output/input end, and the rotation shaft (S101) combined with the input wheel (W101) is also served as an output/input end;

According to the embodiment shown in FIG. 3, the operations include one or more than one of following functions:
-- When the controllable brake device (BK103) is controlled to be in the releasing state, and the dual-drive electric machine (EM100) is not operated as the electric machinery function, the transmission relation between the rotation shaft (S101) and the sleeve type rotation shaft (AS101) and the rotation shaft (S102) are in the releasing state allowing idle rotation;
-- When the controllable brake device (BK103) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
-- When the controllable brake device (BK103) is controlled to be in the brake locking state, and the dual-drive electric machine (EM100) is not operated as the electric machinery function, the transmission relation between the sleeve type rotation shaft (AS101) and the rotation shaft (S102) is in a connecting relation allowing for transmission;
-- When the controllable brake device (BK103) is controlled to be in the brake locking state, and the dual-drive electric machine (EM100) is operated as the electric machinery function, between the inner rotation part of electric machine (EM101) and the outer rotation part of electric machine (EM102) is operated as the power generator function or the motor function for performing interactive operations according to the damping of the external load or the externally inputted rotary kinetic energy sustained by the sleeve type rotation shaft (AS101) and the rotation shaft (S102);

The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;

The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 4 is a schematic structural view showing the controllable brake device (BK102) being further installed between the rotation shaft (S102) and the housing (H100) as shown in FIG. 1.

As shown in FIG. 4, the rotation shaft (S101) combined with the input wheel (W101) of the epicycle gear set (EG101) is served as an output/input end, the rocker arm (A101) linked by the epicycle wheel (W103) is combined with the inner rotation part of electric machine (EM101), the outer rotation part of electric machine (EM102) is combined with the sleeve type rotation shaft (AS101), the sleeve type rotation shaft (AS101) rotated and sleeved on the rotation shaft (S101) is served as an output/input end, the sleeve type rotation shaft (AS101) is connected to an action side of the controllable brake device (BK101) while the other action side of the controllable brake device (BK101) is fixed in the housing (H100), the epicycle gear set (EG101) is also fixed in the housing (H100), the output wheel (W102) of the epicycle gear set (EG101) is provided for driving the rotation shaft (S102) to be served as an output/input end, and the rotation shaft (S102) is connected to an action side of the controllable brake device (BK102) while the other action side of the controllable brake device (BK102) is fixed in the housing (H100), which mainly consists of:
--Epicycle gear set (EG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (S102), the rocker arm (A101), the sleeve type rotation shaft (AS101) and a bearing, as well as installed with a shell for being combined in the housing (H100);
The speed ratios of the input wheel (W101) and the output wheel (W102) of the mentioned epicycle gear set (EG101) are the same, and the speed ratios between the above two and the epicycle wheel (W103) can be the same or different; or
The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end being combined with the inner rotation part of electric machine (EM101);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected the sleeve type rotation shaft (AS101) or the rocker arm (A101), and the other action side is fixed in the housing (H100);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rocker arm (A101), and the outer rotation part of electric machine (EM102) is combined with the sleeve type rotation shaft (AS101);
--The rotation shaft (S101) combined with the input wheel (W101) of the epicycle gear set (EG101) is served as an output/input end, the output wheel (W102) of the epicycle gear set (EG101) combined with the rotation shaft (S102) is served as an output/input end, the rocker arm (A101) linked by the epicycle wheel (W103) is combined with the inner rotation part of electric machine (EM101), the outer rotation part of electric machine (EM102) is combined with the sleeve type rotation shaft (AS101), the sleeve type rotation shaft (AS101) rotated and sleeved on the rotation shaft (S101) is served as an output/input end, the sleeve type rotation shaft (AS101) is connected to an action side of the controllable brake device (BK101) while the other action side of the controllable brake device (BK101) is fixed in the housing (H100), the output wheel (W102) of the epicycle gear set (EG101) is provided for driving the rotation shaft (S102) to be served as an output/input end, and the rotation shaft (S102) is connected to an action side of the controllable brake device (BK102) while the other action side of the controllable brake device (BK102) is fixed in the housing (H100);

According to the embodiment shown in FIG. 4, the operations include one or more than one of following functions:
--When the controllable brake device (BK101) and the controllable brake device (BK102) are both controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
-- When the controllable brake device (BK101) and the controllable brake device (BK102) are both controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
-- When the controllable brake device (BK101) is controlled to be in the brake locking state and the controllable brake device (BK102) is controlled to be in the releasing state, and the dual-drive electric machine (EM100) is not operated as the electric machinery function, the transmission relation between the rotation shaft (S101) and the rotation shaft (S102) is in a connecting relation allowing for transmission;
-- When the controllable brake device (BK101) is controlled to be in the brake locking state and the controllable brake device (BK102) is controlled to be in the releasing state, and the dual-drive electric machine (EM100) is operated as the electric machinery function, between the inner rotation part of electric machine (EM101) and the outer rotation part of electric machine (EM102) is operated as the power generator function or the motor function for performing corresponding interactive operations with the damping of the external load or the externally inputted rotary kinetic energy sustained by the rotation shaft (S101) and the rotation shaft (S102);
-- When the controllable brake device (BK101) is controlled to be in the releasing state and the controllable brake device (BK102) is controlled to be in the brake locking state, and the dual-drive electric machine (EM100) is not operated as the electric machinery function, the transmission relation between the rotation shaft (S101) and the sleeve type rotation shaft (AS101) is in a connecting relation allowing for transmission;
-- When the controllable brake device (BK101) is controlled to be in the releasing state and the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK101) and the controllable brake device (BK102) are both controlled to be in the brake locking state, the relations between the rotation shaft (S101), the rotation shaft (S102) and the sleeve type rotation shaft (AS101) are all in the brake locking state;
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 5 is a schematic structural view showing the controllable brake device (BK103) being further installed between the rotation shaft (S101) and the housing (H100) as shown in FIG. 2.

As shown in FIG. 5, the rotation shaft (S101) combined with the input wheel (W101) of the epicycle gear set (EG101) is served as an output/input end and provided for connecting to an action side of the controllable brake device (BK103) while the other action side of the controllable brake device (BK103) is fixed in the housing (H100), the epicycle gear set (EG101) is also fixed in the housing (H100), the epicycle wheel (W103) of the epicycle gear set (EG101) is provided for linking the rocker arm (A101) and combined with the inner rotation part of electric machine (EM101), the outer rotation part of electric machine (EM102) is combined with the sleeve type rotation shaft (AS101), the sleeve type rotation shaft (AS101) rotated and sleeved on the rotation shaft (S101) is served as an output/input end, the output wheel (W102) of the epicycle gear set (EG101) is provided for driving the rotation shaft (S102) to be served as an output/input end, and the rotation shaft (S102) is connected to an action side of the controllable brake device (BK102) while the other action side of the controllable brake device (BK102) is fixed in the housing (H100), which mainly consists of:
--Epicycle gear set (EG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (S102), the rocker arm (A101), the sleeve type rotation shaft (AS101) and a bearing, as well as installed with a shell for being combined in the housing (H 100);
The speed ratios of the input wheel (W101) and the output wheel (W102) of the mentioned epicycle gear set (EG101) are the same, and the speed ratios between the above two and the epicycle wheel (W103) can be the same or different; or
The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end being combined with the inner rotation part of electric machine (EM101);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rocker arm (A101), and the outer rotation part of electric machine (EM102) is combined with the sleeve type rotation shaft (AS101);
-- The rotation shaft (S101) combined with the input wheel (W101) of the epicycle gear set (EG101) is served as an output/input end and provided for connecting to an action side of the controllable brake device (BK103) while the other action side of the controllable brake device (BK103) is fixed in the housing (H100); the output wheel (W102) of the epicycle gear set (EG101) is combined with the rotation shaft (S102) for being served as an output/input end and provided for connecting to an action side of the controllable brake device (BK102) while the other action side of the controllable brake device (BK102) is fixed in the housing (H100), the rocker arm (A101) linked by the epicycle wheel (W103) is combined with the inner rotation part of electric machine (EM101), the outer rotation part of electric machine (EM102) is combined with the sleeve type rotation shaft (AS101), and the sleeve type rotation shaft (AS101) rotated and sleeved on the rotation shaft (S101) is served as an output/input end;

According to the embodiment shown in FIG 5, the operations include one or more than one of following functions:
--When the controllable brake device (BK102) and the controllable brake device (BK103) are both controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
-- When the controllable brake device (BK102) and the controllable brake device (BK103) are both controlled to be in the releasing state, and the dual-drive electric machine (EM100) is operated as the electric machinery function, the corresponding interactive operation of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK103) is controlled to be in the brake locking state and the controllable brake device (BK102) is controlled to be in the releasing state, and the dual-drive electric machine (EM100) is not operated as the electric machinery function, the transmission relation between the sleeve type rotation shaft (AS101) and the rotation shaft (S102) is in a connecting relation allowing for transmission;
--When the controllable brake device (BK103) is controlled to be in the brake locking state and the controllable brake device (BK102) is controlled to be in the releasing state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the sleeve type rotation shaft (AS101) and the rotation shaft (S102);
-- When the controllable brake device (BK103) is controlled to be in the releasing state and the controllable brake device (BK102) is controlled to be in the brake locking state, and the dual-drive electric machine (EM100) is not operated as the electric machinery function, the transmission relation between the rotation shaft (S101) and the sleeve type rotation shaft (AS101) is in a connecting relation allowing for transmission;
-- When the controllable brake device (BK103) is controlled to be in the releasing state and the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK101) and the controllable brake device (BK102) are both controlled to be in the brake locking state, the relations between the rotation shaft (S101), the rotation shaft (S102) and the sleeve type rotation shaft (AS101) are all in the brake locking state;
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 6 is a schematic structural view showing the controllable brake device (BK101) being further installed between the sleeve type rotation shaft (AS101) and the housing (H100) as shown in FIG. 3.

As shown in FIG. 6, the rotation shaft (S101) combined with the input wheel (W101) of the epicycle gear set (EG101) is served as an output/input end and provided for connecting to an action side of the controllable brake device (BK103) while the other action side of the controllable brake device (BK103) is fixed in the housing (H100), the epicycle wheel (W103) of the epicycle gear set (EG101) is provided for linking the rocker arm (A101) and combined with the inner rotation part of electric machine (EM101), the outer rotation part of electric machine (EM102) is connected to the sleeve type rotation shaft (AS101), the sleeve type rotation shaft (AS101) is rotated and sleeved on the rotation shaft (S101) for being served as an output/input end, the sleeve type rotation shaft (AS101) is connected to an action side of the controllable brake device (BK101) while the other action side of the controllable brake device (BK101) is fixed in the housing (H100), the epicycle gear set (EG101) also is fixed in the housing (H100), and the output wheel (W102) of the epicycle gear set (EG101) is provided for driving the rotation shaft (S102) to be served as an output/input end, which mainly consists of:
--Epicycle gear set (EG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (S102), the rocker arm (A101), the sleeve type rotation shaft (AS101) and a bearing, as well as installed with a shell for being combined in the housing (H100);
The speed ratios of the input wheel (W101) and the output wheel (W102) of the mentioned epicycle gear set (EG101) are the same, and the speed ratios between the above two and the epicycle wheel (W103) can be the same or different; or
The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end being combined with the inner rotation part of electric machine (EM101);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS101) or the rocker arm (A101), and the other action side is fixed in the housing (H100);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rocker arm (A101), and the outer rotation part of electric machine (EM102) is combined with the sleeve type rotation shaft (AS101);
--The rotation shaft (S101) combined with the input wheel (W101) of the epicycle gear set (EG101) is served as an output/input end and provided for connecting to an action side of the controllable brake device (BK103) while the other action side of the controllable brake device (BK103) is fixed in the housing (H100);
--The epicycle wheel (W103) of the epicycle gear set (EG101) is provided for linking the rocker arm (A101) and combined with the inner rotation part of electric machine (EM101), the outer rotation part of electric machine (EM102) is connected to the sleeve type rotation shaft (AS101), the sleeve type rotation shaft (AS101) rotated and sleeved on the rotation shaft (S101) is served as an output/input end, the sleeve type rotation shaft (AS101) is connected to an action side of the controllable brake device (BK101) while the other action side of the controllable brake device (BK101) is fixed in the housing (H100), and the output wheel (W102) of the epicycle gear set (EG101) is provided for driving the rotation shaft (S102) to be served as an output/input end;

According to the embodiment shown in FIG. 6, the operations include one or more than one of following functions:
--When the controllable brake device (BK101) and the controllable brake device (BK103) are both controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
-- When the controllable brake device (BK101) and the controllable brake device (BK103) are both controlled to be in the releasing state, and the dual-drive electric machine (EM100) is operated as the electric machinery function, the corresponding interactive operation of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
-- When the controllable brake device (BK101) is controlled to be in the brake locking state and the controllable brake device (BK103) is controlled to be in the releasing state, and the dual-drive electric machine (EM100) is not operated as the electric machinery function, the transmission relation between the rotation shaft (S101) and the rotation shaft (S102) is in a connecting relation allowing for transmission;
-- When the controllable brake device (BK101) is controlled to be in the brake locking state and the controllable brake device (BK103) is controlled to be in the releasing state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and rotation shaft (S102);
-- When the controllable brake device (BK101) is controlled to be in the releasing state and the controllable brake device (BK103) is controlled to be in the brake locking state, and the dual-drive electric machine (EM100) is not operated as the electric machinery function, the transmission relation between the rotation shaft (S102) and the sleeve type rotation shaft (AS101) is in a connecting relation allowing for transmission;
-- When the controllable brake device (BK101) is controlled to be in the releasing state and the controllable brake device (BK103) is controlled to be in the brake locking state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S102) and the sleeve type rotation shaft (AS101);
--When the controllable brake device (BK101) and the controllable brake device (BK102) are both controlled to be in the brake locking state, the relations between the rotation shaft (S101), the rotation shaft (S102) and the sleeve type rotation shaft (AS101) are all in the brake locking state.
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 7 is a schematic structural view showing the rotation shaft (S101) combined with the input wheel (W101) of the epicycle gear set (EG101) being served as an output/input end and provided for connecting to an action side of the controllable brake device (BK103) while the other action side of the controllable brake device (BK103) being fixed in the housing (H100), the epicycle wheel (W103) of the epicycle gear set (EG101) being provided for linking the rocker arm (A101) and combined with the inner rotation part of electric machine (EM101), the outer rotation part of electric machine (EM102) being connected to the sleeve type rotation shaft (AS101), the sleeve type rotation shaft (AS101) being rotated and sleeved on the rotation shaft (S101) for being served as an output/input end, the sleeve type rotation shaft (AS101) being connected to an action side of the controllable brake device (BK101) while the other action side of the controllable brake device (BK101) being fixed in the housing (H100), the epicycle gear set (EG101) also being fixed in the housing (H100), and the output wheel (W102) of the epicycle gear set (EG101) being provided for driving the rotation shaft (S102) to be served as an output/input end and provided for connecting to an action side of the controllable brake device (BK102) while the other action side of the controllable brake device (BK102) being fixed in the housing (H100), according to one embodiment of the present invention.

As shown in FIG. 7, the rotation shaft (S101) combined with the input wheel (W101) of the epicycle gear set (EG101) is served as an output/input end and provided for connecting to an action side of the controllable brake device (BK103) while the other action side of the controllable brake device (BK103) is fixed in the housing (H100), the epicycle wheel (W103) of the epicycle gear set (EG101) is provided for linking the rocker arm (A101) and combined with the inner rotation part of electric machine (EM101), the outer rotation part of electric machine (EM102) is connected to the sleeve type rotation shaft (AS101), the sleeve type rotation shaft (AS101) rotated and sleeved on the rotation shaft (S101) is served as an output/input end, the sleeve type rotation shaft (AS101) is connected to an action side of the controllable brake device (BK101) while the other action side of the controllable brake device (BK101) is fixed in the housing (H100), the epicycle gear set (EG101) is also fixed in the housing (H100), the output wheel (W102) of the epicycle gear set (EG101) is provided for driving the rotation shaft (S102) to be served as an output/input end, and the rotation shaft (S102) is connected to an action side of the controllable brake device (BK102) while the other action side of the controllable brake device (BK102) is fixed in the housing (H100), which mainly consists of:
--Epicycle gear set (EG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (S102), the rocker arm (A101), the sleeve type rotation shaft (AS101) and a bearing, as well as installed with a shell for being combined in the housing (H100);
The speed ratios of the input wheel (W101) and the output wheel (W102) of the mentioned epicycle gear set (EG101) are the same, and the speed ratios between the above two and the epicycle wheel (W103) can be the same or different; or
The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end being combined with the inner rotation part of electric machine (EM101);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS101) or the rocker arm (A101), and the other action side is fixed in the housing (H100);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rocker arm (A101), and the outer rotation part of electric machine (EM102) is combined with the sleeve type rotation shaft (AS101);
--The rotation shaft (S101) combined with the input wheel (W101) of the epicycle gear set (EG101) is served as an output/input end and provided for connecting to one action side of the controllable brake device (BK103) while an action side of the controllable brake device (BK103) is fixed in the housing (H100);
--The epicycle wheel (W103) of the epicycle gear set (EG101) is provided for linking the rocker arm (A101) and combined with the inner rotation part of electric machine (EM101), the outer rotation part of electric machine (EM102) is connected to the sleeve type rotation shaft (AS101), the sleeve type rotation shaft (AS101) rotated and sleeved on the rotation shaft (S101) is served as an output/input end, the sleeve type rotation shaft (AS101) is connected to an action side of the controllable brake device (BK101) while the other action side of the controllable brake device (BK101) is fixed in the housing (H100), the output wheel (W102) of the epicycle gear set (EG101) is provided for driving the rotation shaft (S102) to be served as an output/input end, and the rotation shaft (S102) is connected to an action side of the controllable brake device (BK102) while the other action side of the controllable brake device (BK102) is fixed in the housing (H100);

According to the embodiment shown in FIG. 7, the operations include one or more than one of following functions:
--When the controllable brake device (BK101) and the controllable brake device (BK102) and the controllable brake device (BK103) are all controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
-- When the controllable brake device (BK101) and the controllable brake device (BK102) and the controllable brake device (BK103) are all controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
-- When the controllable brake device (BK101) is controlled to be in the brake locking state, the controllable brake device (BK102) and the controllable brake device (BK103) are controlled to be in the releasing state, and the dual-drive electric machine (EM100) is not operated as the electric machinery function, the transmission relation between the rotation shaft (S101) and the rotation shaft (S102) is in a connecting relation allowing for transmission;
-- When the controllable brake device (BK101) is controlled to be in the brake locking state, the controllable brake device (BK102) and the controllable brake device (BK103) are controlled to be in the releasing state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and rotation shaft (S102);
-- When the controllable brake device (BK102) is controlled to be in the brake locking state, the controllable brake device (BK101) and the controllable brake device (BK103) are controlled to be in the releasing state, and the dual-drive electric machine (EM100) is not operated as the electric machinery function, the transmission relation between the rotation shaft (S101) and the sleeve type rotation shaft (AS101) is in a connecting relation allowing for transmission;
-- When the controllable brake device (BK102) is controlled to be in the brake locking state, the controllable brake device (BK101) and the controllable brake device (BK103) are controlled to be in the releasing state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
-- When the controllable brake device (BK103) is controlled to be in the brake locking state, the controllable brake device (BK101) and the controllable brake device (BK102) are controlled to be in the releasing state, and the dual-drive electric machine (EM100) is not operated as the electric machinery function, the transmission relation between the rotation shaft (S102) and the sleeve type rotation shaft (AS101) is in a connecting relation allowing for transmission;
-- When the controllable brake device (BK103) is controlled to be in the brake locking state, the controllable brake device (BK101) and the controllable brake device (BK102) are controlled to be in the releasing state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S102) and the sleeve type rotation shaft (AS101);
-- When two or all of the controllable brake device (BK101) and the controllable brake device (BK102) and the controllable brake device (BK103) are controlled to be in the brake locking state, the relations between the rotation shaft (S101), the rotation shaft (S102) and the sleeve type rotation shaft (AS101) are all in the brake locking state;
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.
The dual-drive electric machine installed with epicycle gear type clutch of the present invention can be applied to various load devices which require mechanical output for driving, such as a ground vehicle, rail vehicle, agriculture machineries or agriculture vehicles, excavator, dozer, construction vehicle, transportation vehicle, garbage truck, hoisting machinery, lifting machinery, forklift machinery, water or underwater boat, aircraft, industrial machineries, tool machine, power device, hand-operated tool, robot or mechanical arm, gardening power tool, domestic electric equipment;

According to the dual-drive electric machine installed with epicycle gear type clutch of the present invention, the sources of externally inputted rotary kinetic energy include an inner combustion engine, an outer combustion engine, a Sterling engine, a steam engine, electric engine, hydraulic engine, pneumatic engine, wind-driven blade device, flow-driven blade device, vapor-driven blade device, human or animal forces.

## Claims

1. A dual-drive electric machine (EM100) in combination with a controllable bevel gear set (EG101), in which:
an outer rotation part of the electric machine (EM102) is connected to a sleeve type rotation shaft (AS101), wherein the sleeve type rotation shaft (AS101) rotates and is sleeved on a first rotation shaft (S101) serving as an output/input end, the first rotation shaft (S101) connected to an input wheel (W101);
an inner rotation part of electric machine (EM 101) of the dual-drive electric machine (EM100) is combined with a rocker arm (A101) linked to a wheel (W103) of the bevel gear set (EG101) installed in the inner rotation part of the electric machine (EM101);
a second rotation shaft (S102) connected to an output wheel (W102) is served as an output/input end;
the first rotation shaft (S101) at the output/input end, the second rotation shaft (S102) at the output/input end and the sleeve type rotation shaft (AS101) form three output/input ends;
wherein at least one of the three output/input ends is connected to an action side of a controllable brake device, and the other action side of the controllable brake device is connected to a housing (H100); and
wherein one of the three output/input ends unconnected with the dual-drive electric machine (EM100) is served for external output;
by controlling the controllable brake device to perform a brake locking or a releasing operation, operations of transmission function of connecting transmission or releasing between the first rotation shaft (S101) at the output/input end, the second rotation shaft (S102) at the output/input end and the sleeve type rotation shaft (AS101) at the output/input end of the bevel gear set (EG101) are enabled to be controlled, and the interactive operations between the dual-drive electric machine (EM100) and the output/input ends are also enabled to be controlled.

2. A dual-drive electric machine having a controllable bevel gear set as claimed in claim 1, wherein the first rotation shaft (S101) is combined with the input wheel (W101) of the bevel gear set (EG101) for being served as an output/input end, the rocker arm (A101) linked by the wheel (W103) is combined with the inner rotation part of electric machine (EM101), the outer rotation part of electric machine (EM102) is combined with the sleeve type rotation shaft (AS101), the sleeve type rotation shaft (AS101) rotated and sleeved on the first rotation shaft (S101) is served as an output/input end and provided for connecting to an action side of the controllable brake device (BK101) while the other action side of the controllable brake device (BK101) is fixed in the housing (H100), the bevel gear set (EG101) also is fixed in the housing (H100), and the output wheel (W102) of the bevel gear set (EG101) is provided for driving the rotation shaft (S102) to be served as an output/input end, which mainly consists of;
--Bevel gear set (EG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the first rotation shaft (S101), the second rotation shaft (S102), the rocker arm (A101), the sleeve type rotation shaft (AS 101) and a bearing, as well as installed with a shell for being combined in the housing (H100);
The speed ratios of the input wheel (W101) and the output wheel (W102) of the mentioned bevel gear set (EG101) are the same, and the speed ratios between the above two and the wheel (W103) can be the same or different; or
The speed ratios of the input wheel (W101) and the output wheel (W102) of the mentioned bevel gear set (EG101) are different, the speed ratios between the wheel (W103) and the output wheel (W102) can be the same or different, and the speed ratios between the wheel (W103) and the input wheel (W101) can be the same or different;
--Rocker arm (A101): having one end provided for allowing the wheel (W103) to rotate and link, and the other end being combined with the inner rotation part of electric machine (EM101);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS 101) or the rocker arm (A101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rocker arm (A101), and the outer rotation part of electric machine (EM102) is combined with the sleeve type rotation shaft (AS101);
--The first rotation shaft (S101) combined with the input wheel (W101) of the bevel gear set (EG101) is served as an output/input end, the rocker arm (A101) linked by the wheel (W103) is combined with the inner rotation part of electric machine (EM101), the outer rotation part of electric machine (EM102) is combined with the sleeve type rotation shaft (AS101), the sleeve type rotation shaft (AS 101) rotated and sleeved on the first rotation shaft (S101) is served as an output/input end, the sleeve type rotation shaft (AS 101) is connected to an action side of the controllable brake device (BK101) while the other action side of the controllable brake device (BK101) is fixed in the housing (H100), the output wheel (W102) of the bevel gear set (EG101) is provided for driving the rotation shaft (S102) to be served as an output/input end, and the first rotation shaft (S101) combined with the input wheel (W101) is also served as an output/input end;
The operations include one or more than one of following functions:
--When the controllable brake device (BK101) is controlled to be in the releasing state, and the dual-drive electric machine (EM100) is not operated as the electric machinery function, the transmission relations between the first rotation shaft (S101) and the second rotation shaft (S102) and the sleeve type rotation shaft (AS101) are in the releasing state allowing idle rotation;
-- When the controllable brake device (BK101) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the first rotation shaft (S101), the second rotation shaft (S102) and the sleeve type rotation shaft (AS101);
--When the controllable brake device (BK101) is controlled to be in the brake locking state, and the dual-drive electric machine (EM100) is not operated as the electric machinery function, the transmission relation between the first rotation shaft (S101) and the second rotation shaft (S102) is in a connecting relation allowing for transmission;
--When the controllable brake device (BK101) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function for performing interactive operations according to the damping of the external load or the externally inputted rotary kinetic energy sustained by the first rotation shaft (S101) and the second rotation shaft (S102);
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

3. A dual-drive electric machine having a controllable bevel gear set as claimed in claim 1, wherein the first rotation shaft (S101) combined with the input wheel (W101) of the bevel gear set (EG101) is served as an output/input end, the rocker arm (A101) linked by the wheel (W103) is combined with the inner rotation part of electric machine (EM101), the outer rotation part of electric machine (EM102) is combined with the sleeve type rotation shaft (AS101), the sleeve type rotation shaft (AS101) rotated and sleeved on the first rotation shaft (S101) is served as an output/input end, the output wheel (W102) of the bevel gear set (EG101) is provided for driving the rotation shaft (S102) to be served as an output/input end, and the rotation shaft (S102) is connected to an action side of the controllable brake device (BK102) while the other action side of the controllable brake device (BK102) is fixed in the housing (H100), which mainly consists of:
--Bevel gear set (EG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the first rotation shaft (S101), the second rotation shaft (S102), the rocker arm (A101), the sleeve type rotation shaft (AS101) and a bearing, as well as installed with a shell for being combined in the housing (H100);
The speed ratios of the input wheel (W101) and the output wheel (W102) of the mentioned bevel gear set (EG101) are the same, and the speed ratios between the above two and the wheel (W103) can be the same or different; or
The speed ratios of the input wheel (W101) and the output wheel (W102) of the mentioned bevel gear set (EG101) are different, the speed ratios between the wheel (W103) and the output wheel (W102) can be the same or different, and the speed ratios between the wheel (W103) and the input wheel (W101) can be the same or different;
--Rocker arm (A101): having one end provided for allowing the wheel (W103) to rotate and link, and the other end being combined with the inner rotation part of electric machine (EM101);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S 102), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rocker arm (A101), and the outer rotation part of electric machine (EM102) is combined with the sleeve type rotation shaft (AS101);
--The first rotation shaft (S101) combined with the input wheel (W101) of the bevel gear set (EG101) is served as an output/input end, the rocker arm (A101) linked by the wheel (W103) is combined with the inner rotation part of electric machine (EM101), the outer rotation part of electric machine (EM102) is combined with the sleeve type rotation shaft (AS101), and the sleeve type rotation shaft (AS101) rotated and sleeved on the first rotation shaft (S 101) is served as an output/input end;
--The output wheel (W102) of the bevel gear set (EG101) is provided for driving the second rotation shaft (S 102) to be served as an output/input end, and the second rotation shaft (S102) is connected to an action side of the controllable brake device (BK102) while the other action side of the controllable brake device (BK102) is fixed in the housing (H100);
The operations include one or more than one of following functions:
--When the controllable brake device (BK102) is controlled to be in the releasing state, and the dual-drive electric machine (EM100) is not operated as the electric machinery function, the transmission relations between the first rotation shaft (S101) and the sleeve type rotation shaft (AS101) and the second rotation shaft (S102) are in the releasing state allowing idle rotation;
-- When the controllable brake device (BK102) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the first rotation shaft (S101), the second rotation shaft (S102) and the sleeve type rotation shaft (AS101);
--When the controllable brake device (BK102) is controlled to be in the brake locking state, and the dual-drive electric machine (EM100) is not operated as the electric machinery function, the transmission relation between the first rotation shaft (S101) and the sleeve type rotation shaft (AS101) is in a connecting relation allowing for transmission;
--When the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function for performing interactive operations according to the damping of the external load or the externally inputted rotary kinetic energy sustained by the first rotation shaft (S101) and the sleeve type rotation shaft (AS101);
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM 100) include receiving the driving of the externally inputted rotary kinetic energy or the driving of the load inertia kinetic energy for being operated as the power generator function, so as to output the electric energy to drive the external electric load or charge the external electric energy storing device.

4. A dual-drive electric machine having a controllable bevel gear set as claimed in claim 1, wherein the first rotation shaft (S101) is combined with the input wheel (W101) of the bevel gear set (EG101) and provided for connecting to an action side of the controllable brake device (BK103) while the other action side of the controllable brake device (BK103) is fixed in the housing (H100), the bevel gear set (EG101) also is fixed in the housing (H100), the wheel (W103) of the bevel gear set (EG101) is provided for linking the rocker arm (A101) and combined with the inner rotation part of electric machine (EM101), the outer rotation part of electric machine (EM102) is connected to the sleeve type rotation shaft (AS 101), the sleeve type rotation shaft (AS101) rotated and sleeved on the first rotation shaft (S101) is served as an output/input end, and the output wheel (W102) of the bevel gear set (EG101) is provided for driving the rotation shaft (S102) to be served as an output/input end, which mainly consists of:
--Bevel gear set (EG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the first rotation shaft (S101), the second rotation shaft (S102), the rocker arm (A101), the sleeve type rotation shaft (AS101) and a bearing, as well as installed with a shell for being combined in the housing (H100);
The speed ratios of the input wheel (W101) and the output wheel (W102) of the mentioned bevel gear set (EG101) are the same, and the speed ratios between the above two and the wheel (W103) can be the same or different; or
The speed ratios of the input wheel (W101) and the output wheel (W102) of the mentioned bevel gear set (EG101) are different, the speed ratios between the wheel (W103) and the output wheel (W102) can be the same or different, and the speed ratios between the wheel (W103) and the input wheel (W101) can be the same or different;
--Rocker arm (A101): having one end provided for allowing the wheel (W103) to rotate and link, and the other end being combined with the inner rotation part of electric machine (EM101);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the first rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rocker arm (A101), and the outer rotation part of electric machine (EM102) is combined with the sleeve type rotation shaft (AS101);
--The first rotation shaft (S101) combined with the input wheel (W101) of the bevel gear set (EG101) is served as an output/input end and provided for connecting to an action side of the controllable brake device (BK103) while the other action side of the controllable brake device (BK103) is fixed in the housing (H100);
--The wheel (W103) of the bevel gear set (EG101) is provided for linking the rocker arm (A101) and combined with the inner rotation part of electric machine (EM101), the outer rotation part of electric machine (EM102) is connected to the sleeve type rotation shaft (AS101), the sleeve type rotation shaft (AS101) rotated and sleeved with the first rotation shaft (S101) is served as an output/input end, the output wheel (W102) of the bevel gear set (EG101) is provided for driving the second rotation shaft (S102) to be served as an output/input end, and the rotation shaft (S101) combined with the input wheel (W101) is also served as an output/input end;
The operations include one or more than one of following functions:
--When the controllable brake device (BK103) is controlled to be in the releasing state, and the dual-drive electric machine (EM100) is not operated as the electric machinery function, the transmission relation between the first rotation shaft (S101) and the sleeve type rotation shaft (AS101) and the second rotation shaft (S102) are in the releasing state allowing idle rotation;
-- When the controllable brake device (BK103) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the first rotation shaft (S101), the second rotation shaft (S102) and the sleeve type rotation shaft (AS101);
--When the controllable brake device (BK103) is controlled to be in the brake locking state, and the dual-drive electric machine (EM100) is not operated as the electric machinery function, the transmission relation between the sleeve type rotation shaft (AS101) and the second rotation shaft (S102) is in a connecting relation allowing for transmission;
--When the controllable brake device (BK103) is controlled to be in the brake locking state, and the dual-drive electric machine (EM100) is operated as the electric machinery function, between the inner rotation part of electric machine (EM101) and the outer rotation part of electric machine (EM102) is operated as the power generator function or the motor function for performing interactive operations according to the damping of the external load or the externally inputted rotary kinetic energy sustained by the sleeve type rotation shaft (AS101) and the second rotation shaft (S102);
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

5. A dual-drive electric machine having a controllable bevel gear set as claimed in claim 1, wherein the first rotation shaft (S101) combined with the input wheel (W101) of the bevel gear set (EG101) is served as an output/input end, the rocker arm (A101) linked by the wheel (W103) is combined with the inner rotation part of electric machine (EM101), the outer rotation part of electric machine (EM102) is combined with the sleeve type rotation shaft (AS101), the sleeve type rotation shaft (AS101) rotated and sleeved on the first rotation shaft (S101) is served as an output/input end, the sleeve type rotation shaft (AS101) is connected to an action side of the controllable brake device (BK101) while the other action side of the controllable brake device (BK101) is fixed in the housing (H100), the bevel gear set (EG101) is also fixed in the housing (H100), the output wheel (W102) of the bevel gear set (EG101) is provided for driving the second rotation shaft (S102) to be served as an output/input end, and the second rotation shaft (S102) is connected to an action side of the controllable brake device (BK102) while the other action side of the controllable brake device (BK102) is fixed in the housing (H100), which mainly consists of:
--Bevel gear set (EG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the first rotation shaft (S101), the second rotation shaft (S102), the rocker arm (A101), the sleeve type rotation shaft (AS101) and a bearing, as well as installed with a shell for being combined in the housing (H100);
The speed ratios of the input wheel (W101) and the output wheel (W102) of the mentioned bevel gear set (EG101) are the same, and the speed ratios between the above two and the wheel (W103) can be the same or different; or
The speed ratios of the input wheel (W101) and the output wheel (W102) of the mentioned bevel gear set (EG101) are different, the speed ratios between the wheel (W103) and the output wheel (W102) can be the same or different, and the speed ratios between the wheel (W103) and the input wheel (W101) can be the same or different;
--Rocker arm (A101): having one end provided for allowing the wheel (W103) to rotate and link, and the other end being combined with the inner rotation part of electric machine (EM101);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected the sleeve type rotation shaft (AS101) or the rocker arm (A101), and the other action side is fixed in the housing (H100);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the second rotation shaft (S 102), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rocker arm (A101), and the outer rotation part of electric machine (EM102) is combined with the sleeve type rotation shaft (AS101);
--The first rotation shaft (S101) combined with the input wheel (W101) of the bevel gear set (EG101) is served as an output/input end, the output wheel (W102) of the bevel gear set (EG101) combined with the second rotation shaft (S102) is served as an output/input end, the rocker arm (A101) linked by the wheel (W103) is combined with the inner rotation part of electric machine (EM101), the outer rotation part of electric machine (EM102) is combined with the sleeve type rotation shaft (AS101), the sleeve type rotation shaft (AS101) rotated and sleeved on the first rotation shaft (S101) is served as an output/input end, the sleeve type rotation shaft (AS 101) is connected to an action side of the controllable brake device (BK101) while the other action side of the controllable brake device (BK101) is fixed in the housing (H100), the output wheel (W102) of the bevel gear set (EG101) is provided for driving the second rotation shaft (S102) to be served as an output/input end, and the second rotation shaft (S102) is connected to an action side of the controllable brake device (BK102) while the other action side of the controllable brake device (BK102) is fixed in the housing (H100);
The operations include one or more than one of following functions:
--When the controllable brake device (BK101) and the controllable brake device (BK102) are both controlled to be in the releasing state, and the dual-drive electric machine (EM100) is not operated as the electric machinery function, the transmission relations between the first rotation shaft (S101) and the second rotation shaft (S102) and the sleeve type rotation shaft (AS101) are in the releasing state allowing idle rotation;
-- When the controllable brake device (BK101) and the controllable brake device (BK102) are both controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the first rotation shaft (S101), the second rotation shaft (S102) and the sleeve type rotation shaft (AS101);
--When the controllable brake device (BK101) is controlled to be in the brake locking state and the controllable brake device (BK102) is controlled to be in the releasing state, and the dual-drive electric machine (EM100) is not operated as the electric machinery function, the transmission relation between the first rotation shaft (S101) and the second rotation shaft (S102) is in a connecting relation allowing for transmission;
--When the controllable brake device (BK101) is controlled to be in the brake locking state and the controllable brake device (BK102) is controlled to be in the releasing state, and the dual-drive electric machine (EM100) is operated as the electric machinery function, between the inner rotation part of electric machine (EM101) and the outer rotation part of electric machine (EM102) is operated as the power generator function or the motor function for performing corresponding interactive operations with the damping of the external load or the externally inputted rotary kinetic energy sustained by the first rotation shaft (S101) and the second rotation shaft (S102);
--When the controllable brake device (BK101) is controlled to be in the releasing state and the controllable brake device (BK102) is controlled to be in the brake locking state, and the dual-drive electric machine (EM100) is not operated as the electric machinery function, the transmission relation between the first rotation shaft (S101) and the sleeve type rotation shaft (AS101) is in a connecting relation allowing for transmission;
--When the controllable brake device (BK101) is controlled to be in the releasing state and the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the first rotation shaft (S101) and the sleeve type rotation shaft (AS101);
--When the controllable brake device (BK101) and the controllable brake device (BK102) are both controlled to be in the brake locking state, the relations between the first rotation shaft (S101), the second rotation shaft (S102) and the sleeve type rotation shaft (AS101) are all in the brake locking state;
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

6. A dual-drive electric machine having a controllable bevel gear set as claimed in claim 1, wherein the first rotation shaft (S101) combined with the input wheel (W101) of the bevel gear set (EG101) is served as an output/input end and provided for connecting to an action side of the controllable brake device (BK103) while the other action side of the controllable brake device (BK103) is fixed in the housing (H100), the bevel gear set (EG101) is also fixed in the housing (H100), the wheel (W103) of the bevel gear set (EG101) is provided for linking the rocker arm (A101) and combined with the inner rotation part of electric machine (EM101), the outer rotation part of electric machine (EM102) is combined with the sleeve type rotation shaft (AS101), the sleeve type rotation shaft (AS101) rotated and sleeved on the first rotation shaft (S101) is served as an output/input end, the output wheel (W102) of the bevel gear set (EG101) is provided for driving the second rotation shaft (S 102) to be served as an output/input end, and the second rotation shaft (S102) is connected to an action side of the controllable brake device (BK102) while the other action side of the controllable brake device (BK102) is fixed in the housing (H100), which mainly consists of:
--Bevel gear set (EG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the first rotation shaft (S101), the second rotation shaft (S102), the rocker arm (A101), the sleeve type rotation shaft (AS101) and a bearing, as well as installed with a shell for being combined in the housing (H100);
The speed ratios of the input wheel (W101) and the output wheel (W102) of the mentioned bevel gear set (EG101) are the same, and the speed ratios between the above two and the wheel (W103) can be the same or different; or
the speed ratios of the input wheel (W101) and the output wheel (W102) of the mentioned bevel gear set (EG101) are different, the speed ratios between the wheel (W103) and the output wheel (W102) can be the same or different, and the speed ratios between the wheel (W103) and the input wheel (W101) can be the same or different;
--Rocker arm (A101): having one end provided for allowing the wheel (W103) to rotate and link, and the other end being combined with the inner rotation part of electric machine (EM101);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the second rotation shaft (S102), and the other action side is fixed in the housing (H100);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the first rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rocker arm (A101), and the outer rotation part of electric machine (EM102) is combined with the sleeve type rotation shaft (AS101);
-- The first rotation shaft (S101) combined with the input wheel (W101) of the bevel gear set (EG101) is served as an output/input end and provided for connecting to an action side of the controllable brake device (BK103) while the other action side of the controllable brake device (BK103) is fixed in the housing (H100); the output wheel (W102) of the bevel gear set (EG101) is combined with the second rotation shaft (S 102) for being served as an output/input end and provided for connecting to an action side of the controllable brake device (BK102) while the other action side of the controllable brake device (BK102) is fixed in the housing (H100), the rocker arm (A101) linked by the wheel (W103) is combined with the inner rotation part of electric machine (EM101), the outer rotation part of electric machine (EM102) is combined with the sleeve type rotation shaft (AS101), and the sleeve type rotation shaft (AS101) rotated and sleeved on the first rotation shaft (S101) is served as an output/input end;
The operations include one or more than one of following functions:
--When the controllable brake device (BK102) and the controllable brake device (BK103) are both controlled to be in the releasing state, and the dual-drive electric machine (EM100) is not operated as the electric machinery function, the transmission relations between the first rotation shaft (S101) and the second rotation shaft (S102) and the sleeve type rotation shaft (AS101) are in the releasing state allowing idle rotation;
-- When the controllable brake device (BK102) and the controllable brake device (BK103) are both controlled to be in the releasing state, and the dual-drive electric machine (EM100) is operated as the electric machinery function, the corresponding interactive operation of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the first rotation shaft (S101), the second rotation shaft (S102) and the sleeve type rotation shaft (AS101);
--When the controllable brake device (BK103) is controlled to be in the brake locking state and the controllable brake device (BK102) is controlled to be in the releasing state, and the dual-drive electric machine (EM100) is not operated as the electric machinery function, the transmission relation between the sleeve type rotation shaft (AS101) and the second rotation shaft (S102) is in a connecting relation allowing for transmission;
--When the controllable brake device (BK103) is controlled to be in the brake locking state and the controllable brake device (BK102) is controlled to be in the releasing state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the sleeve type rotation shaft (AS101) and the second rotation shaft (S102);
--When the controllable brake device (BK103) is controlled to be in the releasing state and the controllable brake device (BK102) is controlled to be in the brake locking state, and the dual-drive electric machine (EM100) is not operated as the electric machinery function, the transmission relation between the first rotation shaft (S101) and the sleeve type rotation shaft (AS101) is in a connecting relation allowing for transmission;
--When the controllable brake device (BK103) is controlled to be in the releasing state and the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the first rotation shaft (S101) and the sleeve type rotation shaft (AS101);
--When the controllable brake device (BK101) and the controllable brake device (BK102) are both controlled to be in the brake locking state, the relations between the first rotation shaft (S101), the second rotation shaft (S102) and the sleeve type rotation shaft (AS101) are all in the brake locking state;
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

7. A dual-drive electric machine having a controllable bevel gear set as claimed in claim 1, wherein the first rotation shaft (S101) combined with the input wheel (W101) of the bevel gear set (EG101) is served as an output/input end and provided for connecting to an action side of the controllable brake device (BK103) while the other action side of the controllable brake device (BK103) is fixed in the housing (H100), the wheel (W103) of the bevel gear set (EG101) is provided for linking the rocker arm (A101) and combined with the inner rotation part of electric machine (EM101), the outer rotation part of electric machine (EM102) is connected to the sleeve type rotation shaft (AS101), the sleeve type rotation shaft (AS 101) is rotated and sleeved on the first rotation shaft (S101) for being served as an output/input end, the sleeve type rotation shaft (AS101) is connected to an action side of the controllable brake device (BK101) while the other action side of the controllable brake device (BK101) is fixed in the housing (H100), the bevel gear set (EG101) also is fixed in the housing (H100), and the output wheel (W102) of the bevel gear set (EG101) is provided for driving the second rotation shaft (S102) to be served as an output/input end, which mainly consists of:
--Bevel gear set (EG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the first rotation shaft (S101), the second rotation shaft (S102), the rocker arm (A101), the sleeve type rotation shaft (AS 101) and a bearing, as well as installed with a shell for being combined in the housing (H100);
The speed ratios of the input wheel (W101) and the output wheel (W102) of the mentioned bevel gear set (EG101) are the same, and the speed ratios between the above two and the wheel (W103) can be the same or different; or
The speed ratios of the input wheel (W101) and the output wheel (W102) of the mentioned bevel gear set (EG101) are different, the speed ratios between the wheel (W103) and the output wheel (W102) can be the same or different, and the speed ratios between the wheel (W103) and the input wheel (W101) can be the same or different;
--Rocker arm (A101): having one end provided for allowing the wheel (W103) to rotate and link, and the other end being combined with the inner rotation part of electric machine (EM101);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS 101) or the rocker arm (A101), and the other action side is fixed in the housing (H100);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the first rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rocker arm (A101), and the outer rotation part of electric machine (EM102) is combined with the sleeve type rotation shaft (AS101);
--The first rotation shaft (S101) combined with the input wheel (W101) of the bevel gear set (EG101) is served as an output/input end and provided for connecting to an action side of the controllable brake device (BK103) while the other action side of the controllable brake device (BK103) is fixed in the housing (H100);
--The wheel (W103) of the bevel gear set (EG101) is provided for linking the rocker arm (A101) and combined with the inner rotation part of electric machine (EM101), the outer rotation part of electric machine (EM102) is connected to the sleeve type rotation shaft (AS101), the sleeve type rotation shaft (AS101) rotated and sleeved on the first rotation shaft (S101) is served as an output/input end, the sleeve type rotation shaft (AS101) is connected to an action side of the controllable brake device (BK101) while the other action side of the controllable brake device (BK101) is fixed in the housing (H100), and the output wheel (W102) of the bevel gear set (EG101) is provided for driving the second rotation shaft (S102) to be served as an output/input end;
The operations include one or more than one of following functions:
--When the controllable brake device (BK101) and the controllable brake device (BK103) are both controlled to be in the releasing state, and the dual-drive electric machine (EM100) is not operated as the electric machinery function, the transmission relations between the first rotation shaft (S101) and the second rotation shaft (S102) and the sleeve type rotation shaft (AS 101) are in the releasing state allowing idle rotation;
-- When the controllable brake device (BK101) and the controllable brake device (BK103) are both controlled to be in the releasing state, and the dual-drive electric machine (EM100) is operated as the electric machinery function, the corresponding interactive operation of the power generator function or the motor function are correspondingly performed between the inner rotation part of electric machine (EM101) and the outer rotation part of electric machine (EM 102), according to the damping of the external load or the rotation torque, the rotation speed and the rotation direction of the externally inputted rotary kinetic energy sustained by the first rotation shaft (S 101), the second rotation shaft (S102) and the sleeve type rotation shaft (AS101);
--When the controllable brake device (BK101) is controlled to be in the brake locking state and the controllable brake device (BK103) is controlled to be in the releasing state, and the dual-drive electric machine (EM100) is not operated as the electric machinery function, the transmission relation between the first rotation shaft (S101) and the second rotation shaft (S102) is in a connecting relation allowing for transmission;
--When the controllable brake device (BK101) is controlled to be in the brake locking state and the controllable brake device (BK103) is controlled to be in the releasing state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the first rotation shaft (S101) and second rotation shaft (S102);
--When the controllable brake device (BK101) is controlled to be in the releasing state and the controllable brake device (BK103) is controlled to be in the brake locking state, and the dual-drive electric machine (EM100) is not operated as the electric machinery function, the transmission relation between the second rotation shaft (S102) and the sleeve type rotation shaft (AS101) is in a connecting relation allowing for transmission;
--When the controllable brake device (BK101) is controlled to be in the releasing state and the controllable brake device (BK103) is controlled to be in the brake locking state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the second rotation shaft (S102) and the sleeve type rotation shaft (AS101);
--When the controllable brake device (BK101) and the controllable brake device (BK102) are both controlled to be in the brake locking state, the relations between the first rotation shaft (S101), the second rotation shaft (S102) and the sleeve type rotation shaft (AS 101) are all in the brake locking state;
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM 100) include receiving the driving of the externally inputted rotary kinetic energy or the driving of the load inertia kinetic energy for being operated as the power generator function, so as to output the electric energy to drive the external electric load or charge the external electric energy storing device.

8. A dual-drive electric machine having a controllable bevel gear set as claimed in claim 1, wherein the first rotation shaft (S101) combined with the input wheel (W101) of the bevel gear set (EG101) is served as an output/input end and provided for connecting to an action side of the controllable brake device (BK103) while the other action side of the controllable brake device (BK103) is fixed in the housing (H100), the wheel (W103) of the bevel gear set (EG101) is provided for linking the rocker arm (A101) and combined with the inner rotation part of electric machine (EM101), the outer rotation part of electric machine (EM102) is connected to the sleeve type rotation shaft (AS101), the sleeve type rotation shaft (AS 101) rotated and sleeved on the first rotation shaft (S101) is served as an output/input end, the sleeve type rotation shaft (AS101) is connected to an action side of the controllable brake device (BK101) while the other action side of the controllable brake device (BK101) is fixed in the housing (H100), the bevel gear set (EG101) is also fixed in the housing (H100), the output wheel (W102) of the bevel gear set (EG101) is provided for driving the second rotation shaft (S102) to be served as an output/input end, and the second rotation shaft (S 102) is connected to an action side of the controllable brake device (BK102) while the other action side of the controllable brake device (BK102) is fixed in the housing (H100), which mainly consists of:
--Bevel gear set (EG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the first rotation shaft (S101), the second rotation shaft (S102), the rocker arm (A101), the sleeve type rotation shaft (AS101) and a bearing, as well as installed with a shell for being combined in the housing (H100);
The speed ratios of the input wheel (W101) and the output wheel (W102) of the mentioned bevel gear set (EG101) are the same, and the speed ratios between the above two and the wheel (W103) can be the same or different; or
The speed ratios of the input wheel (W101) and the output wheel (W102) of the mentioned bevel gear set (EG101) are different, the speed ratios between the wheel (W103) and the output wheel (W102) can be the same or different, and the speed ratios between the wheel (W103) and the input wheel (W101) can be the same or different;
--Rocker arm (A101): having one end provided for allowing the wheel (W103) to rotate and link, and the other end being combined with the inner rotation part of electric machine (EM101);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS 101) or the rocker arm (A101), and the other action side is fixed in the housing (H100);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the second rotation shaft (S102), and the other action side is fixed in the housing (H100);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the first rotation shaft (S 101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rocker arm (A101), and the outer rotation part of electric machine (EM102) is combined with the sleeve type rotation shaft (AS101);
--The first rotation shaft (S101) combined with the input wheel (W101) of the bevel gear set (EG101) is served as an output/input end and provided for connecting to one action side of the controllable brake device (BK103) while an action side of the controllable brake device (BK103) is fixed in the housing (H100);
--The wheel (W103) of the bevel gear set (EG101) is provided for linking the rocker arm (A101) and combined with the inner rotation part of electric machine (EM101), the outer rotation part of electric machine (EM102) is connected to the sleeve type rotation shaft (AS101), the sleeve type rotation shaft (AS101) rotated and sleeved on the first rotation shaft (S101) is served as an output/input end, the sleeve type rotation shaft (AS 101) is connected to an action side of the controllable brake device (BK101) while the other action side of the controllable brake device (BK101) is fixed in the housing (H100), the output wheel (W102) of the bevel gear set (EG101) is provided for driving the second rotation shaft (S102) to be served as an output/input end, and the second rotation shaft (S102) is connected to an action side of the controllable brake device (BK102) while the other action side of the controllable brake device (BK102) is fixed in the housing (H100);
The operations include one or more than one of following functions:
--When the controllable brake device (BK101) and the controllable brake device (BK102) and the controllable brake device (BK103) are all controlled to be in the releasing state, and the dual-drive electric machine (EM100) is not operated as the electric machinery function, the transmission relations between the first rotation shaft (S101) and the second rotation shaft (S102) and the sleeve type rotation shaft (AS 101) are in the releasing state allowing idle rotation;
-- When the controllable brake device (BK101) and the controllable brake device (BK102) and the controllable brake device (BK103) are all controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the first rotation shaft (S101), the second rotation shaft (S102) and the sleeve type rotation shaft (AS101);
--When the controllable brake device (BK101) is controlled to be in the brake locking state, the controllable brake device (BK102) and the controllable brake device (BK103) are controlled to be in the releasing state, and the dual-drive electric machine (EM100) is not operated as the electric machinery function, the transmission relation between the first rotation shaft (S101) and the second rotation shaft (S102) is in a connecting relation allowing for transmission;
--When the controllable brake device (BK101) is controlled to be in the brake locking state, the controllable brake device (BK102) and the controllable brake device (BK103) are controlled to be in the releasing state, and the dual-drive electric machine (EM100) is operated as the electric machinery function, between the inner rotation part of the electric machine (EM101) and the outer rotation part of the electric machine (EM 102) is operated as the power generator function or the motor function, for performing corresponding interactive operations with the damping of external load or the externally inputted rotary kinetic energy sustained by the first rotation shaft (S101) and second rotation shaft (S102);
--When the controllable brake device (BK102) is controlled to be in the brake locking state, the controllable brake device (BK101) and the controllable brake device (BK103) are controlled to be in the releasing state, and the dual-drive electric machine (EM100) is not operated as the electric machinery function, the transmission relation between the first rotation shaft (S101) and the sleeve type rotation shaft (AS101) is in a connecting relation allowing for transmission;
--When the controllable brake device (BK102) is controlled to be in the brake locking state, the controllable brake device (BK101) and the controllable brake device (BK103) are controlled to be in the releasing state, and the dual-drive electric machine (EM100) is operated as the electric machinery function, between the inner rotation part of the electric machine (EM101) and the outer rotation part of the electric machine (EM 102) is operated as the power generator function or the motor function, for performing corresponding interactive operations with the damping of external load or the externally inputted rotary kinetic energy sustained by the first rotation shaft (S101) and the sleeve type rotation shaft (AS101);
--When the controllable brake device (BK103) is controlled to be in the brake locking state, the controllable brake device (BK101) and the controllable brake device (BK102) are controlled to be in the releasing state, and the dual-drive electric machine (EM100) is not operated as the electric machinery function, the transmission relation between the second rotation shaft (S102) and the sleeve type rotation shaft (AS101) is in a connecting relation allowing for transmission;
--When the controllable brake device (BK103) is controlled to be in the brake locking state, the controllable brake device (BK101) and the controllable brake device (BK102) are controlled to be in the releasing state, and the dual-drive electric machine (EM100) is operated as the electric machinery function, between the inner rotation part of the electric machine (EM101) and the outer rotation part of the electric machine (EM 102) is operated as the power generator function or the motor function, for performing corresponding interactive operations with the damping of external load or the externally inputted rotary kinetic energy sustained by the second rotation shaft (S102) and the sleeve type rotation shaft (AS101);
--When two or all of the controllable brake device (BK101) and the controllable brake device (BK102) and the controllable brake device (BK103) are controlled to be in the brake locking state, the relations between the first rotation shaft (S101), the second rotation shaft (S102) and the sleeve type rotation shaft (AS101) are all in the brake locking state;
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM 100) include receiving the driving of the externally inputted rotary kinetic energy or the driving of the load inertia kinetic energy for being operated as the power generator function, so as to output the electric energy to drive the external electric load or charge the external electric energy storing device.

## Patentansprüche

1. Elektrische Maschine mit Doppelantrieb (EM 100) in Kombination mit einem steuerbaren Kegelradgetriebesatz (EG101), wobei:
ein äußeres Rotationsteil der elektrischen Maschine (EM 102) mit einer Hülsentyprotationswelle (AS101) verbunden ist, wobei sich die Hülsentyprotationswelle (AS101) dreht und auf einer erste Rotationswelle (S101), die als ein Ausgangs-/Eingangsende dient, hülsenartig angeordnet ist, wobei die erste Rotationswelle (S101) mit einem Antriebsrad (W101) verbunden ist ;
ein inneres Rotationsteil der elektrischen Maschine (EM101) der elektrischen Maschine mit Doppelantrieb (EM 100) mit einem Kipphebel (A101) kombiniert ist, der mit einem Rad (W103) des Kegelradgetriebesatzes (EG101) gekoppelt ist, das in dem inneren Rotationsteil der elektrischen Maschine (EM101) installiert ist ;
eine zweite Rotationswelle (S102), die mit einem Abtriebsrad (W102) verbunden ist, als ein Ausgangs-/Eingangsende bedient wird ;
die erste Rotationswelle (S101) am Ausgangs-/Eingangsende, die zweite Rotationswelle (S102) am Ausgang-/Eingangsende und die Hülsentyprotationswelle (AS 101) drei Ausgang-/Eingangsenden bilden ;
wobei mindestens eines der drei Ausgangs-/Eingangsenden mit einer Aktionsseite einer steuerbaren Bremsvorrichtung verbunden ist und die andere Aktionsseite der steuerbaren Bremsvorrichtung mit einem Gehäuse (HS100) verbunden ist; und
wobei einer der drei Ausgangs-/Eingangsenden, das mit der elektrischen Maschine mit Doppelantrieb (EM 100) nicht verbunden ist, für einen externen Ausgang bedient wird ;
durch Steuern der steuerbaren Bremsvorrichtung, um eine Bremsverriegelung oder einen Lösevorgang durchzuführen, können die Vorgänge der Übertragungsfunktion der Verbindungsübertragung oder des Lösens zwischen der ersten Rotationswelle (S101) am Ausgang-/Eingangsende, der zweiten Rotationswelle (S102) am Ausgang-/Eingangsende und der Hülsentyprotationswelle (AS 101) am Ausgang-/Eingangsende des Kegelradgetriebesatzes (EG101) gesteuert werden, und die interaktiven Vorgänge zwischen der elektrischen Maschine mit Doppelantrieb (EM 100) und den Ausgang-/Eingangsenden können auch gesteuert werden.

2. Elektrische Maschine mit Doppelantrieb mit einem steuerbaren Kegelradgetriebesatz nach Anspruch 1, wobei die erste Rotationswelle (S101) mit dem Antriebsrad (W101) des Kegelradgetriebesatzes (EG101) kombiniert ist, um als ein Ausgang-/Eingangsende bedient zu werden, wobei der durch das Rad (W103) gekoppelte Kipphebel (A101) mit dem inneren Rotationsteil der elektrischen Maschine (EM 101) kombiniert ist, wobei der äußere Rotationsteil der elektrischen Maschine (EM 102) mit der Hülsentyprotationswelle (AS 101) kombiniert ist, wobei die Hülsentyprotationswelle (AS 101), die sich dreht und auf der ersten Rotationswelle (S101) hülsenartig angeordnet ist, als ein Ausgang-/Eingangsende bedient wird und zum Verbinden mit einer Aktionsseite der steuerbaren Bremsvorrichtung (BK101) bereitgestellt ist, während die andere Aktionsseite der steuerbaren Bremsvorrichtung (BK101) in dem Gehäuse H100) befestigt ist, wobei das Kegelradgetriebesatz (EG101) auch im Gehäuse (H100) befestigt ist, und wobei das Abtriebsrad (W102) des Kegelradgetriebesatzes (EG101) zum Antreiben der Rotationswelle (S102) bereitgestellt ist, um als ein Ausgang-/Eingangsende bedient zu werden, das hauptsächlich aus Folgendem besteht;
-- Kegelradgetriebesatz (EG101): der durch ein Sonnenrad (W101) und ein äußeres Ringrad (W102) und mindestens ein Planetenrad (W103) gebildet ist, und einschließlich durch Zahnräder, die miteinander in Eingriff stehen, oder durch Reibräder, gegenseitig reibschlüssige Übertragungen ausführen, um eine Planetengetriebesatzfunktion zu bilden, und durch die erste Rotationswelle (S101), die zweite Rotationswelle (S102), den Kipphebel (A101), die Hülsentyprotationswelle (AS 101) und ein Lager aufgebaut ist, sowie mit einer Schale zum Kombinieren in dem Gehäuse (HS100) installiert ist ;
Die Drehzahlverhältnisse des Antriebsrads (W101) und des Abtriebsrads (W102) des erwähnten Kegelradgetriebesatzes (EG101) sind gleich, und die Drehzahlverhältnisse zwischen den beiden oben genannten Rädern und dem Rad (W103) können gleich oder verschieden sein ; oder
Die Drehzahlverhältnisse des Antriebsrads (W101) und des Abtriebsrads (W102) des erwähnten Kegelradgetriebesatzes (EG101) sind verschieden, die Drehzahlverhältnisse zwischen dem Rad (W103) und dem Abtriebsrads (W102) können gleich oder verschieden sein, und die Drehzahlverhältnisse zwischen dem Rad (W103) und dem Antriebsrads (W101) können gleich oder verschieden sein ;
-- Kipphebel (A101): mit einem Ende, das bereitgestellt ist, um das Rad (W103) zu drehen und zu koppeln, und dem anderen Ende, das mit dem inneren Rotationsteil der elektrischen Maschine (EM 101) kombiniert wird ;
-- Steuerbare Bremsvorrichtung (BK101): die durch eine Bremsvorrichtung gebildet ist, die durch eine manuelle Kraft oder mechanische Kraft oder hydraulische Kraft oder pneumatische Kraft oder elektromagnetische Kraft gesteuert wird und zwei steuerbare Aktionsseiten für die Vorgänge eines Bremsverriegelungszustands für den Eingriffs- oder Lösezustand zum Trennen aufweist, wobei eine der Aktionsseiten mit der Hülsentyprotationswelle (AS 101) oder dem Kipphebel (A101) verbunden ist und die andere Aktionsseite in dem Gehäuse (HS100) befestigt ist ;
-- Elektrische Maschine mit Doppelantrieb (EM 100): die durch eine DC oder AC, eine bürstenbehaftete oder eine bürstenlose, synchrone oder nicht synchrone elektrische Maschine mit Doppelantrieb gebildet ist, die einen inneren Rotationsteil der elektrischen Maschine (EM 101) und einen äußeren Rotationsteil der elektrischen Maschine (EM 102) aufweist und mit Endabdeckungen, Lagern und zugehörigen elektrischen Leitungsvorrichtungen, die zum Einleiten elektrischer Energie verwendet werden, installiert ist, wobei der innere Rotationsteil der elektrischen Maschine (EM 101) und der äußere Rotationsteil der elektrischen Maschine (EM 102) koaxial gedreht werden, wobei der innere Rotationsteil der elektrischen Maschine (EM 101) mit dem Kipphebel (A101) kombiniert ist, und der äußere Rotationsteil der elektrischen Maschine (EM 102) mit der Hülsentyprotationswelle (AS101) kombiniert ist ;
-- Die erste Rotationswelle (S101), die mit dem Antriebsrad (W101) des Kegelradgetriebesatzes (EG101) kombiniert ist, wird als ein Ausgang-/Eingangsende bedient, wobei der durch das Rad (W103) gekoppelte Kipphebel (A101) mit dem inneren Rotationsteil der elektrischen Maschine (EM101) kombiniert ist, wobei der äußere Rotationsteil der elektrischen Maschine (EM 102) mit der Hülsentyprotationswelle (AS101) kombiniert ist, wobei die Hülsentyprotationswelle (AS101), die sich dreht und auf der ersten Rotationswelle (S101) hülsenartig angeordnet ist, als ein Ausgang-/Eingangsende bedient wird, wobei die Hülsentyprotationswelle (AS 101) mit einer Aktionsseite der steuerbaren Bremsvorrichtung (BK101) verbunden ist, während die andere Aktionsseite der steuerbaren Bremsvorrichtung (BK101) in dem Gehäuse (H100) befestigt ist, wobei das Abtriebsrad (W102) des Kegelradgetriebesatzes (EG101) zum Antreiben der Rotationswelle (S102) bereitgestellt ist, um als ein Ausgang-/Eingangsende bedient zu werden, und wobei die erste Rotationswelle (S101), die mit dem Antriebsrad (W101) kombiniert ist, auch als ein Ausgang-/Eingangsende bedient wird ;
Die Vorgänge schließen eine oder mehrere der folgenden Funktionen ein:
-- Wenn die steuerbare Bremsvorrichtung (BK101) so gesteuert wird, dass sie sich in dem Lösezustand befindet, und die elektrische Maschine mit Doppelantrieb (EM 100) nicht als elektrische Maschinenfunktion betrieben wird, sind die Übertragungsbeziehungen zwischen der ersten Rotationswelle (S101) und der zweiten Rotationswelle (S102) und der Hülsentyprotationswelle (AS 101) in dem Lösezustand, der eine Leerlaufrotation ermöglicht;
-- Wenn die steuerbare Bremsvorrichtung (BK101) so gesteuert wird, dass sie sich in dem Lösezustand befindet, und die elektrische Maschine mit Doppelantrieb (EM 100) als elektrische Maschinenfunktion betrieben wird, werden die entsprechenden interaktiven Vorgänge der Leistungsgeneratorfunktion oder der Motorfunktion zwischen dem inneren Rotationsteil der elektrischen Maschine (EM 101) und dem äußeren Rotationsteil der elektrischen Maschine (EM 102) entsprechend durchgeführt, gemäß der Dämpfung der externen Last oder des Rotationsmoments, der Drehzahl und der Drehrichtung der extern eingegebenen rotationskinetischen Energie, die durch die erste Rotationswelle (S101), die zweite Rotationswelle (S102) und die Hülsentyprotationswelle (AS101) erhalten werden ;
-- Wenn die steuerbare Bremsvorrichtung (BK101) so gesteuert wird, dass sie sich in dem Bremsverriegelungszustand befindet, und die elektrische Maschine mit Doppelantrieb (EM 100) nicht als elektrische Maschinenfunktion betrieben wird, ist die Übertragungsbeziehung zwischen der ersten Rotationswelle (S101) und der zweiten Rotationswelle (S102) in einer Verbindungsbeziehung, welche die Übertragung ermöglicht;
-- Wenn die steuerbare Bremsvorrichtung (BK101) so gesteuert wird, dass sie sich in dem Bremsverriegelungszustand befindet, und die elektrische Maschine mit Doppelantrieb (EM 100) als elektrische Maschinenfunktion betrieben wird, wird zwischen dem inneren Rotationsteil der elektrischen Maschine (EM101) und dem äußeren Rotationsteil der elektrischen Maschine (EM 102) als Leistungsgeneratorfunktion oder der Motorfunktion zum Durchführen von interaktiven Vorgängen gemäß der Dämpfung der externen Last oder der extern eingegebenen rotationskinetischen Energie, die durch die erste Rotationswelle (S101) und die zweite Rotationswelle (S102) erhalten werden, betrieben ;
Die interaktiven Vorgänge der entsprechenden Funktion, die durch die erwähnte elektrische Maschine mit Doppelantrieb (EM 100) durchgeführt werden, schließen das Empfangen der Antriebssteuerung von extern eingegebener elektrischer Energie ein, um als die Motorfunktion zum individuellen Antreiben der Last betrieben zu werden oder mit der extern eingegebenen rotationskinetischen Energie zum gemeinsamen Antreiben der Last zu arbeiten ;
Die interaktiven Vorgänge einer entsprechenden Funktion, die von der erwähnten elektrischen Maschine mit Doppelantrieb (EM 100) durchgeführt werden, schließen das Empfangen des Antreibens der extern eingegebenen rotationskinetischen Energie oder des Antreibens der kinetischen Energie der Lastträgheit, um als Leistungsgeneratorfunktion betrieben zu werden, ein, um die elektrische Energie auszugeben, um die externe elektrische Last anzutreiben oder die externe elektrische Energiespeichervorrichtung zu laden.

3. Elektrische Maschine mit Doppelantrieb mit einem steuerbaren Kegelradgetriebesatz nach Anspruch 1, wobei die erste Rotationswelle (S101), die mit dem Antriebsrad (W101) des Kegelradgetriebesatzes (EG101) kombiniert ist, als ein Ausgang-/Eingangsende bedient wird, wobei der durch das Rad (W103) gekoppelte Kipphebel (A101) mit dem inneren Rotationsteil der elektrischen Maschine (EM 101) kombiniert ist, wobei der äußere Rotationsteil der elektrischen Maschine (EM 102) mit der Hülsentyprotationswelle (AS 101) kombiniert ist, wobei die Hülsentyprotationswelle (AS 101), die sich dreht und auf der ersten Rotationswelle (S101) hülsenartig angeordnet ist, als ein Ausgang-/Eingangsende bedient wird, wobei das Abtriebsrad (W102) des Kegelradgetriebesatzes (EG101) zum Antreiben der Rotationswelle (S102) bereitgestellt ist, die als ein Ausgang-/Eingangsende bedient wird, wobei die Rotationswelle (S102) mit einer Aktionsseite der steuerbaren Bremsvorrichtung (BK102) verbunden ist, während die andere Aktionsseite der steuerbaren Bremsvorrichtung (BK102) in dem Gehäuse (HS100) befestigt ist, das hauptsächlich aus Folgendem besteht:
-- Kegelradgetriebesatz (EG101): der durch ein Sonnenrad (W101) und ein äußeres Ringrad (W102) und mindestens ein Planetenrad (W103) gebildet ist, und einschließlich durch Zahnräder, die miteinander in Eingriff stehen, oder durch Reibräder, gegenseitig reibschlüssige Übertragungen ausführen, um eine Planetengetriebesatzfunktion zu bilden, und durch die erste Rotationswelle (S101), die zweite Rotationswelle (S102), den Kipphebel (A101), die Hülsentyprotationswelle (AS 101) und ein Lager aufgebaut ist, sowie mit einer Schale zum Kombinieren in dem Gehäuse (HS100) installiert ist ;
Die Drehzahlverhältnisse des Antriebsrads (W101) und des Abtriebsrads (W102) des erwähnten Kegelradgetriebesatzes (EG101) sind gleich, und die Drehzahlverhältnisse zwischen den beiden oben genannten Rädern und dem Rad (W103) können gleich oder verschieden sein ; oder
Die Drehzahlverhältnisse des Antriebsrads (W101) und des Abtriebsrads (W102) des erwähnten Kegelradgetriebesatzes (EG 101) sind verschieden, die Drehzahlverhältnisse zwischen dem Rad (W103) und dem Abtriebsrads (W102) können gleich oder verschieden sein, und die Drehzahlverhältnisse zwischen dem Rad (W103) und dem Antriebsrads (W101) können gleich oder verschieden sein ;
-- Kipphebel (A101): mit einem Ende, das bereitgestellt ist, um das Rad (W103) zu drehen und zu koppeln, und dem anderen Ende, das mit dem inneren Rotationsteil der elektrischen Maschine (EM 101) kombiniert wird ;
-- Steuerbare Bremsvorrichtung (BK102): die durch eine Bremsvorrichtung gebildet ist, die durch eine manuelle Kraft oder mechanische Kraft oder hydraulische Kraft oder pneumatische Kraft oder elektromagnetische Kraft gesteuert wird und zwei steuerbare Aktionsseiten für die Vorgänge eines Bremsverriegelungszustands für den Eingriffs- oder Lösezustand zum Trennen aufweist, wobei eine der Aktionsseiten mit der Rotationswelle (S102) verbunden ist und die andere Aktionsseite in dem Gehäuse (HS100) befestigt ist ;
-- Elektrische Maschine mit Doppelantrieb (EM 100): die durch eine DC oder AC, eine bürstenbehaftete oder eine bürstenlose, synchrone oder nicht synchrone elektrische Maschine mit Doppelantrieb gebildet ist, die einen inneren Rotationsteil der elektrischen Maschine (EM 101) und einen äußeren Rotationsteil der elektrischen Maschine (EM 102) aufweist und mit Endabdeckungen, Lagern und zugehörigen elektrischen Leitungsvorrichtungen, die zum Einleiten elektrischer Energie verwendet werden, installiert ist, wobei der innere Rotationsteil der elektrischen Maschine (EM 101) und der äußere Rotationsteil der elektrischen Maschine (EM 102) koaxial gedreht werden, wobei der innere Rotationsteil der elektrischen Maschine (EM 101) mit dem Kipphebel (A101) kombiniert ist, und der äußere Rotationsteil der elektrischen Maschine (EM 102) mit der Hülsentyprotationswelle (AS101) kombiniert ist ;
-- Die erste Rotationswelle (S101), die mit dem Antriebsrad (W101) des Kegelradgetriebesatzes (EG101) kombiniert ist, wird als ein Ausgang-/Eingangsende bedient, wobei der durch das Rad (W103) gekoppelte Kipphebel (A101) mit dem inneren Rotationsteil der elektrischen Maschine (EM101) kombiniert ist, wobei der äußere Rotationsteil der elektrischen Maschine (EM 102) mit der Hülsentyprotationswelle (AS 101) kombiniert ist, und die Hülsentyprotationswelle (AS 101), die sich dreht und auf der ersten Rotationswelle (S101) hülsenartig angeordnet ist, als ein Ausgang-/Eingangsende bedient wird ;
-- Das Abtriebsrad (W102) des Kegelradgetriebesatzes (EG 101) ist zum Antreiben der zweiten Rotationswelle (S102) bereitgestellt, die als ein Ausgang-/Eingangsende bedient werden soll, und die zweite Rotationswelle (S102) ist mit einer Aktionsseite der steuerbaren Bremsvorrichtung (BK102) verbunden, während die andere Aktionsseite der steuerbaren Bremsvorrichtung (BK102) in dem Gehäuse (H100) befestigt ist ;
Die Vorgänge schließen eine oder mehrere der folgenden Funktionen ein:
-- Wenn die steuerbare Bremsvorrichtung (BK102) so gesteuert wird, dass sie sich in dem Lösezustand befindet, und die elektrische Maschine mit Doppelantrieb (EM 100) nicht als elektrische Maschinenfunktion betrieben wird, sind die Übertragungsbeziehungen zwischen der ersten Rotationswelle (S101) und der Hülsentyprotationswelle (AS101) und der zweiten Rotationswelle (S102) in dem Lösezustand, der eine Leerlaufrotation ermöglicht;
-- Wenn die steuerbare Bremsvorrichtung (BK102) so gesteuert wird, dass sie sich in dem Lösezustand befindet, und die elektrische Maschine mit Doppelantrieb (EM 100) als elektrische Maschinenfunktion betrieben wird, werden die entsprechenden interaktiven Vorgänge der Leistungsgeneratorfunktion oder der Motorfunktion zwischen dem inneren Rotationsteil der elektrischen Maschine (EM 101) und dem äußeren Rotationsteil der elektrischen Maschine (EM 102) entsprechend durchgeführt, gemäß der Dämpfung der externen Last oder des Rotationsmoments, der Drehzahl und der Drehrichtung der extern eingegebenen rotationskinetischen Energie, die durch die erste Rotationswelle (S101), die zweite Rotationswelle (S102) und die Hülsentyprotationswelle (AS101) erhalten werden ;
-- Wenn die steuerbare Bremsvorrichtung (BK102) so gesteuert wird, dass sie sich in dem Bremsverriegelungszustand befindet, und die elektrische Maschine mit Doppelantrieb (EM 100) nicht als elektrische Maschinenfunktion betrieben wird, ist die Übertragungsbeziehung zwischen der ersten Rotationswelle (S101) und der Hülsentyprotationswelle (AS 101) in einer Verbindungsbeziehung, welche die Übertragung ermöglicht;
-- Wenn die steuerbare Bremsvorrichtung (BK102) so gesteuert wird, dass sie sich in dem Bremsverriegelungszustand befindet, und die elektrische Maschine mit Doppelantrieb (EM 100) als elektrische Maschinenfunktion betrieben wird, wird zwischen dem inneren Rotationsteil der elektrischen Maschine (EM101) und dem äußeren Rotationsteil der elektrischen Maschine (EM 102) als Leistungsgeneratorfunktion oder der Motorfunktion zum Durchführen von interaktiven Vorgängen gemäß der Dämpfung der externen Last oder der extern eingegebenen rotationskinetischen Energie, die durch die erste Rotationswelle (S101) und die Hülsentyprotationswelle (AS 101) erhalten werden, betrieben ;
Die interaktiven Vorgänge der entsprechenden Funktion, die durch die erwähnte elektrische Maschine mit Doppelantrieb (EM 100) durchgeführt werden, schließen das Empfangen der Antriebssteuerung von extern eingegebener elektrischer Energie ein, um als die Motorfunktion zum individuellen Antreiben der Last betrieben zu werden oder mit der extern eingegebenen rotationskinetischen Energie zum gemeinsamen Antreiben der Last zu arbeiten ;
Die interaktiven Vorgänge einer entsprechenden Funktion, die von der erwähnten elektrischen Maschine mit Doppelantrieb (EM 100) durchgeführt werden, schließen das Empfangen des Antreibens der extern eingegebenen rotationskinetischen Energie oder des Antreibens der kinetischen Energie der Lastträgheit, um als Leistungsgeneratorfunktion betrieben zu werden, ein, um die elektrische Energie auszugeben, um die externe elektrische Last anzutreiben oder die externe elektrische Energiespeichervorrichtung zu laden.

4. Elektrische Maschine mit Doppelantrieb mit einem steuerbaren Kegelradgetriebesatz nach Anspruch 1, wobei die erste Rotationswelle (S101) mit dem Antriebsrad (W101) des Kegelradgetriebesatzes (EG101) kombiniert ist und zum Verbinden mit einer Aktionsseite der steuerbaren Bremsvorrichtung (BK103) bereitgestellt ist, während die andere Aktionsseite der steuerbaren Bremsvorrichtung (BK103) in dem Gehäuse (H100) befestigt ist, wobei das Kegelradgetriebesatz (EG101) auch in dem Gehäuse (H100) befestigt ist, wobei das Rad (W103) des Kegelradgetriebesatzes (EG101) zum Koppeln des Kipphebels (A101) bereitgestellt ist und mit dem inneren Rotationsteil der elektrischen Maschine (EM101) kombiniert ist, wobei der äußere Rotationsteil der elektrischen Maschine (EM102) mit der Hülsentyprotationswelle (AS 101) verbunden ist, wobei die Hülsentyprotationswelle (AS 101), die sich dreht und auf der ersten Rotationswelle (S101) hülsenartig angeordnet ist, als ein Ausgang-/Eingangsende bedient wird, wobei das Abtriebsrad (W102) des Kegelradgetriebesatzes (EG 101) zum Antreiben der Rotationswelle (S102) bereitgestellt ist, um als ein Ausgang-/Eingangsende bedient zu werden, das hauptsächlich aus Folgendem besteht:
-- Kegelradgetriebesatz (EG101): der durch ein Sonnenrad (W101) und ein äußeres Ringrad (W102) und mindestens ein Planetenrad (W103) gebildet ist, und einschließlich durch Zahnräder, die miteinander in Eingriff stehen, oder durch Reibräder, gegenseitig reibschlüssige Übertragungen ausführen, um eine Planetengetriebesatzfunktion zu bilden, und durch die erste Rotationswelle (S101), die zweite Rotationswelle (S102), den Kipphebel (A101), die Hülsentyprotationswelle (AS 101) und ein Lager aufgebaut ist, sowie mit einer Schale zum Kombinieren in dem Gehäuse (HS100) installiert ist ;
Die Drehzahlverhältnisse des Antriebsrads (W101) und des Abtriebsrads (W102) des erwähnten Kegelradgetriebesatzes (EG101) sind gleich, und die Drehzahlverhältnisse zwischen den beiden oben genannten Rädern und dem Rad (W103) können gleich oder verschieden sein ; oder
Die Drehzahlverhältnisse des Antriebsrads (W101) und des Abtriebsrads (W102) des erwähnten Kegelradgetriebesatzes (EG101) sind verschieden, die Drehzahlverhältnisse zwischen dem Rad (W103) und dem Abtriebsrads (W102) können gleich oder verschieden sein, und die Drehzahlverhältnisse zwischen dem Rad (W103) und dem Antriebsrads (W101) können gleich oder verschieden sein ;
-- Kipphebel (A101): mit einem Ende, das bereitgestellt ist, um das Rad (W103) zu drehen und zu koppeln, und dem anderen Ende, das mit dem inneren Rotationsteil der elektrischen Maschine (EM 101) kombiniert wird ;
-- Steuerbare Bremsvorrichtung (BK103): die durch eine Bremsvorrichtung gebildet ist, die durch eine manuelle Kraft oder mechanische Kraft oder hydraulische Kraft oder pneumatische Kraft oder elektromagnetische Kraft gesteuert wird und zwei steuerbare Aktionsseiten für die Vorgänge eines Bremsverriegelungszustands für den Eingriffs- oder Lösezustand zum Trennen aufweist, wobei eine der Aktionsseiten mit der ersten Rotationswelle (S101) verbunden ist und die andere Aktionsseite in dem Gehäuse (HS100) befestigt ist;
-- Elektrische Maschine mit Doppelantrieb (EM 100): die durch eine DC oder AC, eine bürstenbehaftete oder eine bürstenlose, synchrone oder nicht synchrone elektrische Maschine mit Doppelantrieb gebildet ist, die einen inneren Rotationsteil der elektrischen Maschine (EM 101) und einen äußeren Rotationsteil der elektrischen Maschine (EM 102) aufweist und mit Endabdeckungen, Lagern und zugehörigen elektrischen Leitungsvorrichtungen, die zum Einleiten elektrischer Energie verwendet werden, installiert ist, wobei der innere Rotationsteil der elektrischen Maschine (EM 101) und der äußere Rotationsteil der elektrischen Maschine (EM 102) koaxial gedreht werden, wobei der innere Rotationsteil der elektrischen Maschine (EM 101) mit dem Kipphebel (A101) kombiniert ist, und der äußere Rotationsteil der elektrischen Maschine (EM 102) mit der Hülsentyprotationswelle (AS101) kombiniert ist ;
-- Die erste Rotationswelle (S101), die mit dem Antriebsrad (W101) des Kegelradgetriebesatzes (EG101) kombiniert ist, wird als ein Ausgang-/Eingangsende bedient und zum Verbinden mit einer Aktionsseite der steuerbaren Bremsvorrichtung (BK103) bereitgestellt, während die andere Aktionsseite der steuerbaren Bremsvorrichtung (BK103) in dem Gehäuse (HS100) befestigt ist;
-- Das Rad (W103) des Kegelradgetriebesatzes (EG101) ist zum Koppeln des Kipphebels (A101) bereitgestellt und ist mit dem inneren Rotationsteil der elektrischen Maschine (EM101) kombiniert, wobei der äußere Rotationsteil der elektrischen Maschine (EM102) mit der Hülsentyprotationswelle (AS 101) verbunden ist, wobei die Hülsentyprotationswelle (AS 101), die sich dreht und auf der ersten Rotationswelle (S101) hülsenartig angeordnet ist, als ein Ausgang-/Eingangsende bedient wird, wobei das Abtriebsrad (W102) des Kegelradgetriebesatzes (EG101) zum Antreiben der zweiten Rotationswelle (S102) bereitgestellt ist, um als ein Ausgang-/Eingangsende bedient zu werden, und wobei die Rotationswelle (S101), die mit dem Antriebsrad (W101) kombiniert ist, auch als ein Ausgang-/Eingangsende bedient wird ;
Die Vorgänge schließen eine oder mehrere der folgenden Funktionen ein:
-- Wenn die steuerbare Bremsvorrichtung (BK103) so gesteuert wird, dass sie sich in dem Lösezustand befindet, und die elektrische Maschine mit Doppelantrieb (EM 100) nicht als elektrische Maschinenfunktion betrieben wird, sind die Übertragungsbeziehung zwischen der ersten Rotationswelle (S101) und der Hülsentyprotationswelle (AS 101) und der zweiten Rotationswelle (S102) in dem Lösezustand, der eine Leerlaufrotation ermöglicht;
-- Wenn die steuerbare Bremsvorrichtung (BK103) so gesteuert wird, dass sie sich in dem Lösezustand befindet, und die elektrische Maschine mit Doppelantrieb (EM 100) als elektrische Maschinenfunktion betrieben wird, werden die entsprechenden interaktiven Vorgänge der Leistungsgeneratorfunktion oder der Motorfunktion zwischen dem inneren Rotationsteil der elektrischen Maschine (EM 101) und dem äußeren Rotationsteil der elektrischen Maschine (EM 102) entsprechend durchgeführt, gemäß der Dämpfung der externen Last oder des Rotationsmoments, der Drehzahl und der Drehrichtung der extern eingegebenen rotationskinetischen Energie, die durch die erste Rotationswelle (S101), die zweite Rotationswelle (S102) und die Hülsentyprotationswelle (AS101) erhalten werden ;
-- Wenn die steuerbare Bremsvorrichtung (BK103) so gesteuert wird, dass sie sich in dem Bremsverriegelungszustand befindet, und die elektrische Maschine mit Doppelantrieb (EM 100) nicht als elektrische Maschinenfunktion betrieben wird, ist die Übertragungsbeziehung zwischen der Hülsentyprotationswelle (AS 101) und der zweiten Rotationswelle (S102) in einer Verbindungsbeziehung, welche die Übertragung ermöglicht;
-- Wenn die steuerbare Bremsvorrichtung (BK103) so gesteuert wird, dass sie sich in dem Bremsverriegelungszustand befindet, und die elektrische Maschine mit Doppelantrieb (EM 100) als elektrische Maschinenfunktion betrieben wird, wird zwischen dem inneren Rotationsteil der elektrischen Maschine (EM 101) und dem äußeren Rotationsteil der elektrischen Maschine (EM 102) als Leistungsgeneratorfunktion oder der Motorfunktion zum Durchführen von interaktiven Vorgängen gemäß der Dämpfung der externen Last oder der extern eingegebenen rotationskinetischen Energie, die durch die Hülsentyprotationswelle (AS101) und die zweite Rotationswelle (S102) erhalten werden, betrieben ;
Die interaktiven Vorgänge der entsprechenden Funktion, die durch die erwähnte elektrische Maschine mit Doppelantrieb (EM 100) durchgeführt werden, schließen das Empfangen der Antriebssteuerung von extern eingegebener elektrischer Energie ein, um als die Motorfunktion zum individuellen Antreiben der Last betrieben zu werden oder mit der extern eingegebenen rotationskinetischen Energie zum gemeinsamen Antreiben der Last zu arbeiten ;
Die interaktiven Vorgänge einer entsprechenden Funktion, die von der erwähnten elektrischen Maschine mit Doppelantrieb (EM 100) durchgeführt werden, schließen das Empfangen des Antreibens der extern eingegebenen rotationskinetischen Energie oder des Antreibens der kinetischen Energie der Lastträgheit, um als Leistungsgeneratorfunktion betrieben zu werden, ein, um die elektrische Energie auszugeben, um die externe elektrische Last anzutreiben oder die externe elektrische Energiespeichervorrichtung zu laden.

5. Elektrische Maschine mit Doppelantrieb mit einem steuerbaren Kegelradgetriebesatz nach Anspruch 1, wobei die erste Rotationswelle (S101), die mit dem Antriebsrad (W101) des Kegelradgetriebesatzes (EG101) kombiniert ist, als ein Ausgang-/Eingangsende bedient wird, wobei der durch das Rad (W103) gekoppelte Kipphebel (A101) mit dem inneren Rotationsteil der elektrischen Maschine (EM 101) kombiniert ist, wobei der äußere Rotationsteil der elektrischen Maschine (EM 102) mit der Hülsentyprotationswelle (AS 101) kombiniert ist, wobei die Hülsentyprotationswelle (AS 101), die sich dreht und auf der ersten Rotationswelle (S101) hülsenartig angeordnet ist, als ein Ausgang-/Eingangsende bedient wird, wobei die Hülsentyprotationswelle (AS 101) mit einer Aktionsseite der steuerbaren Bremsvorrichtung (BK101) verbunden ist, während die andere Aktionsseite der steuerbaren Bremsvorrichtung (BK101) im Gehäuse (H100) befestigt ist, wobei der Kegelradgetriebesatzes (EG101) auch im Gehäuse (H100) befestigt ist, wobei das Abtriebsrad (W102) des Kegelradgetriebesatzes (EG101) zum Antreiben der zweiten Rotationswelle (S102) bereitgestellt ist, die als ein Ausgang-/Eingangsende bedient wird, wobei die zweite Rotationswelle (S102) mit einer Aktionsseite der steuerbaren Bremsvorrichtung (BK102) verbunden ist, während die andere Aktionsseite der steuerbaren Bremsvorrichtung (BK102) in dem Gehäuse (HS100) befestigt ist, das hauptsächlich aus Folgendem besteht:
-- Kegelradgetriebesatz (EG101): der durch ein Sonnenrad (W101) und ein äußeres Ringrad (W102) und mindestens ein Planetenrad (W103) gebildet ist, und einschließlich durch Zahnräder, die miteinander in Eingriff stehen, oder durch Reibräder, gegenseitig reibschlüssige Übertragungen ausführen, um eine Planetengetriebesatzfunktion zu bilden, und durch die erste Rotationswelle (S101), die zweite Rotationswelle (S102), den Kipphebel (A101), die Hülsentyprotationswelle (AS 101) und ein Lager aufgebaut ist, sowie mit einer Schale zum Kombinieren in dem Gehäuse (HS100) installiert ist ;
Die Drehzahlverhältnisse des Antriebsrads (W101) und des Abtriebsrads (W102) des erwähnten Kegelradgetriebesatzes (EG101) sind gleich, und die Drehzahlverhältnisse zwischen den beiden oben genannten Rädern und dem Rad (W103) können gleich oder verschieden sein ; oder
Die Drehzahlverhältnisse des Antriebsrads (W101) und des Abtriebsrads (W102) des erwähnten Kegelradgetriebesatzes (EG 101) sind verschieden, die Drehzahlverhältnisse zwischen dem Rad (W103) und dem Abtriebsrads (W102) können gleich oder verschieden sein, und die Drehzahlverhältnisse zwischen dem Rad (W103) und dem Antriebsrads (W101) können gleich oder verschieden sein ;
-- Kipphebel (A101): mit einem Ende, das bereitgestellt ist, um das Rad (W103) zu drehen und zu koppeln, und dem anderen Ende, das mit dem inneren Rotationsteil der elektrischen Maschine (EM 101) kombiniert wird ;
-- Steuerbare Bremsvorrichtung (BK101): die durch eine Bremsvorrichtung gebildet ist, die durch eine manuelle Kraft oder mechanische Kraft oder hydraulische Kraft oder pneumatische Kraft oder elektromagnetische Kraft gesteuert wird und zwei steuerbare Aktionsseiten für die Vorgänge eines Bremsverriegelungszustands für den Eingriffs- oder Lösezustand zum Trennen aufweist, wobei eine der Aktionsseiten mit der Hülsentyprotationswelle (AS101) oder dem Kipphebel (A101) verbunden ist und die andere Aktionsseite in dem Gehäuse (HS100) befestigt ist ;
-- Steuerbare Bremsvorrichtung (BK102): die durch eine Bremsvorrichtung gebildet ist, die durch eine manuelle Kraft oder mechanische Kraft oder hydraulische Kraft oder pneumatische Kraft oder elektromagnetische Kraft gesteuert wird und zwei steuerbare Aktionsseiten für die Vorgänge eines Bremsverriegelungszustands für den Eingriffs- oder Lösezustand zum Trennen aufweist, wobei eine der Aktionsseiten mit der zweiten Rotationswelle (S102) verbunden ist und die andere Aktionsseite in dem Gehäuse (HS100) befestigt ist;
-- Elektrische Maschine mit Doppelantrieb (EM 100): die durch eine DC oder AC, eine bürstenbehaftete oder eine bürstenlose, synchrone oder nicht synchrone elektrische Maschine mit Doppelantrieb gebildet ist, die einen inneren Rotationsteil der elektrischen Maschine (EM 101) und einen äußeren Rotationsteil der elektrischen Maschine (EM 102) aufweist und mit Endabdeckungen, Lagern und zugehörigen elektrischen Leitungsvorrichtungen, die zum Einleiten elektrischer Energie verwendet werden, installiert ist, wobei der innere Rotationsteil der elektrischen Maschine (EM 101) und der äußere Rotationsteil der elektrischen Maschine (EM 102) koaxial gedreht werden, wobei der innere Rotationsteil der elektrischen Maschine (EM 101) mit dem Kipphebel (A101) kombiniert ist, und der äußere Rotationsteil der elektrischen Maschine (EM 102) mit der Hülsentyprotationswelle (AS101) kombiniert ist ;
-- Die erste Rotationswelle (S101), die mit dem Antriebsrad (W101) des Kegelradgetriebesatzes (EG101) kombiniert ist, wird als ein Ausgang-/Eingangsende bedient, das Ausgangsrad (W102) des Kegelradgetriebesatzes (EG101), das mit der zweiten Rotationswelle (S102) kombiniert ist, wird als ein Ausgang-/Eingangsende bedient, wobei der durch das Rad (W103) gekoppelte Kipphebel (A101) mit dem inneren Rotationsteil der elektrischen Maschine (EM 101) kombiniert ist, wobei der äußere Rotationsteil der elektrischen Maschine (EM 102) mit der Hülsentyprotationswelle (AS 101) kombiniert ist, wobei die Hülsentyprotationswelle (AS 101), die sich dreht und auf der ersten Rotationswelle (S101) hülsenartig angeordnet ist, als ein Ausgang-/Eingangsende bedient wird, wobei die Hülsentyprotationswelle (AS 101) mit einer Aktionsseite der steuerbaren Bremsvorrichtung (BK101) verbunden ist, während die andere Aktionsseite der steuerbaren Bremsvorrichtung (BK101) in dem Gehäuse (H100) befestigt ist, wobei das Abtriebsrad (W102) des Kegelradgetriebesatzes (EG101) zum Antreiben der zweiten Rotationswelle (S102) bereitgestellt ist, die als ein Ausgang-/Eingangsende bedient wird, und die zweite Rotationswelle (S102) mit einer Aktionsseite der steuerbaren Bremsvorrichtung (BK102) verbunden ist, während die andere Aktionsseite der steuerbaren Bremsvorrichtung (BK102) in dem Gehäuse (H100) befestigt ist ;
Die Vorgänge schließen eine oder mehrere der folgenden Funktionen ein:
-- Wenn die steuerbare Bremsvorrichtung (BK101) und die steuerbare Bremsvorrichtung (BK102) beide so gesteuert werden, dass sie sich in dem Lösezustand befinden, und die elektrische Maschine mit Doppelantrieb (EM 100) nicht als elektrische Maschinenfunktion betrieben wird, sind die Übertragungsbeziehungen zwischen der ersten Rotationswelle (S101) und der zweiten Rotationswelle (S102) und der Hülsentyprotationswelle (AS 101) in dem Lösezustand, der eine Leerlaufrotation ermöglicht;
-- Wenn die steuerbare Bremsvorrichtung (BK101) und die steuerbare Bremsvorrichtung (BK102) beide so gesteuert werden, dass sie sich in dem Lösezustand befinden, und die elektrische Maschine mit Doppelantrieb (EM 100) als elektrische Maschinenfunktion betrieben wird, werden die entsprechenden interaktiven Vorgänge der Leistungsgeneratorfunktion oder der Motorfunktion zwischen dem inneren Rotationsteil der elektrischen Maschine (EM 101) und dem äußeren Rotationsteil der elektrischen Maschine (EM 102) entsprechend durchgeführt, gemäß der Dämpfung der externen Last oder des Rotationsmoments, der Drehzahl und der Drehrichtung der extern eingegebenen rotationskinetischen Energie, die durch die erste Rotationswelle (S101), die zweite Rotationswelle (S102) und die Hülsentyprotationswelle (AS 101) erhalten werden ;
-- Wenn die steuerbare Bremsvorrichtung (BK101) so gesteuert wird, dass sie sich in dem Bremsverriegelungszustand befindet und die steuerbare Bremsvorrichtung (BK102) so gesteuert wird, dass sie sich in dem Lösezustand befindet, und die elektrische Maschine mit Doppelantrieb (EM 100) nicht als elektrische Maschinenfunktion betrieben wird, ist die Übertragungsbeziehung zwischen der ersten Rotationswelle (S101) und der zweiten Rotationswelle (S102) in einer Verbindungsbeziehung, welche die Übertragung ermöglicht;
-- Wenn die steuerbare Bremsvorrichtung (BK101) so gesteuert wird, dass sie sich in dem Bremsverriegelungszustand befindet und die steuerbare Bremsvorrichtung (BK102) so gesteuert wird, dass sie sich in dem Lösezustand befindet, und die elektrische Maschine mit Doppelantrieb (EM 100) als elektrische Maschinenfunktion betrieben wird, wird zwischen dem inneren Rotationsteil der elektrischen Maschine (EM101) und dem äußeren Rotationsteil der elektrischen Maschine (EM 102) als Leistungsgeneratorfunktion oder der Motorfunktion zum Durchführen entsprechender interaktiver Vorgänge mit der Dämpfung der externen Last oder der extern eingegebenen rotationskinetischen Energie, die durch die erste Rotationswelle (S101) und die zweite Rotationswelle (S102) erhalten werden, betrieben ;
-- Wenn die steuerbare Bremsvorrichtung (BK101) so gesteuert wird, dass sie sich in dem Lösezustand befindet und die steuerbare Bremsvorrichtung (BK102) so gesteuert wird, dass sie sich in dem Bremsverriegelungszustand befindet, und die elektrische Maschine mit Doppelantrieb (EM 100) nicht als elektrische Maschinenfunktion betrieben wird, ist die Übertragungsbeziehung zwischen der ersten Rotationswelle (S101) und der Hülsentyprotationswelle (AS 101) in einer Verbindungsbeziehung, welche die Übertragung ermöglicht;
-- Wenn die steuerbare Bremsvorrichtung (BK101) so gesteuert wird, dass sie sich in dem Lösezustand befindet und die steuerbare Bremsvorrichtung (BK102) so gesteuert wird, dass sie sich in dem Bremsverriegelungszustand befindet, und die elektrische Maschine mit Doppelantrieb (EM 100) als elektrische Maschinenfunktion betrieben wird, wird zwischen dem inneren Rotationsteil der elektrischen Maschine (EM101) und dem äußeren Rotationsteil der elektrischen Maschine (EM 102) als Leistungsgeneratorfunktion oder der Motorfunktion zum Durchführen entsprechender interaktiver Vorgänge mit der Dämpfung der externen Last oder der extern eingegebenen rotationskinetischen Energie, die durch die erste Rotationswelle (S101) und die Hülsentyprotationswelle (AS101) erhalten werden, betrieben ;
-- Wenn die steuerbare Bremsvorrichtung (BK101) und die steuerbare Bremsvorrichtung (BK102) beide so gesteuert werden, dass sie sich im Bremsverriegelungszustand befinden, sind die Beziehungen zwischen der ersten Rotationswelle (S101), der zweiten Rotationswelle (S102) und der Hülsentyprotationswelle (AS101) alle im Bremsverriegelungszustand ;
Die interaktiven Vorgänge der entsprechenden Funktion, die durch die erwähnte elektrische Maschine mit Doppelantrieb (EM 100) durchgeführt werden, schließen das Empfangen der Antriebssteuerung von extern eingegebener elektrischer Energie ein, um als die Motorfunktion zum individuellen Antreiben der Last betrieben zu werden oder mit der extern eingegebenen rotationskinetischen Energie zum gemeinsamen Antreiben der Last zu arbeiten ;
Die interaktiven Vorgänge einer entsprechenden Funktion, die von der erwähnten elektrischen Maschine mit Doppelantrieb (EM 100) durchgeführt werden, schließen das Empfangen des Antreibens der extern eingegebenen rotationskinetischen Energie oder des Antreibens der kinetischen Energie der Lastträgheit, um als Leistungsgeneratorfunktion betrieben zu werden, ein, um die elektrische Energie auszugeben, um die externe elektrische Last anzutreiben oder die externe elektrische Energiespeichervorrichtung zu laden.

6. Elektrische Maschine mit Doppelantrieb mit einem steuerbaren Kegelradgetriebesatz nach Anspruch 1, wobei die erste Rotationswelle (S101), die mit dem Antriebsrad (W101) des Kegelradgetriebesatzes (EG101) kombiniert ist, als ein Ausgang-/Eingangsende bedient und zum Verbinden mit einer Aktionsseite der steuerbaren Bremsvorrichtung (BK103) bereitgestellt wird, während die andere Aktionsseite der steuerbaren Bremsvorrichtung (BK103) in dem Gehäuse (H100) befestigt ist, wobei das Kegelradgetriebesatz (EG101) auch in dem Gehäuse (H100) befestigt ist, wobei das Rad (W103) des Kegelradgetriebesatzes (EG101) zum Koppeln des Kipphebels (A101) bereitgestellt ist und mit dem inneren Rotationsteil der elektrischen Maschine (EM 101) kombiniert ist, wobei der äußere Rotationsteil der elektrischen Maschine (EM 102) mit der Hülsentyprotationswelle (AS 101) kombiniert ist, wobei die Hülsentyprotationswelle (AS 101), die sich dreht und auf der ersten Rotationswelle (S101) hülsenartig angeordnet ist, als ein Ausgang-/Eingangsende bedient wird, wobei das Abtriebsrad (W102) des Kegelradgetriebesatzes (EG101) zum Antreiben der zweiten Rotationswelle (S102) bereitgestellt ist, um als ein Ausgang-/Eingangsende bedient zu werden, und wobei die zweite Rotationswelle (S102) mit einer Aktionsseite der steuerbaren Bremsvorrichtung (BK102) verbunden ist, während die andere Aktionsseite der steuerbaren Bremsvorrichtung (BK102) in dem Gehäuse (H100) befestigt ist, das hauptsächlich aus Folgendem besteht:
-- Kegelradgetriebesatz (EG101): der durch ein Sonnenrad (W101) und ein äußeres Ringrad (W102) und mindestens ein Planetenrad (W103) gebildet ist, und einschließlich durch Zahnräder, die miteinander in Eingriff stehen, oder durch Reibräder, gegenseitig reibschlüssige Übertragungen ausführen, um eine Planetengetriebesatzfunktion zu bilden, und durch die erste Rotationswelle (S101), die zweite Rotationswelle (S102), den Kipphebel (A101), die Hülsentyprotationswelle (AS 101) und ein Lager aufgebaut ist, sowie mit einer Schale zum Kombinieren in dem Gehäuse (HS100) installiert ist ;
Die Drehzahlverhältnisse des Antriebsrads (W101) und des Abtriebsrads (W102) des erwähnten Kegelradgetriebesatzes (EG101) sind gleich, und die Drehzahlverhältnisse zwischen den beiden oben genannten Rädern und dem Rad (W103) können gleich oder verschieden sein ; oder
die Drehzahlverhältnisse des Antriebsrads (W101) und des Abtriebsrads (W102) des erwähnten Kegelradgetriebesatzes (EG101) sind verschieden, die Drehzahlverhältnisse zwischen dem Rad (W103) und dem Abtriebsrads (W102) können gleich oder verschieden sein, und die Drehzahlverhältnisse zwischen dem Rad (W103) und dem Antriebsrads (W101) können gleich oder verschieden sein ;
-- Kipphebel (A101): mit einem Ende, das bereitgestellt ist, um das Rad (W103) zu drehen und zu koppeln, und dem anderen Ende, das mit dem inneren Rotationsteil der elektrischen Maschine (EM 101) kombiniert wird ;
-- Steuerbare Bremsvorrichtung (BK102): die durch eine Bremsvorrichtung gebildet ist, die durch eine manuelle Kraft oder mechanische Kraft oder hydraulische Kraft oder pneumatische Kraft oder elektromagnetische Kraft gesteuert wird und zwei steuerbare Aktionsseiten für die Vorgänge eines Bremsverriegelungszustands für den Eingriffs- oder Lösezustand zum Trennen aufweist, wobei eine der Aktionsseiten mit der zweiten Rotationswelle (S102) verbunden ist und die andere Aktionsseite in dem Gehäuse (HS100) befestigt ist;
-- Steuerbare Bremsvorrichtung (BK103): die durch eine Bremsvorrichtung gebildet ist, die durch eine manuelle Kraft oder mechanische Kraft oder hydraulische Kraft oder pneumatische Kraft oder elektromagnetische Kraft gesteuert wird und zwei steuerbare Aktionsseiten für die Vorgänge eines Bremsverriegelungszustands für den Eingriffs- oder Lösezustand zum Trennen aufweist, wobei eine der Aktionsseiten mit der ersten Rotationswelle (S101) verbunden ist und die andere Aktionsseite in dem Gehäuse (HS100) befestigt ist;
-- Elektrische Maschine mit Doppelantrieb (EM 100): die durch eine DC oder AC, eine bürstenbehaftete oder eine bürstenlose, synchrone oder nicht synchrone elektrische Maschine mit Doppelantrieb gebildet ist, die einen inneren Rotationsteil der elektrischen Maschine (EM 101) und einen äußeren Rotationsteil der elektrischen Maschine (EM 102) aufweist und mit Endabdeckungen, Lagern und zugehörigen elektrischen Leitungsvorrichtungen, die zum Einleiten elektrischer Energie verwendet werden, installiert ist, wobei der innere Rotationsteil der elektrischen Maschine (EM 101) und der äußere Rotationsteil der elektrischen Maschine (EM 102) koaxial gedreht werden, wobei der innere Rotationsteil der elektrischen Maschine (EM 101) mit dem Kipphebel (A101) kombiniert ist, und der äußere Rotationsteil der elektrischen Maschine (EM 102) mit der Hülsentyprotationswelle (AS101) kombiniert ist ;
-- Die erste Rotationswelle (S101), die mit dem Antriebsrad (W101) des Kegelradgetriebesatzes (EG101) kombiniert ist, wird als ein Ausgang-/Eingangsende bedient und zum Verbinden mit einer Aktionsseite der steuerbaren Bremsvorrichtung (BK103) bereitgestellt, während die andere Aktionsseite der steuerbaren Bremsvorrichtung (BK103) in dem Gehäuse (HS100) befestigt ist ; das Abtriebsrad (W102) des Kegelradgetriebesatzes (EG101) wird mit der zweiten Rotationswelle (S102) kombiniert, um als ein Ausgang-/Eingangsende bedient zu werden, und zum Verbinden mit einer Aktionsseite der steuerbaren Bremsvorrichtung (BK102) bereitgestellt, während die andere Aktionsseite der steuerbaren Bremsvorrichtung (BK102) in dem Gehäuse (H100) befestigt ist, wobei der durch das Rad (W103) gekoppelte Kipphebel (A101) mit dem inneren Rotationsteil der elektrischen Maschine (EM101) kombiniert ist, wobei der äußere Rotationsteil der elektrischen Maschine (EM 102) mit der Hülsentyprotationswelle (AS 101) kombiniert ist, und die Hülsentyprotationswelle (AS 101), die sich dreht und auf der ersten Rotationswelle (S101) hülsenartig angeordnet ist, als ein Ausgang-/Eingangsende bedient wird ;
Die Vorgänge schließen eine oder mehrere der folgenden Funktionen ein:
-- Wenn die steuerbare Bremsvorrichtung (BK102) und die steuerbare Bremsvorrichtung (BK103) beide so gesteuert werden, dass sie sich in dem Lösezustand befindet, und die elektrische Maschine mit Doppelantrieb (EM 100) nicht als elektrische Maschinenfunktion betrieben wird, sind die Übertragungsbeziehungen zwischen der ersten Rotationswelle (S101) und der zweiten Rotationswelle (S102) und der Hülsentyprotationswelle (AS 101) in dem Lösezustand, der eine Leerlaufrotation ermöglicht;
-- Wenn die steuerbare Bremsvorrichtung (BK102) und die steuerbare Bremsvorrichtung (BK103) beide so gesteuert werden, dass sie sich in dem Lösezustand befinden, und die elektrische Maschine mit Doppelantrieb (EM 100) als elektrische Maschinenfunktion betrieben wird, werden die entsprechenden interaktiven Vorgänge der Leistungsgeneratorfunktion oder der Motorfunktion zwischen dem inneren Rotationsteil der elektrischen Maschine (EM 101) und dem äußeren Rotationsteil der elektrischen Maschine (EM 102) entsprechend durchgeführt, gemäß der Dämpfung der externen Last oder des Rotationsmoments, der Drehzahl und der Drehrichtung der extern eingegebenen rotationskinetischen Energie, die durch die erste Rotationswelle (S101), die zweite Rotationswelle (S102) und die Hülsentyprotationswelle (AS101) erhalten werden ;
-- Wenn die steuerbare Bremsvorrichtung (BK103) so gesteuert wird, dass sie sich in dem Bremsverriegelungszustand befindet und die steuerbare Bremsvorrichtung (BK102) so gesteuert wird, dass sie sich in dem Lösezustand befindet, und die elektrische Maschine mit Doppelantrieb (EM 100) nicht als elektrische Maschinenfunktion betrieben wird, ist die Übertragungsbeziehung zwischen der Hülsentyprotationswelle (AS 101) und der zweiten Rotationswelle (S102) in einer Verbindungsbeziehung, welche die Übertragung ermöglicht;
-- Wenn die steuerbare Bremsvorrichtung (BK103) so gesteuert wird, dass sie sich in dem Bremsverriegelungszustand befindet und die steuerbare Bremsvorrichtung (BK102) so gesteuert wird, dass sie sich in dem Lösezustand befindet, und die elektrische Maschine mit Doppelantrieb (EM 100) mit der elektrischen Maschinenfunktion betrieben wird, wird zwischen dem inneren Rotationsteil der elektrischen Maschine (EM 101) und dem äußeren Rotationsteil der elektrischen Maschine (EM 102) als Leistungsgeneratorfunktion oder der Motorfunktion zum Durchführen entsprechender interaktiver Vorgänge mit der Dämpfung der externen Last oder der extern eingegebenen rotationskinetischen Energie, die durch die Hülsentyprotationswelle (AS101) und die zweite Rotationswelle (S102) erhalten werden, betrieben ;
-- Wenn die steuerbare Bremsvorrichtung (BK103) so gesteuert wird, dass sie sich in dem Lösezustand befindet und die steuerbare Bremsvorrichtung (BK102) so gesteuert wird, dass sie sich in dem Bremsverriegelungszustand befindet, und die elektrische Maschine mit Doppelantrieb (EM 100) nicht als elektrische Maschinenfunktion betrieben wird, ist die Übertragungsbeziehung zwischen der ersten Rotationswelle (S101) und der Hülsentyprotationswelle (AS 101) in einer Verbindungsbeziehung, welche die Übertragung ermöglicht;
-- Wenn die steuerbare Bremsvorrichtung (BK103) so gesteuert wird, dass sie sich in dem Lösezustand befindet und die steuerbare Bremsvorrichtung (BK102) so gesteuert wird, dass sie sich in dem Bremsverriegelungszustand befindet, und die elektrische Maschine mit Doppelantrieb (EM100) als elektrische Maschinenfunktion betrieben wird, wird zwischen dem inneren Rotationsteil der elektrischen Maschine (EM101) und dem äußeren Rotationsteil der elektrischen Maschine (EM 102) als Leistungsgeneratorfunktion oder der Motorfunktion zum Durchführen entsprechender interaktiver Vorgänge mit der Dämpfung der externen Last oder der extern eingegebenen rotationskinetischen Energie, die durch die erste Rotationswelle (S101) und die Hülsentyprotationswelle (AS101) erhalten werden, betrieben ;
-- Wenn die steuerbare Bremsvorrichtung (BK101) und die steuerbare Bremsvorrichtung (BK102) beide so gesteuert werden, dass sie sich im Bremsverriegelungszustand befinden, sind die Beziehungen zwischen der ersten Rotationswelle (S101), der zweiten Rotationswelle (S102) und der Hülsentyprotationswelle (AS 101) alle im Bremsverriegelungszustand ;
Die interaktiven Vorgänge der entsprechenden Funktion, die durch die erwähnte elektrische Maschine mit Doppelantrieb (EM 100) durchgeführt werden, schließen das Empfangen der Antriebssteuerung von extern eingegebener elektrischer Energie ein, um als die Motorfunktion zum individuellen Antreiben der Last betrieben zu werden oder mit der extern eingegebenen rotationskinetischen Energie zum gemeinsamen Antreiben der Last zu arbeiten ;
Die interaktiven Vorgänge einer entsprechenden Funktion, die von der erwähnten elektrischen Maschine mit Doppelantrieb (EM 100) durchgeführt werden, schließen das Empfangen des Antreibens der extern eingegebenen rotationskinetischen Energie oder des Antreibens der kinetischen Energie der Lastträgheit, um als Leistungsgeneratorfunktion betrieben zu werden, ein, um die elektrische Energie auszugeben, um die externe elektrische Last anzutreiben oder die externe elektrische Energiespeichervorrichtung zu laden.

7. Elektrische Maschine mit Doppelantrieb mit einem steuerbaren Kegelradgetriebesatz nach Anspruch 1, wobei die erste Rotationswelle (S101), die mit dem Antriebsrad (W101) des Kegelradgetriebesatzes (EG101) kombiniert ist, als ein Ausgang-/Eingangsende bedient und zum Verbinden mit einer Aktionsseite der steuerbaren Bremsvorrichtung (BK103) bereitgestellt wird, während die andere Aktionsseite der steuerbaren Bremsvorrichtung (BK103) in dem Gehäuse (H100) befestigt ist, wobei das Rad (W103) des Kegelradgetriebesatzes (EG101) zum Koppeln des Kipphebels (A101) bereitgestellt ist und mit dem inneren Rotationsteil der elektrischen Maschine (EM 101) kombiniert ist, wobei der äußere Rotationsteil der elektrischen Maschine (EM 102) mit der Hülsentyprotationswelle (AS101) verbunden ist, wobei die Hülsentyprotationswelle (AS 101), die sich dreht und auf der ersten Rotationswelle (S101) hülsenartig angeordnet ist, als ein Ausgang-/Eingangsende bedient wird, wobei die Hülsentyprotationswelle (AS 101) mit einer Aktionsseite der steuerbaren Bremsvorrichtung (BK101) verbunden ist, während die andere Aktionsseite der steuerbaren Bremsvorrichtung (BK101) in dem Gehäuse H100) befestigt ist, wobei der Kegelradgetriebesatzes (EG101) auch im Gehäuse (H100) befestigt ist und wobei das Abtriebsrad (W102) des Kegelradgetriebesatzes (EG101) zum Antreiben der zweiten Rotationswelle (S102) bereitgestellt ist, um als ein Ausgang-/Eingangsende bedient zu werden, das hauptsächlich aus Folgendem besteht;
-- Kegelradgetriebesatz (EG101): der durch ein Sonnenrad (W101) und ein äußeres Ringrad (W102) und mindestens ein Planetenrad (W103) gebildet ist, und einschließlich durch Zahnräder, die miteinander in Eingriff stehen, oder durch Reibräder, gegenseitig reibschlüssige Übertragungen ausführen, um eine Planetengetriebesatzfunktion zu bilden, und durch die erste Rotationswelle (S101), die zweite Rotationswelle (S102), den Kipphebel (A101), die Hülsentyprotationswelle (AS 101) und ein Lager aufgebaut ist, sowie mit einer Schale zum Kombinieren in dem Gehäuse (HS100) installiert ist ;
Die Drehzahlverhältnisse des Antriebsrads (W101) und des Abtriebsrads (W102) des erwähnten Kegelradgetriebesatzes (EG101) sind gleich, und die Drehzahlverhältnisse zwischen den beiden oben genannten Rädern und dem Rad (W103) können gleich oder verschieden sein ; oder
Die Drehzahlverhältnisse des Antriebsrads (W101) und des Abtriebsrads (W102) des erwähnten Kegelradgetriebesatzes (EG101) sind verschieden, die Drehzahlverhältnisse zwischen dem Rad (W103) und dem Abtriebsrads (W102) können gleich oder verschieden sein, und die Drehzahlverhältnisse zwischen dem Rad (W103) und dem Antriebsrads (W101) können gleich oder verschieden sein ;
-- Kipphebel (A101): mit einem Ende, das bereitgestellt ist, um das Rad (W103) zu drehen und zu koppeln, und dem anderen Ende, das mit dem inneren Rotationsteil der elektrischen Maschine (EM 101) kombiniert wird ;
-- Steuerbare Bremsvorrichtung (BK101): die durch eine Bremsvorrichtung gebildet ist, die durch eine manuelle Kraft oder mechanische Kraft oder hydraulische Kraft oder pneumatische Kraft oder elektromagnetische Kraft gesteuert wird und zwei steuerbare Aktionsseiten für die Vorgänge eines Bremsverriegelungszustands für den Eingriffs- oder Lösezustand zum Trennen aufweist, wobei eine der Aktionsseiten mit der Hülsentyprotationswelle (AS 101) oder dem Kipphebel (A101) verbunden ist und die andere Aktionsseite in dem Gehäuse (HS100) befestigt ist ;
-- Steuerbare Bremsvorrichtung (BK103): die durch eine Bremsvorrichtung gebildet ist, die durch eine manuelle Kraft oder mechanische Kraft oder hydraulische Kraft oder pneumatische Kraft oder elektromagnetische Kraft gesteuert wird und zwei steuerbare Aktionsseiten für die Vorgänge eines Bremsverriegelungszustands für den Eingriffs- oder Lösezustand zum Trennen aufweist, wobei eine der Aktionsseiten mit der ersten Rotationswelle (S101) verbunden ist und die andere Aktionsseite in dem Gehäuse (HS100) befestigt ist;
-- Elektrische Maschine mit Doppelantrieb (EM 100): die durch eine DC oder AC, eine bürstenbehaftete oder eine bürstenlose, synchrone oder nicht synchrone elektrische Maschine mit Doppelantrieb gebildet ist, die einen inneren Rotationsteil der elektrischen Maschine (EM 101) und einen äußeren Rotationsteil der elektrischen Maschine (EM 102) aufweist und mit Endabdeckungen, Lagern und zugehörigen elektrischen Leitungsvorrichtungen, die zum Einleiten elektrischer Energie verwendet werden, installiert ist, wobei der innere Rotationsteil der elektrischen Maschine (EM 101) und der äußere Rotationsteil der elektrischen Maschine (EM 102) koaxial gedreht werden, wobei der innere Rotationsteil der elektrischen Maschine (EM 101) mit dem Kipphebel (A101) kombiniert ist, und der äußere Rotationsteil der elektrischen Maschine (EM 102) mit der Hülsentyprotationswelle (AS101) kombiniert ist ;
-- Die erste Rotationswelle (S101), die mit dem Antriebsrad (W101) des Kegelradgetriebesatzes (EG101) kombiniert ist, wird als ein Ausgang-/Eingangsende bedient und zum Verbinden mit einer Aktionsseite der steuerbaren Bremsvorrichtung (BK103) bereitgestellt, während die andere Aktionsseite der steuerbaren Bremsvorrichtung (BK103) in dem Gehäuse (HS100) befestigt ist;
-- Das Rad (W103) des Kegelradgetriebesatzes (EG101) ist zum Koppeln des Kipphebels (A101) bereitgestellt und mit dem inneren Rotationsteil der elektrischen Maschine (EM101) kombiniert, wobei der äußere Rotationsteil der elektrischen Maschine (EM 102) mit der Hülsentyprotationswelle (AS101) verbunden ist, wobei die Hülsentyprotationswelle (AS101), die sich dreht und auf der ersten Rotationswelle (S101) hülsenartig angeordnet ist, als ein Ausgang-/Eingangsende bedient wird, wobei die Hülsentyprotationswelle (AS101) mit einer Aktionsseite der steuerbaren Bremsvorrichtung (BK101) verbunden ist, während die andere Aktionsseite der steuerbaren Bremsvorrichtung (BK101) in dem Gehäuse (H100) befestigt ist, und wobei das Abtriebsrad (W102) des Kegelradgetriebesatzes (EG101) zum Antreiben der zweiten Rotationswelle (S102) bereitgestellt ist, um als ein Ausgang-/Eingangsende bedient zu werden ;
Die Vorgänge schließen eine oder mehrere der folgenden Funktionen ein:
-- Wenn die steuerbare Bremsvorrichtung (BK101) und die steuerbare Bremsvorrichtung (BK103) beide so gesteuert werden, dass sie sich in dem Lösezustand befindet, und die elektrische Maschine mit Doppelantrieb (EM 100) nicht als elektrische Maschinenfunktion betrieben wird, sind die Übertragungsbeziehungen zwischen der ersten Rotationswelle (S101) und der zweiten Rotationswelle (S102) und der Hülsentyprotationswelle (AS 101) in dem Lösezustand, der eine Leerlaufrotation ermöglicht;
-- Wenn die steuerbare Bremsvorrichtung (BK101) und die steuerbare Bremsvorrichtung (BK103) beide so gesteuert werden, dass sie sich in dem Lösezustand befinden, und die elektrische Maschine mit Doppelantrieb (EM 100) als elektrische Maschinenfunktion betrieben wird, werden die entsprechenden interaktiven Vorgänge der Leistungsgeneratorfunktion oder der Motorfunktion zwischen dem inneren Rotationsteil der elektrischen Maschine (EM 101) und dem äußeren Rotationsteil der elektrischen Maschine (EM 102) entsprechend durchgeführt, gemäß der Dämpfung der externen Last oder des Rotationsmoments, der Drehzahl und der Drehrichtung der extern eingegebenen rotationskinetischen Energie, die durch die erste Rotationswelle (S101), die zweite Rotationswelle (S102) und die Hülsentyprotationswelle (AS 101) erhalten werden ;
-- Wenn die steuerbare Bremsvorrichtung (BK101) so gesteuert wird, dass sie sich in dem Bremsverriegelungszustand befindet und die steuerbare Bremsvorrichtung (BK103) so gesteuert wird, dass sie sich in dem Lösezustand befindet, und die elektrische Maschine mit Doppelantrieb (EM 100) nicht als elektrische Maschinenfunktion betrieben wird, ist die Übertragungsbeziehung zwischen der ersten Rotationswelle (S101) und der zweiten Rotationswelle (S102) in einer Verbindungsbeziehung, welche die Übertragung ermöglicht;
-- Wenn die steuerbare Bremsvorrichtung (BK101) so gesteuert wird, dass sie sich in dem Bremsverriegelungszustand befindet und die steuerbare Bremsvorrichtung (BK103) so gesteuert wird, dass sie sich in dem Lösezustand befindet, und die elektrische Maschine mit Doppelantrieb (EM 100) als elektrische Maschinenfunktion betrieben wird, wird zwischen dem inneren Rotationsteil der elektrischen Maschine (EM 101) und dem äußeren Rotationsteil der elektrischen Maschine (EM 102) als Leistungsgeneratorfunktion oder der Motorfunktion zum Durchführen entsprechender interaktiver Vorgänge mit der Dämpfung der externen Last oder der extern eingegebenen rotationskinetischen Energie, die durch die erste Rotationswelle (S101) und zweite Rotationswelle (S102) erhalten werden, betrieben ;
-- Wenn die steuerbare Bremsvorrichtung (BK101) so gesteuert wird, dass sie sich in dem Lösezustand befindet und die steuerbare Bremsvorrichtung (BK103) so gesteuert wird, dass sie sich in dem Bremsverriegelungszustand befindet, und die elektrische Maschine mit Doppelantrieb (EM 100) nicht als elektrische Maschinenfunktion betrieben wird, ist die Übertragungsbeziehung zwischen der zweiten Rotationswelle (S102) und der Hülsentyprotationswelle (AS 101) in einer Verbindungsbeziehung, welche die Übertragung ermöglicht;
-- Wenn die steuerbare Bremsvorrichtung (BK101) so gesteuert wird, dass sie sich in dem Lösezustand befindet und die steuerbare Bremsvorrichtung (BK103) so gesteuert wird, dass sie sich in dem Bremsverriegelungszustand befindet, und die elektrische Maschine mit Doppelantrieb (EM 100) mit der elektrischen Maschinenfunktion betrieben wird, wird zwischen dem inneren Rotationsteil der elektrischen Maschine (EM101) und dem äußeren Rotationsteil der elektrischen Maschine (EM 102) als Leistungsgeneratorfunktion oder der Motorfunktion zum Durchführen entsprechender interaktiver Vorgänge mit der Dämpfung der externen Last oder der extern eingegebenen rotationskinetischen Energie, die durch die zweite Rotationswelle (S102) und die Hülsentyprotationswelle (AS 101) erhalten werden, betrieben ;
-- Wenn die steuerbare Bremsvorrichtung (BK101) und die steuerbare Bremsvorrichtung (BK102) beide so gesteuert werden, dass sie sich im Bremsverriegelungszustand befinden, sind die Beziehungen zwischen der ersten Rotationswelle (S101), der zweiten Rotationswelle (S102) und der Hülsentyprotationswelle (AS101) alle im Bremsverriegelungszustand ;
Die interaktiven Vorgänge der entsprechenden Funktion, die durch die erwähnte elektrische Maschine mit Doppelantrieb (EM 100) durchgeführt werden, schließen das Empfangen der Antriebssteuerung von extern eingegebener elektrischer Energie ein, um als die Motorfunktion zum individuellen Antreiben der Last betrieben zu werden oder mit der extern eingegebenen rotationskinetischen Energie zum gemeinsamen Antreiben der Last zu arbeiten ;
Die interaktiven Vorgänge einer entsprechenden Funktion, die von der erwähnten elektrischen Maschine mit Doppelantrieb (EM 100) durchgeführt werden, schließen das Empfangen des Antreibens der extern eingegebenen rotationskinetischen Energie oder des Antreibens der kinetischen Energie der Lastträgheit, um als Leistungsgeneratorfunktion betrieben zu werden, ein, um die elektrische Energie auszugeben, um die externe elektrische Last anzutreiben oder die externe elektrische Energiespeichervorrichtung zu laden.

8. Elektrische Maschine mit Doppelantrieb mit einem steuerbaren Kegelradgetriebesatz nach Anspruch 1, wobei die erste Rotationswelle (S101), die mit dem Antriebsrad (W101) des Kegelradgetriebesatzes (EG101) kombiniert ist, als ein Ausgang-/Eingangsende bedient wird und zum Verbinden mit einer Aktionsseite der steuerbaren Bremsvorrichtung (BK103) bereitgestellt ist, während die andere Aktionsseite der steuerbaren Bremsvorrichtung (BK103) in dem Gehäuse (H100) befestigt ist, wobei das Rad (W103) des Kegelradgetriebesatzes (EG101) zum Koppeln des Kipphebels (A101) bereitgestellt ist und mit dem inneren Rotationsteil der elektrischen Maschine (EM 101) kombiniert ist, wobei der äußere Rotationsteil der elektrischen Maschine (EM 102) mit der Hülsentyprotationswelle (AS101) verbunden ist, wobei die Hülsentyprotationswelle (AS 101), die sich dreht und auf der ersten Rotationswelle (S101) hülsenartig angeordnet ist, als ein Ausgang-/Eingangsende bedient wird, wobei die Hülsentyprotationswelle (AS 101) mit einer Aktionsseite der steuerbaren Bremsvorrichtung (BK101) verbunden ist, während die andere Aktionsseite der steuerbaren Bremsvorrichtung (BK101) in dem Gehäuse H100) befestigt ist, wobei der Kegelradgetriebesatzes (EG101) auch im Gehäuse (H100) befestigt ist, wobei das Abtriebsrad (W102) des Kegelradgetriebesatzes (EG101) zum Antreiben der zweiten Rotationswelle (S102) bereitgestellt ist, um als ein Ausgang-/Eingangsende bedient zu werden, und wobei die zweite Rotationswelle (S102) mit einer Aktionsseite der steuerbaren Bremsvorrichtung (BK102) verbunden ist, während die andere Aktionsseite der steuerbaren Bremsvorrichtung (BK102) in dem Gehäuse (H100) befestigt ist, das hauptsächlich aus Folgendem besteht;
-- Kegelradgetriebesatz (EG101): der durch ein Sonnenrad (W101) und ein äußeres Ringrad (W102) und mindestens ein Planetenrad (W103) gebildet ist, und einschließlich durch Zahnräder, die miteinander in Eingriff stehen, oder durch Reibräder, gegenseitig reibschlüssige Übertragungen ausführen, um eine Planetengetriebesatzfunktion zu bilden, und durch die erste Rotationswelle (S101), die zweite Rotationswelle (S102), den Kipphebel (A101), die Hülsentyprotationswelle (AS 101) und ein Lager aufgebaut ist, sowie mit einer Schale zum Kombinieren in dem Gehäuse (HS100) installiert ist ;
Die Drehzahlverhältnisse des Antriebsrads (W101) und des Abtriebsrads (W102) des erwähnten Kegelradgetriebesatzes (EG101) sind gleich, und die Drehzahlverhältnisse zwischen den beiden oben genannten Rädern und dem Rad (W103) können gleich oder verschieden sein ; oder
Die Drehzahlverhältnisse des Antriebsrads (W101) und des Abtriebsrads (W102) des erwähnten Kegelradgetriebesatzes (EG101) sind verschieden, die Drehzahlverhältnisse zwischen dem Rad (W103) und dem Abtriebsrads (W102) können gleich oder verschieden sein, und die Drehzahlverhältnisse zwischen dem Rad (W103) und dem Antriebsrads (W101) können gleich oder verschieden sein ;
-- Kipphebel (A101): mit einem Ende, das bereitgestellt ist, um das Rad (W103) zu drehen und zu koppeln, und dem anderen Ende, das mit dem inneren Rotationsteil der elektrischen Maschine (EM 101) kombiniert wird ;
-- Steuerbare Bremsvorrichtung (BK101): die durch eine Bremsvorrichtung gebildet ist, die durch eine manuelle Kraft oder mechanische Kraft oder hydraulische Kraft oder pneumatische Kraft oder elektromagnetische Kraft gesteuert wird und zwei steuerbare Aktionsseiten für die Vorgänge eines Bremsverriegelungszustands für den Eingriffs- oder Lösezustand zum Trennen aufweist, wobei eine der Aktionsseiten mit der Hülsentyprotationswelle (AS 101) oder dem Kipphebel (A101) verbunden ist und die andere Aktionsseite in dem Gehäuse (HS100) befestigt ist ;
-- Steuerbare Bremsvorrichtung (BK102): die durch eine Bremsvorrichtung gebildet ist, die durch eine manuelle Kraft oder mechanische Kraft oder hydraulische Kraft oder pneumatische Kraft oder elektromagnetische Kraft gesteuert wird und zwei steuerbare Aktionsseiten für die Vorgänge eines Bremsverriegelungszustands für den Eingriffs- oder Lösezustand zum Trennen aufweist, wobei eine der Aktionsseiten mit der zweiten Rotationswelle (S102) verbunden ist und die andere Aktionsseite in dem Gehäuse (HS100) befestigt ist;
-- Steuerbare Bremsvorrichtung (BK103): die durch eine Bremsvorrichtung gebildet ist, die durch eine manuelle Kraft oder mechanische Kraft oder hydraulische Kraft oder pneumatische Kraft oder elektromagnetische Kraft gesteuert wird und zwei steuerbare Aktionsseiten für die Vorgänge eines Bremsverriegelungszustands für den Eingriffs- oder Lösezustand zum Trennen aufweist, wobei eine der Aktionsseiten mit der ersten Rotationswelle (S101) verbunden ist und die andere Aktionsseite in dem Gehäuse (HS100) befestigt ist;
-- Elektrische Maschine mit Doppelantrieb (EM 100): die durch eine DC oder AC, eine bürstenbehaftete oder eine bürstenlose, synchrone oder nicht synchrone elektrische Maschine mit Doppelantrieb gebildet ist, die einen inneren Rotationsteil der elektrischen Maschine (EM 101) und einen äußeren Rotationsteil der elektrischen Maschine (EM 102) aufweist und mit Endabdeckungen, Lagern und zugehörigen elektrischen Leitungsvorrichtungen, die zum Einleiten elektrischer Energie verwendet werden, installiert ist, wobei der innere Rotationsteil der elektrischen Maschine (EM 101) und der äußere Rotationsteil der elektrischen Maschine (EM 102) koaxial gedreht werden, wobei der innere Rotationsteil der elektrischen Maschine (EM 101) mit dem Kipphebel (A101) kombiniert ist, und der äußere Rotationsteil der elektrischen Maschine (EM 102) mit der Hülsentyprotationswelle (AS101) kombiniert ist ;
-- Die erste Rotationswelle (S101), die mit dem Antriebsrad (W101) des Kegelradgetriebesatzes (EG101) kombiniert ist, wird als ein Ausgang-/Eingangsende bedient und zum Verbinden mit einer Aktionsseite der steuerbaren Bremsvorrichtung (BK103) bereitgestellt, während eine Aktionsseite der steuerbaren Bremsvorrichtung (BK103) in dem Gehäuse (HS100) befestigt ist;
-- Das Rad (W103) des Kegelradgetriebesatzes (EG101) ist zum Koppeln des Kipphebels (A101) bereitgestellt und mit dem inneren Rotationsteil der elektrischen Maschine (EM101) kombiniert, wobei der äußere Rotationsteil der elektrischen Maschine (EM102) mit der Hülsentyprotationswelle (AS 101) verbunden ist, wobei die Hülsentyprotationswelle (AS 101), die sich dreht und auf der ersten Rotationswelle (S101) hülsenartig angeordnet ist, als ein Ausgang-/Eingangsende bedient wird, wobei die Hülsentyprotationswelle (AS 101) mit einer Aktionsseite der steuerbaren Bremsvorrichtung (BK101) verbunden ist, während die andere Aktionsseite der steuerbaren Bremsvorrichtung (BK101) in dem Gehäuse (H100) befestigt ist, wobei das Abtriebsrad (W102) des Kegelradgetriebesatzes (EG101) zum Antreiben der zweiten Rotationswelle (S102) bereitgestellt ist, die als ein Ausgang-/Eingangsende bedient wird, und die zweite Rotationswelle (S102) mit einer Aktionsseite der steuerbaren Bremsvorrichtung (BK102) verbunden ist, während die andere Aktionsseite der steuerbaren Bremsvorrichtung (BK102) in dem Gehäuse (H100) befestigt ist ;
Die Vorgänge schließen eine oder mehrere der folgenden Funktionen ein:
-- Wenn die steuerbare Bremsvorrichtung (BK101) und die steuerbare Bremsvorrichtung (BK102) und die steuerbare Bremsvorrichtung (BK103) alle so gesteuert werden, dass sie sich in dem Lösezustand befinden, und die elektrische Maschine mit Doppelantrieb (EM 100) nicht als elektrische Maschinenfunktion betrieben wird, sind die Übertragungsbeziehungen zwischen der ersten Rotationswelle (S101) und der zweiten Rotationswelle (S102) und der Hülsentyprotationswelle (AS 101) in dem Lösezustand, der eine Leerlaufrotation ermöglicht;
-- Wenn die steuerbare Bremsvorrichtung (BK101) und die steuerbare Bremsvorrichtung (BK102) und die steuerbare Bremsvorrichtung (BK103) alle so gesteuert werden, dass sie sich in dem Lösezustand befinden, und die elektrische Maschine mit Doppelantrieb (EM 100) als elektrische Maschinenfunktion betrieben wird, werden die entsprechenden interaktiven Vorgänge der Leistungsgeneratorfunktion oder der Motorfunktion zwischen dem inneren Rotationsteil der elektrischen Maschine (EM101) und dem äußeren Rotationsteil der elektrischen Maschine (EM 102) entsprechend durchgeführt, gemäß der Dämpfung der externen Last oder des Rotationsmoments, der Drehzahl und der Drehrichtung der extern eingegebenen rotationskinetischen Energie, die durch die erste Rotationswelle (S101), die zweite Rotationswelle (S102) und die Hülsentyprotationswelle (AS101) erhalten werden ;
-- Wenn die steuerbare Bremsvorrichtung (BK101) so gesteuert wird, dass sie sich in dem Bremsverriegelungszustand befindet, werden die steuerbare Bremsvorrichtung (BK102) und die steuerbare Bremsvorrichtung (BK103) so gesteuert, dass sie sich in dem Lösezustand befinden, und die elektrische Maschine mit Doppelantrieb (EM 100) nicht als elektrische Maschinenfunktion betrieben wird, ist die Übertragungsbeziehung zwischen der ersten Rotationswelle (S101) und der zweiten Rotationswelle (S102) in einer Verbindungsbeziehung, welche die Übertragung ermöglicht;
-- Wenn die steuerbare Bremsvorrichtung (BK101) so gesteuert wird, dass sie sich in dem Bremsverriegelungszustand befindet, werden die steuerbare Bremsvorrichtung (BK102) und die steuerbare Bremsvorrichtung (BK103) so gesteuert, dass sie sich in dem Lösezustand befinden, und die elektrische Maschine mit Doppelantrieb (EM 100) als elektrische Maschinenfunktion betrieben wird, wird zwischen dem inneren Rotationsteil der elektrischen Maschine (EM 101) und dem äußeren Rotationsteil der elektrischen Maschine (EM 102) als Leistungsgeneratorfunktion oder der Motorfunktion zum Durchführen entsprechender interaktiver Vorgänge mit der Dämpfung der externen Last oder der extern eingegebenen rotationskinetischen Energie, die durch die erste Rotationswelle (S101) und zweite Rotationswelle (S102) erhalten werden, betrieben ;
-- Wenn die steuerbare Bremsvorrichtung (BK102) so gesteuert wird, dass sie sich in dem Bremsverriegelungszustand befindet, werden die steuerbare Bremsvorrichtung (BK101) und die steuerbare Bremsvorrichtung (BK103) so gesteuert, dass sie sich in dem Lösezustand befinden, und die elektrische Maschine mit Doppelantrieb (EM 100) nicht als elektrische Maschinenfunktion betrieben wird, ist die Übertragungsbeziehung zwischen der ersten Rotationswelle (S101) und der Hülsentyprotationswelle (AS101) in einer Verbindungsbeziehung, welche die Übertragung ermöglicht;
-- Wenn die steuerbare Bremsvorrichtung (BK102) so gesteuert wird, dass sie sich in dem Bremsverriegelungszustand befindet, werden die steuerbare Bremsvorrichtung (BK101) und die steuerbare Bremsvorrichtung (BK103) so gesteuert, dass sie sich in dem Lösezustand befinden, und die elektrische Maschine mit Doppelantrieb (EM 100) als elektrische Maschinenfunktion betrieben wird, wird zwischen dem inneren Rotationsteil der elektrischen Maschine (EM 101) und dem äußeren Rotationsteil der elektrischen Maschine (EM 102) als Leistungsgeneratorfunktion oder der Motorfunktion zum Durchführen entsprechender interaktiver Vorgänge mit der Dämpfung der externen Last oder der extern eingegebenen rotationskinetischen Energie, die durch die erste Rotationswelle (S101) und die Hülsentyprotationswelle (AS101) erhalten werden, betrieben ;
-- Wenn die steuerbare Bremsvorrichtung (BK103) so gesteuert wird, dass sie sich in dem Bremsverriegelungszustand befindet, werden die steuerbare Bremsvorrichtung (BK101) und die steuerbare Bremsvorrichtung (BK102) so gesteuert, dass sie sich in dem Lösezustand befinden, und die elektrische Maschine mit Doppelantrieb (EM 100) nicht als elektrische Maschinenfunktion betrieben wird, ist die Übertragungsbeziehung zwischen der zweiten Rotationswelle (S102) und der Hülsentyprotationswelle (AS 101) in einer Verbindungsbeziehung, welche die Übertragung ermöglicht;
-- Wenn die steuerbare Bremsvorrichtung (BK103) so gesteuert wird, dass sie sich in dem Bremsverriegelungszustand befindet, werden die steuerbare Bremsvorrichtung (BK101) und die steuerbare Bremsvorrichtung (BK102) so gesteuert, dass sie sich in dem Lösezustand befinden, und die elektrische Maschine mit Doppelantrieb (EM 100) als elektrische Maschinenfunktion betrieben wird, wird zwischen dem inneren Rotationsteil der elektrischen Maschine (EM 101) und dem äußeren Rotationsteil der elektrischen Maschine (EM 102) als Leistungsgeneratorfunktion oder der Motorfunktion zum Durchführen entsprechender interaktiver Vorgänge mit der Dämpfung der externen Last oder der extern eingegebenen rotationskinetischen Energie, die durch die zweite Rotationswelle (S102) und die Hülsentyprotationswelle (AS101) erhalten werden, betrieben ;
-- Wenn zwei oder alle der steuerbaren Bremsvorrichtung (BK101) und der steuerbaren Bremsvorrichtung (BK102) und der steuerbaren Bremsvorrichtung (BK103) so gesteuert werden, dass sie sich im Bremsverriegelungszustand befinden, sind die Beziehungen zwischen der ersten Rotationswelle (S101), der zweiten Rotationswelle (S102) und der Hülsentyprotationswelle (AS 101) alle im Bremsverriegelungszustand ;
Die interaktiven Vorgänge der entsprechenden Funktion, die durch die erwähnte elektrische Maschine mit Doppelantrieb (EM 100) durchgeführt werden, schließen das Empfangen der Antriebssteuerung von extern eingegebener elektrischer Energie ein, um als die Motorfunktion zum individuellen Antreiben der Last betrieben zu werden oder mit der extern eingegebenen rotationskinetischen Energie zum gemeinsamen Antreiben der Last zu arbeiten ;
Die interaktiven Vorgänge einer entsprechenden Funktion, die von der erwähnten elektrischen Maschine mit Doppelantrieb (EM 100) durchgeführt werden, schließen das Empfangen des Antreibens der extern eingegebenen rotationskinetischen Energie oder des Antreibens der kinetischen Energie der Lastträgheit, um als Leistungsgeneratorfunktion betrieben zu werden, ein, um die elektrische Energie auszugeben, um die externe elektrische Last anzutreiben oder die externe elektrische Energiespeichervorrichtung zu laden.

## Revendications

1. Machine électrique double commande (EM 100) en combinaison avec un ensemble à engrenages coniques contrôlable (EG101), dans lequel :
une partie de rotation externe de la machine électrique (EM 102) est reliée à un arbre de rotation de type manchon (AS101), dans lequel l'arbre de rotation de type manchon (AS101) tourne et est emmanché sur un premier arbre de rotation (S101) servant d'extrémité de sortie/entrée, le premier arbre de rotation (S101) étant relié à une roue d'entrée (W101) ;
une partie de rotation interne de la machine électrique (EM101) de la machine électrique double commande (EM 100) est combinée à un culbuteur (A101) lié à une roue (W103) de l'ensemble d'engrenages coniques (EG101) installé dans la partie de rotation intérieure de la machine électrique (EM101) ;
un second arbre de rotation (S102) connecté à une roue de sortie (W102) est desservi en tant qu'extrémité de sortie/entrée ;
le premier arbre de rotation (S101) au niveau de l'extrémité de sortie/entrée, le second arbre de rotation (S102) au niveau de l'extrémité de sortie/entrée et l'arbre de rotation de type manchon (AS 101) forment trois extrémités de sortie/entrée ;
dans lequel au moins l'une des trois extrémités de sortie/entrée est reliée à un côté d'action d'un dispositif de frein commandable, et l'autre côté d'action du dispositif de frein commandable est connecté à un boîtier (H100) ; et
dans lequel l'une des trois extrémités de sortie/entrée non reliées à la machine électrique double commande (EM 100) sert de sortie externe ;
en commandant le dispositif de frein commandable pour qu'il effectue un verrouillage de frein ou une opération de libération, des opérations de fonction de transmission consistant à relier la transmission ou la libération entre le premier arbre de rotation (S101) au niveau de l'extrémité de sortie/entrée, le second arbre de rotation (S102) au niveau de l'extrémité de sortie/entrée et l'arbre de rotation de type manchon (AS 101) au niveau de l'extrémité de sortie/entrée de l'ensemble d'engrenages coniques (EG101) sont activées pour être commandés, et les opérations interactives entre la machine électrique double commande (EM 100) et les extrémités de sortie/entrée sont également activées pour être commandées.

2. Machine électrique double commande ayant un ensemble à engrenages coniques contrôlable selon la revendication 1, dans laquelle le premier arbre de rotation (S101) est combiné à la roue d'entrée (W101) de l'ensemble à engrenages coniques (EG101) pour servir d'extrémité de sortie/entrée, le culbuteur (A101) lié par la roue (W103) est combiné à la partie de rotation intérieure de la machine électrique (EM 101), la partie de rotation extérieure de la machine électrique (EM 102) est combinée à l'arbre de rotation de type manchon (AS 101), l'arbre de rotation de type manchon (AS 101) mis en rotation et emmanché sur le premier arbre de rotation (S101) sert d'extrémité de sortie/entrée et est prévu pour relier un côté d'action du dispositif de frein commandable (BK101) tandis que l'autre côté d'action du dispositif de frein commandable (BK101) est attaché dans le boîtier (H100), l'ensemble à engrenages coniques (EG101) est également attaché dans le boîtier (H100), et la roue de sortie (W102) de l'ensemble à engrenages coniques (EG101) est prévue pour entraîner l'arbre de rotation (S102) pour servir d'extrémité de sortie/entrée, qui est principalement constituée de ;
-- Un ensemble à engrenages coniques (EG101) : qui est constitué d'une roue solaire (W101) et d'une roue annulaire extérieure (W102) et d'au moins une roue planétaire (W103), et y compris à travers des engrenages venant en prise l'un avec l'autre, ou à travers des roues de friction effectuant mutuellement des transmissions par friction pour former une fonction d'ensemble à engrenages planétaires, et structuré par le premier arbre de rotation (S101), le second arbre de rotation (S102), le culbuteur (A101), l'arbre de rotation de type manchon (AS 101) et un palier, ainsi qu'installés avec une coque pour être combinés dans le boîtier (H100) ;
Les rapports de vitesse de la roue d'entrée (W101) et de la roue de sortie (W102) de l'ensemble à engrenages coniques (EG101) mentionné sont les mêmes, et les rapports de vitesse entre les deux éléments ci-dessus et la roue (W103) peuvent être identiques ou différents ; ou
Les rapports de vitesse de la roue d'entrée (W101) et de la roue de sortie (W102) de l'ensemble à engrenages coniques (EG101) mentionné sont différents, les rapports de vitesse entre la roue (W103) et la roue de sortie (W102) peuvent être identiques ou différents, et les rapports de vitesse entre la roue (W103) et la roue d'entrée (W101) peuvent être identiques ou différents ;
-- Le culbuteur (A101) : ayant une extrémité prévue pour permettre à la roue (W103) de tourner et de lier, et l'autre extrémité étant combinée à la partie de rotation intérieure de la machine électrique (EM 101) ;
-- Dispositif de frein commandable (BK101) : qui est constitué d'un dispositif de freinage commandé par une force manuelle ou une force mécanique ou une force hydraulique ou une force pneumatique ou une force électromagnétique, et ayant deux côtés d'action commandables pour les opérations d'un état de verrouillage de frein pour une mise en prise ou un état de libération pour une séparation, dans lequel l'un des côtés d'action est relié à l'arbre de rotation de type manchon (AS 101) ou au culbuteur (A101), et l'autre côté d'action est attaché dans le boîtier (H100) ;
-- Machine électrique double commande (EM 100) : qui est constituée d'une machine électrique double commande synchrone ou non synchrone, à balai ou sans balai, CC ou CA, ayant une partie de rotation intérieure de la machine électrique (EM 101) et une partie de rotation extérieure de la machine électrique (EM 102), et installée avec des couvercles d'extrémité, des paliers et des dispositifs de conduction électrique associés utilisés pour introduire de l'énergie électrique, la partie de rotation intérieure de la machine électrique (EM 101) et la partie de rotation extérieure de la machine électrique (EM 102) sont tournées coaxialement, dans lequel la partie de rotation intérieure de la machine électrique (EM 101) est combinée au culbuteur (A101), et la partie de rotation extérieure de la machine électrique (EM 102) est combinée à l'arbre de rotation de type manchon (AS101) ;
-- Le premier arbre de rotation (S101) combiné à la roue d'entrée (W101) de l'ensemble à engrenages coniques (EG101) sert d'extrémité de sortie/entrée, le culbuteur (A101) lié par la roue (W103) est combiné à la partie de rotation intérieure de la machine électrique (EM101), la partie de rotation extérieure de la machine électrique (EM 102) est combinée à l'arbre de rotation de type manchon (AS101), l'arbre de rotation de type manchon (AS101) mis en rotation et emmanché sur le premier arbre de rotation (S101) sert d'extrémité de sortie/entrée, l'arbre de rotation de type manchon (AS 101) est relié à un côté d'action du dispositif de frein commandable (BK101) alors que l'autre côté d'action du dispositif de frein commandable (BK101) est attaché dans le boîtier (H100), la roue de sortie (W102) de l'ensemble à engrenages coniques (EG101) est prévue pour entraîner l'arbre de rotation (S102) pour servir d'extrémité de sortie/entrée, et le premier arbre de rotation (S101) combiné à la roue d'entrée (W101) sert également d'extrémité de sortie/entrée ;
Les opérations comprennent une ou plusieurs des fonctions suivantes :
-- Lorsque le dispositif de frein commandable (BK101) est commandé pour être dans l'état de libération, et que la machine électrique double commande (EM 100) n'est pas actionnée en tant que fonction de machine électrique, les relations de transmission entre le premier arbre de rotation (S101) et le second arbre de rotation (S102) et l'arbre de rotation de type manchon (AS 101) sont dans l'état de libération permettant une rotation inactive ;
-- Lorsque le dispositif de frein commandable (BK101) est commandé pour être dans l'état de libération, et que la machine électrique à double entraînement (EM 100) est actionnée en tant que fonction de machine électrique, les opérations interactives correspondantes de la fonction de générateur d'électricité ou de la fonction de moteur sont mises en oeuvre de manière correspondante entre la partie de rotation intérieure de la machine électrique (EM 101) et la partie de rotation extérieure de la machine électrique (EM 102), selon l'amortissement de la charge externe ou du couple de rotation, la vitesse de rotation et la direction de rotation de l'énergie cinétique de rotation entrée de manière externe soutenue par le premier arbre de rotation (S101), le second arbre de rotation (S102) et l'arbre de rotation de type manchon (AS101) ;
-- Lorsque le dispositif de frein commandable (BK101) est commandé pour être dans l'état de libération, et que la machine électrique double commande (EM 100) n'est pas actionnée en tant que fonction de machine électrique, les relations de transmission entre le premier arbre de rotation (S101) et le second arbre de rotation (S102) et l'arbre de rotation de type manchon sont dans l'état de libération permettant une rotation inactive ;
-- Lorsque le dispositif de frein commandable (BK101) est commandé pour être dans l'état de verrouillage de frein, et que la machine électrique double commande (EM 100) est actionnée en tant que fonction de machine électrique, entre la partie de rotation intérieure de la machine électrique (EM 101) et la partie de rotation extérieure de la machine électrique (EM 102) est actionnée en tant que fonction de générateur d'électricité ou fonction de moteur pour effectuer des opérations interactives selon l'amortissement de la charge externe ou de l'énergie cinétique de rotation entrée de manière externe soutenue par le premier arbre de rotation (S101) et le second arbre de rotation (S102) ;
Les opérations interactives de fonction correspondante mises en oeuvre par la machine électrique double commande (EM 100) mentionnée comprennent la réception de la commande d'entraînement d'énergie électrique entrée de manière externe pour fonctionner en tant que fonction de moteur pour entraîner individuellement la charge, ou le travail avec l'énergie cinétique de rotation entrée de manière externe pour entraîner couramment la charge ;
Les opérations interactives de fonction correspondante mises en oeuvre par la machine électrique double commande (EM 100) mentionnée comprennent la réception de l'entraînement de l'énergie cinétique rotative entrée de manière externe ou de l'entraînement de l'énergie cinétique d'inertie de charge pour être actionnée en tant que fonction de générateur d'électricité, de façon à délivrer l'énergie électrique pour entraîner la charge électrique externe ou charger le dispositif de stockage d'énergie électrique externe.

3. Machine électrique double commande ayant un ensemble à engrenages coniques commandable selon la revendication 1, dans laquelle le premier arbre de rotation (S101) combiné à la roue d'entrée (W101) de l'ensemble à engrenages coniques (EG101) sert d'extrémité de sortie/entrée, le culbuteur (A101) lié par la roue (W103) est combiné à la partie de rotation intérieure de la machine électrique (EM 101), la partie de rotation extérieure de la machine électrique (EM 102) est combinée à l'arbre de rotation de type manchon (AS 101), l'arbre de rotation de type manchon (AS 101) mis en rotation et emmanché sur le premier arbre de rotation (S101) sert d'extrémité de sortie/entrée, la roue de sortie (W102) de l'ensemble à engrenages coniques (EG101) est prévue pour entraîner l'arbre de rotation (S102) pour servir d'extrémité de sortie/entrée, et l'arbre de rotation (S102) est relié à un côté d'action du dispositif de frein commandable (BK102) tandis que l'autre côté d'action du dispositif de frein commandable (BK102) est attaché dans le boîtier (H100), qui est principalement constitué de :
-- Un ensemble à engrenages coniques (EG101) : qui est constitué d'une roue solaire (W101) et d'une roue annulaire extérieure (W102) et d'au moins une roue planétaire (W103), et y compris à travers des engrenages venant en prise l'un avec l'autre, ou à travers des roues de friction effectuant mutuellement des transmissions par friction pour former une fonction d'ensemble à engrenages planétaires, et structuré par le premier arbre de rotation (S101), le second arbre de rotation (S102), le culbuteur (A101), l'arbre de rotation de type manchon (AS 101) et un palier, ainsi qu'installés avec une coque pour être combinés dans le boîtier (H100) ;
Les rapports de vitesse de la roue d'entrée (W101) et de la roue de sortie (W102) de l'ensemble à engrenages coniques (EG101) mentionné sont les mêmes, et les rapports de vitesse entre les deux éléments ci-dessus et la roue (W103) peuvent être identiques ou différents ; ou
Les rapports de vitesse de la roue d'entrée (W101) et de la roue de sortie (W102) de l'ensemble à engrenages coniques (EG 101) mentionné sont différents, les rapports de vitesse entre la roue (W103) et la roue de sortie (W102) peuvent être identiques ou différents, et les rapports de vitesse entre la roue (W103) et la roue d'entrée (W101) peuvent être identiques ou différents ;
-- Le culbuteur (A101) : ayant une extrémité prévue pour permettre à la roue (W103) de tourner et de lier, et l'autre extrémité étant combinée à la partie de rotation intérieure de la machine électrique (EM 101) ;
-- Dispositif de frein commandable (BK101) : qui est constitué d'un dispositif de freinage commandé par une force manuelle ou une force mécanique ou une force hydraulique ou une force pneumatique ou une force électromagnétique, et ayant deux côtés d'action commandables pour les opérations d'un état de verrouillage de frein pour une mise en prise ou un état de libération pour une séparation, dans lequel l'un des côtés d'action est relié à l'arbre de rotation de type manchon (AS 101) ou au culbuteur (A101), et l'autre côté d'action est attaché dans le boîtier (H100) ;
-- Machine électrique double commande (EM 100) : qui est constituée d'une machine électrique double commande synchrone ou non synchrone, à balai ou sans balai, CC ou CA, ayant une partie de rotation intérieure de la machine électrique (EM 101) et une partie de rotation extérieure de la machine électrique (EM 102), et installée avec des couvercles d'extrémité, des paliers et des dispositifs de conduction électrique associés utilisés pour introduire de l'énergie électrique, la partie de rotation intérieure de la machine électrique (EM 101) et la partie de rotation extérieure de la machine électrique (EM 102) sont tournées coaxialement, dans lequel la partie de rotation intérieure de la machine électrique (EM 101) est combinée au culbuteur (A101), et la partie de rotation extérieure de la machine électrique (EM 102) est combinée à l'arbre de rotation de type manchon (AS101) ;
-- Le premier arbre de rotation (S101) combiné à la roue d'entrée (W101) de l'ensemble à engrenages coniques (EG101) sert d'extrémité de sortie/entrée, le culbuteur (A101) lié par la roue (W103) est combiné à la partie de rotation intérieure de la machine électrique (EM101), la partie de rotation extérieure de la machine électrique (EM 102) est combinée à l'arbre de rotation de type manchon (AS 101), et l'arbre de rotation de type manchon (AS 101) mis en rotation et emmanché sur le premier arbre de rotation (S101) sert d'extrémité de sortie/entrée ;
-- La roue de sortie (W102) de l'ensemble à engrenages coniques (EG 101) est prévue pour entraîner le second arbre de rotation (S102) pour servir d'extrémité de sortie/entrée, et le second arbre de rotation (S102) est relié à un côté d'action du dispositif de frein commandable (BK102) tandis que l'autre côté d'action du dispositif de frein commandable (BK102) est attaché dans le boîtier (H100) ;
Les opérations comprennent une ou plusieurs des fonctions suivantes :
-- Lorsque le dispositif de frein commandable (BK102) est commandé pour être dans l'état de libération, et que la machine électrique double commande (EM 100) n'est pas actionnée en tant que fonction de machine électrique, les relations de transmission entre le premier arbre de rotation (S101) et l'arbre de rotation de type manchon (AS101) et le second arbre de rotation (S102) sont dans l'état de libération permettant une rotation inactive ;
-- Lorsque le dispositif de frein commandable (BK101) est commandé pour être dans l'état de libération, et que la machine électrique à double entraînement (EM 100) est actionnée en tant que fonction de machine électrique, les opérations interactives correspondantes de la fonction de générateur d'électricité ou de la fonction de moteur sont mises en oeuvre de manière correspondante entre la partie de rotation intérieure de la machine électrique (EM 101) et la partie de rotation extérieure de la machine électrique (EM 102), selon l'amortissement de la charge externe ou du couple de rotation, la vitesse de rotation et la direction de rotation de l'énergie cinétique de rotation entrée de manière externe soutenue par le premier arbre de rotation (S101), le second arbre de rotation (S102) et l'arbre de rotation de type manchon (AS101) ;
-- Lorsque le dispositif de frein commandable (BK102) est commandé pour être dans l'état de verrouillage de frein, et que la machine électrique double commande (EM 100) n'est pas actionnée en tant que fonction de machine électrique, la relation de transmission entre le premier arbre de rotation (S101) et l'arbre de rotation de type manchon (AS 101) est dans une relation de connexion permettant une transmission ;
-- Lorsque le dispositif de frein commandable (BK101) est commandé pour être dans l'état de verrouillage de frein, et que la machine électrique double commande (EM 100) est actionnée en tant que fonction de machine électrique, entre la partie de rotation intérieure de la machine électrique (EM101) et la partie de rotation extérieure de la machine électrique (EM 102) est actionnée en tant que fonction de générateur d'électricité ou fonction de moteur pour effectuer des opérations interactives selon l'amortissement de la charge externe ou de l'énergie cinétique de rotation entrée de manière externe soutenue par le premier arbre de rotation (S101) et le second arbre de rotation (S102) ;
Les opérations interactives de fonction correspondante mises en oeuvre par la machine électrique double commande (EM 100) mentionnée comprennent la réception de la commande d'entraînement d'énergie électrique entrée de manière externe pour fonctionner en tant que fonction de moteur pour entraîner individuellement la charge, ou le travail avec l'énergie cinétique de rotation entrée de manière externe pour entraîner couramment la charge ;
Les opérations interactives de fonction correspondante mises en oeuvre par la machine électrique double commande (EM 100) mentionnée comprennent la réception de l'entraînement de l'énergie cinétique rotative entrée de manière externe ou de l'entraînement de l'énergie cinétique d'inertie de charge pour être actionnée en tant que fonction de générateur d'électricité, de façon à délivrer l'énergie électrique pour entraîner la charge électrique externe ou charger le dispositif de stockage d'énergie électrique externe.

4. Machine électrique double commande ayant un ensemble à engrenages coniques contrôlables selon la revendication 1, dans laquelle le premier arbre de rotation (S101) est combiné à la roue d'entrée (W101) de l'ensemble à engrenages coniques (EG101) et est prévu pour se relier à un côté d'action du dispositif de frein commandable (BK103) tandis que l'autre côté d'action du dispositif de frein commandable (BK103) est attaché dans le boîtier (H100), l'ensemble à engrenages coniques (EG101) est également attaché dans le boîtier (H100), la roue (W103) de l'ensemble à engrenages coniques (EG101) est prévue pour lier le culbuteur (A101) et est combinée à la partie de rotation intérieure de la machine électrique (EM101), la partie de rotation extérieure de la machine électrique (EM102) est reliée à l'arbre de rotation de type manchon (AS 101), l'arbre de rotation de type manchon (AS 101) mis en rotation et emmanché sur le premier arbre de rotation (S101) sert d'extrémité de sortie/entrée, et la roue de sortie (W102) de l'ensemble à engrenages coniques (EG 101) est prévue pour entraîner l'arbre de rotation (S102) pour servir d'extrémité de sortie/entrée, qui est principalement constituée de :
-- Un ensemble à engrenages coniques (EG101) : qui est constitué d'une roue solaire (W101) et d'une roue annulaire extérieure (W102) et d'au moins une roue planétaire (W103), et y compris à travers des engrenages venant en prise l'un avec l'autre, ou à travers des roues de friction effectuant mutuellement des transmissions par friction pour former une fonction d'ensemble à engrenages planétaires, et structuré par le premier arbre de rotation (S101), le second arbre de rotation (S102), le culbuteur (A101), l'arbre de rotation de type manchon (AS 101) et un palier, ainsi qu'installés avec une coque pour être combinés dans le boîtier (H100) ;
Les rapports de vitesse de la roue d'entrée (W101) et de la roue de sortie (W102) de l'ensemble à engrenages coniques (EG101) mentionné sont identiques, et les rapports de vitesse entre les deux éléments ci-dessus et la roue (W103) peuvent être identiques ou différents ; ou
Les rapports de vitesse de la roue d'entrée (W101) et de la roue de sortie (W102) de l'ensemble à engrenages coniques (EG101) mentionné sont différents, les rapports de vitesse entre la roue (W103) et la roue de sortie (W102) peuvent être identiques ou différents, et les rapports de vitesse entre la roue (W103) et la roue d'entrée (W101) peuvent être identiques ou différents ;
-- Le culbuteur (A101) : ayant une extrémité prévue pour permettre à la roue (W103) de tourner et de lier, et l'autre extrémité étant combinée à la partie de rotation intérieure de la machine électrique (EM 101) ;
-- Dispositif de frein commandable (BK101) : qui est constitué d'un dispositif de freinage commandé par une force manuelle ou une force mécanique ou une force hydraulique ou une force pneumatique ou une force électromagnétique, et ayant deux côtés d'action commandables pour les opérations d'un état de verrouillage de frein pour une mise en prise ou un état de libération pour une séparation, dans lequel l'un des côtés d'action est relié à l'arbre de rotation de type manchon (AS 101) ou au culbuteur (A101), et l'autre côté d'action est attaché dans le boîtier (H100) ;
-- Machine électrique double commande (EM 100) : qui est constituée d'une machine électrique double commande synchrone ou non synchrone, à balai ou sans balai, CC ou CA, ayant une partie de rotation interne de la machine électrique (EM 101) et une partie de rotation externe de la machine électrique (EM 102), et installée avec des couvercles d'extrémité, des paliers et des dispositifs de conduction électrique associés utilisés pour introduire de l'énergie électrique, la partie de rotation interne de la machine électrique (EM 101) et la partie de rotation externe de la machine électrique (EM 102) sont tournées coaxialement, dans lequel la partie de rotation interne de la machine électrique (EM 101) est combinée avec le culbuteur (A101), et la partie de rotation externe de la machine électrique (EM 102) est combinée avec l'arbre de rotation de type manchon (AS101) ;
-- Le premier arbre de rotation (S101) combiné à la roue d'entrée (W101) de l'ensemble à engrenages coniques (EG101) sert d'extrémité de sortie/entrée et est prévu pour se relier à un côté d'action du dispositif de frein commandable (BK103) tandis que l'autre côté d'action du dispositif de frein commandable (BK103) est attaché dans le boîtier (H100) ;
-- La roue (W103) de l'ensemble à engrenages coniques (EG101) est prévue pour relier le culbuteur (A101) et est combinée à la partie de rotation intérieure de la machine électrique (EM101), la partie de rotation extérieure de la machine électrique (EM102) est reliée à l'arbre de rotation de type manchon (AS 101), l'arbre de rotation de type manchon (AS 101) mis en rotation et emmanché sur le premier arbre de rotation (S101) sert d'extrémité de sortie/entrée, la roue de sortie (W102) de l'ensemble à engrenages coniques (EG101) est prévue pour entraîner le second arbre de rotation (S102) pour servir d'extrémité de sortie/entrée, et l'arbre de rotation (S101) combiné à la roue d'entrée (W101) sert également d'extrémité de sortie/entrée ;
Les opérations comprennent une ou plusieurs des fonctions suivantes :
-- Lorsque le dispositif de frein commandable (BK103) est commandé pour être dans l'état de libération, et que la machine électrique double commande (EM 100) n'est pas actionnée en tant que fonction de machine électrique, la relation de transmission entre le premier arbre de rotation (S101) et l'arbre de rotation de type manchon (AS101) et le second arbre de rotation (S102) sont dans l'état de libération permettant une rotation inactive ;
-- Lorsque le dispositif de frein commandable (BK101) est commandé pour être dans l'état de libération, et que la machine électrique à double entraînement (EM 100) est actionnée en tant que fonction de machine électrique, les opérations interactives correspondantes de la fonction de générateur d'électricité ou de la fonction de moteur sont mises en oeuvre de manière correspondante entre la partie de rotation intérieure de la machine électrique (EM 101) et la partie de rotation extérieure de la machine électrique (EM 102), selon l'amortissement de la charge externe ou du couple de rotation, la vitesse de rotation et la direction de rotation de l'énergie cinétique de rotation entrée de manière externe soutenue par le premier arbre de rotation (S101), le second arbre de rotation (S102) et l'arbre de rotation de type manchon (AS101) ;
-- Lorsque le dispositif de frein commandable (BK101) est commandé pour être dans l'état de libération, et que la machine électrique double commande (EM 100) n'est pas actionnée en tant que fonction de machine électrique, les relations de transmission entre le premier arbre de rotation (S101) et le second arbre de rotation (S102) et l'arbre de rotation de type manchon (AS 101) sont dans l'état de libération permettant une rotation inactive ;
-- Lorsque le dispositif de frein commandable (BK101) est commandé pour être dans l'état de verrouillage de frein, et que la machine électrique double commande (EM 100) est actionnée en tant que fonction de machine électrique, entre la partie de rotation intérieure de la machine électrique (EM101) et la partie de rotation extérieure de la machine électrique (EM 102) est actionnée en tant que fonction de générateur d'électricité ou fonction de moteur pour effectuer des opérations interactives selon l'amortissement de la charge externe ou de l'énergie cinétique de rotation entrée de manière externe soutenue par le premier arbre de rotation (S101) et le second arbre de rotation (S102) ;
Les opérations interactives de fonction correspondante mises en oeuvre par la machine électrique double commande (EM 100) mentionnée comprennent la réception de la commande d'entraînement d'énergie électrique entrée de manière externe pour fonctionner en tant que fonction de moteur pour entraîner individuellement la charge, ou le travail avec l'énergie cinétique de rotation entrée de manière externe pour entraîner couramment la charge ;
Les opérations interactives de fonction correspondante mises en oeuvre par la machine électrique double commande (EM 100) mentionnée comprennent la réception de l'entraînement de l'énergie cinétique rotative entrée de manière externe ou de l'entraînement de l'énergie cinétique d'inertie de charge pour être actionnée en tant que fonction de générateur d'électricité, de façon à délivrer l'énergie électrique pour entraîner la charge électrique externe ou charger le dispositif de stockage d'énergie électrique externe.

5. Machine électrique double commande ayant un ensemble à engrenages coniques commandable selon la revendication 1, dans laquelle le premier arbre de rotation (S101) combiné à la roue d'entrée (W101) de l'ensemble à engrenages coniques (EG101) sert d'extrémité de sortie/entrée, le culbuteur (A101) lié par la roue (W103) est combiné à la partie de rotation intérieure de la machine électrique (EM 101), la partie de rotation extérieure de la machine électrique (EM 102) est combinée à l'arbre de rotation de type manchon (AS 101), l'arbre de rotation de type manchon (AS 101) mis en rotation et emmanché sur le premier arbre de rotation (S101) sert d'extrémité de sortie/entrée, la roue de sortie (W102) de l'ensemble à engrenages coniques (EG101) est prévue pour entraîner l'arbre de rotation (S102) pour servir d'extrémité de sortie/entrée, et l'arbre de rotation (S102) est relié à un côté d'action du dispositif de frein commandable (BK102) tandis que l'autre côté d'action du dispositif de frein commandable (BK102) est attaché dans le boîtier (H100), qui est principalement constitué de :
-- Un ensemble à engrenages coniques (EG101) : qui est constitué d'une roue solaire (W101) et d'une roue annulaire extérieure (W102) et d'au moins une roue planétaire (W103), et y compris à travers des engrenages venant en prise l'un avec l'autre, ou à travers des roues de friction effectuant mutuellement des transmissions par friction pour former une fonction d'ensemble à engrenages planétaires, et structuré par le premier arbre de rotation (S101), le second arbre de rotation (S102), le culbuteur (A101), l'arbre de rotation de type manchon (AS 101) et un palier, ainsi qu'installés avec une coque pour être combinés dans le boîtier (H100) ;
Les rapports de vitesse de la roue d'entrée (W101) et de la roue de sortie (W102) de l'ensemble à engrenages coniques (EG101) mentionné sont identiques, et les rapports de vitesse entre les deux éléments ci-dessus et la roue (W103) peuvent être identiques ou différents ; ou
Les rapports de vitesse de la roue d'entrée (W101) et de la roue de sortie (W102) de l'ensemble à engrenages coniques (EG 101) mentionné sont différents, les rapports de vitesse entre la roue (W103) et la roue de sortie (W102) peuvent être identiques ou différents, et les rapports de vitesse entre la roue (W103) et la roue d'entrée (W101) peuvent être identiques ou différents ;
-- Le culbuteur (A101) : ayant une extrémité prévue pour permettre à la roue (W103) de tourner et de lier, et l'autre extrémité étant combinée à la partie de rotation intérieure de la machine électrique (EM 101) ;
-- Dispositif de frein commandable (BK101) : qui est constitué d'un dispositif de freinage commandé par une force manuelle ou une force mécanique ou une force hydraulique ou une force pneumatique ou une force électromagnétique, et ayant deux côtés d'action commandables pour les opérations d'un état de verrouillage de frein pour une mise en prise ou un état de libération pour une séparation, dans lequel l'un des côtés d'action est relié à l'arbre de rotation de type manchon (AS 101) ou au culbuteur (A101), et l'autre côté d'action est attaché dans le boîtier (H100) ;
-- Dispositif de frein commandable (BK101) : qui est constitué d'un dispositif de freinage commandé par une force manuelle ou une force mécanique ou une force hydraulique ou une force pneumatique ou une force électromagnétique, et ayant deux côtés d'action commandables pour les opérations d'un état de verrouillage de frein pour une mise en prise ou un état de libération pour une séparation, dans lequel l'un des côtés d'action est relié à l'arbre de rotation de type manchon (AS 101) ou au culbuteur (A101), et l'autre côté d'action est attaché dans le boîtier (H100) ;
-- Machine électrique double commande (EM 100) : qui est constituée d'une machine électrique double commande synchrone ou non synchrone, à balai ou sans balai, CC ou CA, ayant une partie de rotation intérieure de la machine électrique (EM 101) et une partie de rotation extérieure de la machine électrique (EM 102), et installée avec des couvercles d'extrémité, des paliers et des dispositifs de conduction électrique associés utilisés pour introduire de l'énergie électrique, la partie de rotation intérieure de la machine électrique (EM 101) et la partie de rotation extérieure de la machine électrique (EM 102) sont tournées coaxialement, dans lequel la partie de rotation intérieure de la machine électrique (EM 101) est combinée au culbuteur (A101), et la partie de rotation extérieure de la machine électrique (EM 102) est combinée à l'arbre de rotation de type manchon (AS101) ;
Machine électrique double commande ayant un ensemble à engrenages coniques commandable selon la revendication 1, dans laquelle le premier arbre de rotation (S101) combiné à la roue d'entrée (W101) de l'ensemble à engrenages coniques (EG101) sert d'extrémité de sortie/entrée, le culbuteur (A101) lié par la roue (W103) est combiné à la partie de rotation intérieure de la machine électrique (EM 101), la partie de rotation extérieure de la machine électrique (EM 102) est combinée à l'arbre de rotation de type manchon (AS 101), l'arbre de rotation de type manchon (AS 101) mis en rotation et emmanché sur le premier arbre de rotation (S101) sert d'extrémité de sortie/entrée, la roue de sortie (W102) de l'ensemble à engrenages coniques (EG101) est prévue pour entraîner l'arbre de rotation (S102) pour servir d'extrémité de sortie/entrée, et l'arbre de rotation (S102) est relié à un côté d'action du dispositif de frein commandable (BK102) tandis que l'autre côté d'action du dispositif de frein commandable (BK102) est attaché dans le boîtier (H100), qui est principalement constitué de :
Les opérations comprennent une ou plusieurs des fonctions suivantes :
-- Lorsque le dispositif de frein commandable (BK101) est commandé pour être dans l'état de libération, et que la machine électrique double commande (EM 100) n'est pas actionnée en tant que fonction de machine électrique, les relations de transmission entre le premier arbre de rotation (S101) et le second arbre de rotation (S102) et l'arbre de rotation de type manchon (AS 101) sont dans l'état de libération permettant une rotation inactive ;
-- Lorsque le dispositif de frein commandable (BK101) est commandé pour être dans l'état de libération, et que la machine électrique à double entraînement (EM 100) est actionnée en tant que fonction de machine électrique, les opérations interactives correspondantes de la fonction de générateur d'électricité ou de la fonction de moteur sont mises en oeuvre de manière correspondante entre la partie de rotation intérieure de la machine électrique (EM 101) et la partie de rotation extérieure de la machine électrique (EM 102), selon l'amortissement de la charge externe ou du couple de rotation, la vitesse de rotation et la direction de rotation de l'énergie cinétique de rotation entrée de manière externe soutenue par le premier arbre de rotation (S101), le second arbre de rotation (S102) et l'arbre de rotation de type manchon (AS101) ;
-- Lorsque le dispositif de frein commandable (BK101) est commandé pour être dans l'état de libération, et que la machine électrique double commande (EM 100) n'est pas actionnée en tant que fonction de machine électrique, les relations de transmission entre le premier arbre de rotation (S101) et le second arbre de rotation (S102) et l'arbre de rotation de type manchon (AS 101) sont dans l'état de libération permettant une rotation inactive ;
-- Lorsque le dispositif de frein commandable (BK101) est commandé pour être dans l'état de verrouillage de frein, et que la machine électrique double commande (EM 100) est actionnée en tant que fonction de machine électrique, entre la partie de rotation intérieure de la machine électrique (EM101) et la partie de rotation extérieure de la machine électrique (EM 102) est actionnée en tant que fonction de générateur d'électricité ou fonction de moteur pour effectuer des opérations interactives selon l'amortissement de la charge externe ou de l'énergie cinétique de rotation entrée de manière externe soutenue par le premier arbre de rotation (S101) et le second arbre de rotation (S102) ;
-- Lorsque le dispositif de frein commandable (BK101) est commandé pour être dans l'état de libération et le dispositif de frein commandable (BK102) est commandé pour être dans l'état de verrouillage de frein, et que la machine électrique double commande (EM 100) n'est pas actionnée en tant que fonction de machine électrique, la relation de transmission entre le premier arbre de rotation (S101) et l'arbre de rotation de type manchon (AS 101) est dans une relation de connexion permettant une transmission ;
-- Lorsque le dispositif de frein commandable (BK101) est commandé pour être dans l'état de verrouillage de frein, et que la machine électrique double commande (EM 100) est actionnée en tant que fonction de machine électrique, entre la partie de rotation intérieure de la machine électrique (EM101) et la partie de rotation extérieure de la machine électrique (EM 102) est actionnée en tant que fonction de générateur d'électricité ou fonction de moteur pour effectuer des opérations interactives selon l'amortissement de la charge externe ou de l'énergie cinétique de rotation entrée de manière externe soutenue par le premier arbre de rotation (S101) et le second arbre de rotation (S102) ;
-- Lorsque le dispositif de frein commandable (BK101) et le dispositif de frein commandable (BK102) sont tous deux commandés pour être dans l'état de verrouillage de frein, les relations entre le premier arbre de rotation (S101), le second arbre de rotation (S102) et l'arbre de rotation de type manchon (AS101) sont toutes dans l'état de verrouillage de frein ;
Les opérations interactives de fonction correspondante mises en oeuvre par la machine électrique double commande (EM 100) mentionnée comprennent la réception de la commande d'entraînement d'énergie électrique entrée de manière externe pour fonctionner en tant que fonction de moteur pour entraîner individuellement la charge, ou le travail avec l'énergie cinétique de rotation entrée de manière externe pour entraîner couramment la charge ;
Les opérations interactives de fonction correspondante mises en oeuvre par la machine électrique double commande (EM 100) mentionnée comprennent la réception de l'entraînement de l'énergie cinétique rotative entrée de manière externe ou de l'entraînement de l'énergie cinétique d'inertie de charge pour être actionnée en tant que fonction de générateur d'électricité, de façon à délivrer l'énergie électrique pour entraîner la charge électrique externe ou charger le dispositif de stockage d'énergie électrique externe.

6. Machine électrique double commande ayant un ensemble à engrenages coniques contrôlables selon la revendication 1, dans laquelle le premier arbre de rotation (S101) est combiné à la roue d'entrée (W101) de l'ensemble à engrenages coniques (EG101) et est prévu pour se relier à un côté d'action du dispositif de frein commandable (BK103) tandis que l'autre côté d'action du dispositif de frein commandable (BK103) est attaché dans le boîtier (H100), l'ensemble à engrenages coniques (EG101) est également attaché dans le boîtier (H100), la roue (W103) de l'ensemble à engrenages coniques (EG101) est prévue pour lier le culbuteur (A101) et est combinée à la partie de rotation intérieure de la machine électrique (EM101), la partie de rotation extérieure de la machine électrique (EM102) est reliée à l'arbre de rotation de type manchon (AS 101), l'arbre de rotation de type manchon (AS 101) mis en rotation et emmanché sur le premier arbre de rotation (S101) sert d'extrémité de sortie/entrée, et la roue de sortie (W102) de l'ensemble à engrenages coniques (EG 101) est prévue pour entraîner l'arbre de rotation (S102) pour servir d'extrémité de sortie/entrée, qui est principalement constituée de :
-- Un ensemble à engrenages coniques (EG101) : qui est constitué d'une roue solaire (W101) et d'une roue annulaire extérieure (W102) et d'au moins une roue planétaire (W103), et y compris à travers des engrenages venant en prise l'un avec l'autre, ou à travers des roues de friction effectuant mutuellement des transmissions par friction pour former une fonction d'ensemble à engrenages planétaires, et structuré par le premier arbre de rotation (S101), le second arbre de rotation (S102), le culbuteur (A101), l'arbre de rotation de type manchon (AS 101) et un palier, ainsi qu'installés avec une coque pour être combinés dans le boîtier (H100) ;
Les rapports de vitesse de la roue d'entrée (W101) et de la roue de sortie (W102) de l'ensemble à engrenages coniques (EG101) mentionné sont les mêmes, et les rapports de vitesse entre les deux éléments ci-dessus et la roue (W103) peuvent être identiques ou différents ; ou
les rapports de vitesse de la roue d'entrée (W101) et de la roue de sortie (W102) de l'ensemble à engrenages coniques (EG101) mentionné sont différents, les rapports de vitesse entre la roue (W103) et la roue de sortie (W102) peuvent être identiques ou différents, et les rapports de vitesse entre la roue (W103) et la roue d'entrée (W101) peuvent être identiques ou différents ;
-- Le culbuteur (A101) : ayant une extrémité prévue pour permettre à la roue (W103) de tourner et de lier, et l'autre extrémité étant combinée à la partie de rotation intérieure de la machine électrique (EM 101) ;
-- Dispositif de frein commandable (BK101) : qui est constitué d'un dispositif de freinage commandé par une force manuelle ou une force mécanique ou une force hydraulique ou une force pneumatique ou une force électromagnétique, et ayant deux côtés d'action commandables pour les opérations d'un état de verrouillage de frein pour une mise en prise ou un état de libération pour une séparation, dans lequel l'un des côtés d'action est relié à l'arbre de rotation de type manchon (AS 101) ou au culbuteur (A101), et l'autre côté d'action est attaché dans le boîtier (H100) ;
-- Dispositif de frein commandable (BK101) : qui est constitué d'un dispositif de freinage commandé par une force manuelle ou une force mécanique ou une force hydraulique ou une force pneumatique ou une force électromagnétique, et ayant deux côtés d'action commandables pour les opérations d'un état de verrouillage de frein pour une mise en prise ou un état de libération pour une séparation, dans lequel l'un des côtés d'action est relié à l'arbre de rotation de type manchon (AS 101) ou au culbuteur (A101), et l'autre côté d'action est attaché dans le boîtier (H100) ;
-- Machine électrique double commande (EM 100) : qui est constituée d'une machine électrique double commande synchrone ou non synchrone, à balai ou sans balai, CC ou CA, ayant une partie de rotation intérieure de la machine électrique (EM 101) et une partie de rotation extérieure de la machine électrique (EM 102), et installée avec des couvercles d'extrémité, des paliers et des dispositifs de conduction électrique associés utilisés pour introduire de l'énergie électrique, la partie de rotation intérieure de la machine électrique (EM 101) et la partie de rotation extérieure de la machine électrique (EM 102) sont tournées coaxialement, dans lequel la partie de rotation intérieure de la machine électrique (EM 101) est combinée au culbuteur (A101), et la partie de rotation extérieure de la machine électrique (EM 102) est combinée à l'arbre de rotation de type manchon (AS101) ;
-- Le premier arbre de rotation (S101) combiné à la roue d'entrée (W101) de l'ensemble à engrenages coniques (EG101) sert d'extrémité de sortie/entrée et est prévu pour se relier à un côté d'action du dispositif de frein commandable (BK103) tandis que l'autre côté d'action du dispositif de frein commandable (BK103) est attaché dans le boîtier (H100) ; la roue de sortie (W102) de l'ensemble à engrenages coniques (EG101) est combinée au second arbre de rotation (S102) pour servir d'extrémité de sortie/entrée et est prévue pour se relier à un côté d'action du dispositif de frein commandable (BK102) tandis que l'autre côté d'action du dispositif de frein commandable (BK102) est attaché dans le boîtier (H100), le culbuteur (A101) lié par la roue (W103) est combiné à la partie de rotation intérieure de la machine électrique (EM101), la partie de rotation extérieure de la machine électrique (EM102) est combinée à l'arbre de rotation de type manchon (AS 101), et l'arbre de rotation de type manchon (AS 101) mis en rotation et emmanché sur le premier arbre de rotation (S101) sert d'extrémité de sortie/entrée ;
Les opérations comprennent une ou plusieurs des fonctions suivantes :
-- Lorsque le dispositif de frein commandable (BK101) est commandé pour être dans l'état de libération, et que la machine électrique double commande (EM 100) n'est pas actionnée en tant que fonction de machine électrique, les relations de transmission entre le premier arbre de rotation (S101) et le second arbre de rotation (S102) et l'arbre de rotation de type manchon (AS 101) sont dans l'état de libération permettant une rotation inactive ;
-- Lorsque le dispositif de frein commandable (BK101) est commandé pour être dans l'état de libération, et que la machine électrique à double entraînement (EM 100) est actionnée en tant que fonction de machine électrique, les opérations interactives correspondantes de la fonction de générateur d'électricité ou de la fonction de moteur sont mises en oeuvre de manière correspondante entre la partie de rotation intérieure de la machine électrique (EM 101) et la partie de rotation extérieure de la machine électrique (EM 102), selon l'amortissement de la charge externe ou du couple de rotation, la vitesse de rotation et la direction de rotation de l'énergie cinétique de rotation entrée de manière externe soutenue par le premier arbre de rotation (S101), le second arbre de rotation (S102) et l'arbre de rotation de type manchon (AS101) ;
-- Lorsque le dispositif de frein commandable (BK101) est commandé pour être dans l'état de libération, et que la machine électrique double commande (EM 100) n'est pas actionnée en tant que fonction de machine électrique, les relations de transmission entre le premier arbre de rotation (S101) et le second arbre de rotation (S102) et l'arbre de rotation de type manchon (AS 101) sont dans l'état de libération permettant une rotation inactive ;
-- Lorsque le dispositif de frein commandable (BK101) est commandé pour être dans l'état de verrouillage de frein, et que la machine électrique double commande (EM 100) est actionnée en tant que fonction de machine électrique, entre la partie de rotation intérieure de la machine électrique (EM101) et la partie de rotation extérieure de la machine électrique (EM 102) est actionnée en tant que fonction de générateur d'électricité ou fonction de moteur pour effectuer des opérations interactives selon l'amortissement de la charge externe ou de l'énergie cinétique de rotation entrée de manière externe soutenue par le premier arbre de rotation (S101) et le second arbre de rotation (S102) ;
-- Lorsque le dispositif de frein commandable (BK103) est commandé pour être dans l'état de libération et le dispositif de frein commandable (BK102) est commandé pour être dans l'état de verrouillage de frein, et que la machine électrique double commande (EM 100) n'est pas actionnée en tant que fonction de machine électrique, la relation de transmission entre le premier arbre de rotation (S101) et l'arbre de rotation de type manchon (AS 101) est dans une relation de connexion permettant une transmission ;
-- Lorsque le dispositif de frein commandable (BK101) est commandé pour être dans l'état de verrouillage de frein, et que la machine électrique double commande (EM 100) est actionnée en tant que fonction de machine électrique, entre la partie de rotation intérieure de la machine électrique (EM101) et la partie de rotation extérieure de la machine électrique (EM 102) est actionnée en tant que fonction de générateur d'électricité ou fonction de moteur pour effectuer des opérations interactives selon l'amortissement de la charge externe ou de l'énergie cinétique de rotation entrée de manière externe soutenue par le premier arbre de rotation (S101) et le second arbre de rotation (S102) ;
-- Lorsque le dispositif de frein commandable (BK101) et le dispositif de frein commandable (BK102) sont tous deux commandés pour être dans l'état de verrouillage de frein, les relations entre le premier arbre de rotation (S101), le second arbre de rotation (S102) et l'arbre de rotation de type manchon (AS101) sont toutes dans l'état de verrouillage de frein ;
Les opérations interactives de fonction correspondante mises en oeuvre par la machine électrique double commande (EM 100) mentionnée comprennent la réception de la commande d'entraînement d'énergie électrique entrée de manière externe pour fonctionner en tant que fonction de moteur pour entraîner individuellement la charge, ou le travail avec l'énergie cinétique de rotation entrée de manière externe pour entraîner couramment la charge ;
Les opérations interactives de fonction correspondante mises en oeuvre par la machine électrique double commande (EM 100) mentionnée comprennent la réception de l'entraînement de l'énergie cinétique rotative entrée de manière externe ou de l'entraînement de l'énergie cinétique d'inertie de charge pour être actionnée en tant que fonction de générateur d'électricité, de façon à délivrer l'énergie électrique pour entraîner la charge électrique externe ou charger le dispositif de stockage d'énergie électrique externe.

7. Machine électrique double commande ayant un ensemble à engrenages coniques contrôlable selon la revendication 1, dans laquelle le premier arbre de rotation (S101) est combiné à la roue d'entrée (W101) de l'ensemble à engrenages coniques (EG101) pour servir d'extrémité de sortie/entrée, le culbuteur (A101) lié par la roue (W103) est combiné à la partie de rotation intérieure de la machine électrique (EM 101), la partie de rotation extérieure de la machine électrique (EM 102) est combinée à l'arbre de rotation de type manchon (AS 101), l'arbre de rotation de type manchon (AS 101) mis en rotation et emmanché sur le premier arbre de rotation (S101) sert d'extrémité de sortie/entrée et est prévu pour relier un côté d'action du dispositif de frein commandable (BK101) tandis que l'autre côté d'action du dispositif de frein commandable (BK101) est attaché dans le boîtier (H100), l'ensemble à engrenages coniques (EG101) est également attaché dans le boîtier (H100), et la roue de sortie (W102) de l'ensemble à engrenages coniques (EG101) est prévue pour entraîner l'arbre de rotation (S102) pour servir d'extrémité de sortie/entrée, qui est principalement constituée de ;
-- Un ensemble à engrenages coniques (EG101) : qui est constitué d'une roue solaire (W101) et d'une roue annulaire extérieure (W102) et d'au moins une roue planétaire (W103), et y compris à travers des engrenages venant en prise l'un avec l'autre, ou à travers des roues de friction effectuant mutuellement des transmissions par friction pour former une fonction d'ensemble à engrenages planétaires, et structuré par le premier arbre de rotation (S101), le second arbre de rotation (S102), le culbuteur (A101), l'arbre de rotation de type manchon (AS 101) et un palier, ainsi qu'installés avec une coque pour être combinés dans le boîtier (H100) ;
Les rapports de vitesse de la roue d'entrée (W101) et de la roue de sortie (W102) de l'ensemble à engrenages coniques (EG101) mentionné sont identiques, et les rapports de vitesse entre les deux éléments ci-dessus et la roue (W103) peuvent être identiques ou différents ; ou
Les rapports de vitesse de la roue d'entrée (W101) et de la roue de sortie (W102) de l'ensemble à engrenages coniques (EG101) mentionné sont différents, les rapports de vitesse entre la roue (W103) et la roue de sortie (W102) peuvent être identiques ou différents, et les rapports de vitesse entre la roue (W103) et la roue d'entrée (W101) peuvent être identiques ou différents ;
-- Le culbuteur (A101) : ayant une extrémité prévue pour permettre à la roue (W103) de tourner et de lier, et l'autre extrémité étant combinée à la partie de rotation intérieure de la machine électrique (EM 101) ;
-- Dispositif de frein commandable (BK101) : qui est constitué d'un dispositif de freinage commandé par une force manuelle ou une force mécanique ou une force hydraulique ou une force pneumatique ou une force électromagnétique, et ayant deux côtés d'action commandables pour les opérations d'un état de verrouillage de frein pour une mise en prise ou un état de libération pour une séparation, dans lequel l'un des côtés d'action est relié à l'arbre de rotation de type manchon (AS 101) ou au culbuteur (A101), et l'autre côté d'action est attaché dans le boîtier (H100) ;
-- Dispositif de frein commandable (BK101) : qui est constitué d'un dispositif de freinage commandé par une force manuelle ou une force mécanique ou une force hydraulique ou une force pneumatique ou une force électromagnétique, et ayant deux côtés d'action commandables pour les opérations d'un état de verrouillage de frein pour une mise en prise ou un état de libération pour une séparation, dans lequel l'un des côtés d'action est relié à l'arbre de rotation de type manchon (AS 101) ou au culbuteur (A101), et l'autre côté d'action est attaché dans le boîtier (H100) ;
-- Machine électrique double commande (EM 100) : qui est constituée d'une machine électrique double commande synchrone ou non synchrone, à balai ou sans balai, CC ou CA, ayant une partie de rotation intérieure de la machine électrique (EM 101) et une partie de rotation extérieure de la machine électrique (EM 102), et installée avec des couvercles d'extrémité, des paliers et des dispositifs de conduction électrique associés utilisés pour introduire de l'énergie électrique, la partie de rotation intérieure de la machine électrique (EM 101) et la partie de rotation extérieure de la machine électrique (EM 102) sont tournées coaxialement, dans lequel la partie de rotation intérieure de la machine électrique (EM 101) est combinée au culbuteur (A101), et la partie de rotation extérieure de la machine électrique (EM 102) est combinée à l'arbre de rotation de type manchon (AS101) ;
-- Le premier arbre de rotation (S101) combiné à la roue d'entrée (W101) de l'ensemble à engrenages coniques (EG101) sert d'extrémité de sortie/entrée et est prévue pour se relier à un côté d'action du dispositif de frein commandable (BK103) tandis que l'autre côté d'action du dispositif de frein commandable (BK103) est attaché dans le boîtier (H100) ;
-- Le premier arbre de rotation (S101) combiné à la roue d'entrée (W101) de l'ensemble à engrenages coniques (EG101) sert d'extrémité de sortie/entrée, le culbuteur (A101) lié par la roue (W103) est combiné à la partie de rotation intérieure de la machine électrique (EM101), la partie de rotation extérieure de la machine électrique (EM 102) est combinée à l'arbre de rotation de type manchon (AS101), l'arbre de rotation de type manchon (AS101) mis en rotation et emmanché sur le premier arbre de rotation (S101) sert d'extrémité de sortie/entrée, l'arbre de rotation de type manchon (AS 101) est relié à un côté d'action du dispositif de frein commandable (BK101) alors que l'autre côté d'action du dispositif de frein commandable (BK101) est attaché dans le boîtier (H100), la roue de sortie (W102) de l'ensemble à engrenages coniques (EG101) est prévue pour entraîner l'arbre de rotation (S102) pour servir d'extrémité de sortie/entrée, et le premier arbre de rotation (S101) combiné à la roue d'entrée (W101) sert également d'extrémité de sortie/entrée ;
Les opérations comprennent une ou plusieurs des fonctions suivantes :
-- Lorsque le dispositif de frein commandable (BK101) est commandé pour être dans l'état de libération, et que la machine électrique double commande (EM 100) n'est pas actionnée en tant que fonction de machine électrique, les relations de transmission entre le premier arbre de rotation (S101) et le second arbre de rotation (S102) et l'arbre de rotation de type manchon (AS 101) sont dans l'état de libération permettant une rotation inactive ;
-- Lorsque le dispositif de frein commandable (BK101) est commandé pour être dans l'état de libération, et que la machine électrique à double entraînement (EM 100) est actionnée en tant que fonction de machine électrique, les opérations interactives correspondantes de la fonction de générateur d'électricité ou de la fonction de moteur sont mises en oeuvre de manière correspondante entre la partie de rotation intérieure de la machine électrique (EM 101) et la partie de rotation extérieure de la machine électrique (EM 102), selon l'amortissement de la charge externe ou du couple de rotation, la vitesse de rotation et la direction de rotation de l'énergie cinétique de rotation entrée de manière externe soutenue par le premier arbre de rotation (S101), le second arbre de rotation (S102) et l'arbre de rotation de type manchon (AS101) ;
-- Lorsque le dispositif de frein commandable (BK101) est commandé pour être dans l'état de libération, et que la machine électrique double commande (EM 100) n'est pas actionnée en tant que fonction de machine électrique, les relations de transmission entre le premier arbre de rotation (S101) et le second arbre de rotation (S102) et l'arbre de rotation de type manchon (AS 101) sont dans l'état de libération permettant une rotation inactive ;
-- Lorsque le dispositif de frein commandable (BK101) est commandé pour être dans l'état de verrouillage de frein, et que la machine électrique double commande (EM 100) est actionnée en tant que fonction de machine électrique, entre la partie de rotation intérieure de la machine électrique (EM101) et la partie de rotation extérieure de la machine électrique (EM 102) est actionnée en tant que fonction de générateur d'électricité ou fonction de moteur pour effectuer des opérations interactives selon l'amortissement de la charge externe ou de l'énergie cinétique de rotation entrée de manière externe soutenue par le premier arbre de rotation (S101) et le second arbre de rotation (S102) ;
-- Lorsque le dispositif de frein commandable (BK101) est commandé pour être dans l'état de libération et le dispositif de frein commandable (BK103) est commandé pour être dans l'état de verrouillage de frein, et que la machine électrique double commande (EM 100) n'est pas actionnée en tant que fonction de machine électrique, la relation de transmission entre le second arbre de rotation (S102) et l'arbre de rotation de type manchon (AS 101) est dans une relation de connexion permettant une transmission ;
-- Lorsque le dispositif de frein commandable (BK101) est commandé pour être dans l'état de verrouillage de frein, et que la machine électrique double commande (EM 100) est actionnée en tant que fonction de machine électrique, entre la partie de rotation intérieure de la machine électrique (EM101) et la partie de rotation extérieure de la machine électrique (EM 102) est actionnée en tant que fonction de générateur d'électricité ou fonction de moteur pour effectuer des opérations interactives selon l'amortissement de la charge externe ou de l'énergie cinétique de rotation entrée de manière externe soutenue par le premier arbre de rotation (S101) et le second arbre de rotation (S102) ;
-- Lorsque le dispositif de frein commandable (BK101) et le dispositif de frein commandable (BK102) sont tous deux commandés pour être dans l'état de verrouillage de frein, les relations entre le premier arbre de rotation (S101), le second arbre de rotation (S102) et l'arbre de rotation de type manchon (AS101) sont toutes dans l'état de verrouillage de frein ;
Les opérations interactives de fonction correspondante mises en oeuvre par la machine électrique double commande (EM 100) mentionnée comprennent la réception de la commande d'entraînement d'énergie électrique entrée de manière externe pour fonctionner en tant que fonction de moteur pour entraîner individuellement la charge, ou le travail avec l'énergie cinétique de rotation entrée de manière externe pour entraîner couramment la charge ;
Les opérations interactives de fonction correspondante mises en oeuvre par la machine électrique double commande (EM 100) mentionnée comprennent la réception de l'entraînement de l'énergie cinétique rotative entrée de manière externe ou de l'entraînement de l'énergie cinétique d'inertie de charge pour être actionnée en tant que fonction de générateur d'électricité, de façon à délivrer l'énergie électrique pour entraîner la charge électrique externe ou charger le dispositif de stockage d'énergie électrique externe.

8. Machine électrique double commande ayant un ensemble à engrenages coniques contrôlable selon la revendication 1, dans laquelle le premier arbre de rotation (S101) est combiné à la roue d'entrée (W101) de l'ensemble à engrenages coniques (EG101) pour servir d'extrémité de sortie/entrée, le culbuteur (A101) lié par la roue (W103) est combiné à la partie de rotation intérieure de la machine électrique (EM 101), la partie de rotation extérieure de la machine électrique (EM 102) est combinée à l'arbre de rotation de type manchon (AS 101), l'arbre de rotation de type manchon (AS 101) mis en rotation et emmanché sur le premier arbre de rotation (S101) sert d'extrémité de sortie/entrée et est prévu pour relier un côté d'action du dispositif de frein commandable (BK101) tandis que l'autre côté d'action du dispositif de frein commandable (BK101) est attaché dans le boîtier (H100), l'ensemble à engrenages coniques (EG101) est également attaché dans le boîtier (H100), et la roue de sortie (W102) de l'ensemble à engrenages coniques (EG101) est prévue pour entraîner l'arbre de rotation (S102) pour servir d'extrémité de sortie/entrée, qui est principalement constituée de ;
-- Un ensemble à engrenages coniques (EG101) : qui est constitué d'une roue solaire (W101) et d'une roue annulaire extérieure (W102) et d'au moins une roue planétaire (W103), et y compris à travers des engrenages venant en prise l'un avec l'autre, ou à travers des roues de friction effectuant mutuellement des transmissions par friction pour former une fonction d'ensemble à engrenages planétaires, et structuré par le premier arbre de rotation (S101), le second arbre de rotation (S102), le culbuteur (A101), l'arbre de rotation de type manchon (AS 101) et un palier, ainsi qu'installés avec une coque pour être combinés dans le boîtier (H100) ;
Les rapports de vitesse de la roue d'entrée (W101) et de la roue de sortie (W102) de l'ensemble à engrenages coniques (EG101) mentionné sont identiques, et les rapports de vitesse entre les deux éléments ci-dessus et la roue (W103) peuvent être identiques ou différents ; ou
Les rapports de vitesse de la roue d'entrée (W101) et de la roue de sortie (W102) de l'ensemble à engrenages coniques (EG101) mentionné sont différents, les rapports de vitesse entre la roue (W103) et la roue de sortie (W102) peuvent être identiques ou différents, et les rapports de vitesse entre la roue (W103) et la roue d'entrée (W101) peuvent être identiques ou différents ;
-- Le culbuteur (A101) : ayant une extrémité prévue pour permettre à la roue (W103) de tourner et de lier, et l'autre extrémité étant combinée à la partie de rotation intérieure de la machine électrique (EM 101) ;
-- Dispositif de frein commandable (BK101) : qui est constitué d'un dispositif de freinage commandé par une force manuelle ou une force mécanique ou une force hydraulique ou une force pneumatique ou une force électromagnétique, et ayant deux côtés d'action commandables pour les opérations d'un état de verrouillage de frein pour une mise en prise ou un état de libération pour une séparation, dans lequel l'un des côtés d'action est relié à l'arbre de rotation de type manchon (AS 101) ou au culbuteur (A101), et l'autre côté d'action est attaché dans le boîtier (H100) ;
-- Dispositif de frein commandable (BK101) : qui est constitué d'un dispositif de freinage commandé par une force manuelle ou une force mécanique ou une force hydraulique ou une force pneumatique ou une force électromagnétique, et ayant deux côtés d'action commandables pour les opérations d'un état de verrouillage de frein pour une mise en prise ou un état de libération pour une séparation, dans lequel l'un des côtés d'action est relié à l'arbre de rotation de type manchon (AS 101) ou au culbuteur (A101), et l'autre côté d'action est attaché dans le boîtier (H100) ;
-- Dispositif de frein commandable (BK101) : qui est constitué d'un dispositif de freinage commandé par une force manuelle ou une force mécanique ou une force hydraulique ou une force pneumatique ou une force électromagnétique, et ayant deux côtés d'action commandables pour les opérations d'un état de verrouillage de frein pour une mise en prise ou un état de libération pour une séparation, dans lequel l'un des côtés d'action est relié à l'arbre de rotation de type manchon (AS 101) ou au culbuteur (A101), et l'autre côté d'action est attaché dans le boîtier (H100) ;
-- Machine électrique double commande (EM 100) : qui est constituée d'une machine électrique double commande synchrone ou non synchrone, à balai ou sans balai, CC ou CA, ayant une partie de rotation intérieure de la machine électrique (EM 101) et une partie de rotation extérieure de la machine électrique (EM 102), et installée avec des couvercles d'extrémité, des paliers et des dispositifs de conduction électrique associés utilisés pour introduire de l'énergie électrique, la partie de rotation intérieure de la machine électrique (EM 101) et la partie de rotation extérieure de la machine électrique (EM 102) sont tournées coaxialement, dans lequel la partie de rotation intérieure de la machine électrique (EM 101) est combinée au culbuteur (A101), et la partie de rotation extérieure de la machine électrique (EM 102) est combinée à l'arbre de rotation de type manchon (AS101) ;
-- Le premier arbre de rotation (S101) combiné à la roue d'entrée (W101) de l'ensemble à engrenages coniques (EG101) sert d'extrémité de sortie/entrée et est prévu pour se relier à un côté d'action du dispositif de frein commandable (BK103) tandis que l'autre côté d'action du dispositif de frein commandable (BK103) est attaché dans le boîtier (H100) ;
Machine électrique double commande ayant un ensemble à engrenages coniques commandable selon la revendication 1, dans laquelle le premier arbre de rotation (S101) combiné à la roue d'entrée (W101) de l'ensemble à engrenages coniques (EG101) sert d'extrémité de sortie/entrée, le culbuteur (A101) lié par la roue (W103) est combiné à la partie de rotation intérieure de la machine électrique (EM 101), la partie de rotation extérieure de la machine électrique (EM 102) est combinée à l'arbre de rotation de type manchon (AS 101), l'arbre de rotation de type manchon (AS 101) mis en rotation et emmanché sur le premier arbre de rotation (S101) sert d'extrémité de sortie/entrée, la roue de sortie (W102) de l'ensemble à engrenages coniques (EG101) est prévue pour entraîner l'arbre de rotation (S102) pour servir d'extrémité de sortie/entrée, et l'arbre de rotation (S102) est relié à un côté d'action du dispositif de frein commandable (BK102) tandis que l'autre côté d'action du dispositif de frein commandable (BK102) est attaché dans le boîtier (H100), qui est principalement constitué de :
Les opérations comprennent une ou plusieurs des fonctions suivantes :
-- Lorsque le dispositif de frein commandable (BK101) est commandé pour être dans l'état de libération, et que la machine électrique double commande (EM 100) n'est pas actionnée en tant que fonction de machine électrique, les relations de transmission entre le premier arbre de rotation (S101) et le second arbre de rotation (S102) et l'arbre de rotation de type manchon (AS 101) sont dans l'état de libération permettant une rotation inactive ;
-- Lorsque le dispositif de frein commandable (BK101) est commandé pour être dans l'état de libération, et que la machine électrique à double entraînement (EM 100) est actionnée en tant que fonction de machine électrique, les opérations interactives correspondantes de la fonction de générateur d'électricité ou de la fonction de moteur sont mises en oeuvre de manière correspondante entre la partie de rotation intérieure de la machine électrique (EM 101) et la partie de rotation extérieure de la machine électrique (EM 102), selon l'amortissement de la charge externe ou du couple de rotation, la vitesse de rotation et la direction de rotation de l'énergie cinétique de rotation entrée de manière externe soutenue par le premier arbre de rotation (S101), le second arbre de rotation (S102) et l'arbre de rotation de type manchon (AS101) ;
-- Lorsque le dispositif de frein commandable (BK101) est commandé pour être dans l'état de libération, et que la machine électrique double commande (EM 100) n'est pas actionnée en tant que fonction de machine électrique, les relations de transmission entre le premier arbre de rotation (S101) et le second arbre de rotation (S102) et l'arbre de rotation de type manchon (AS 101) sont dans l'état de libération permettant une rotation inactive ;
-- Lorsque le dispositif de frein commandable (BK101) est commandé pour être dans l'état de verrouillage de frein, et que la machine électrique double commande (EM 100) est actionnée en tant que fonction de machine électrique, entre la partie de rotation intérieure de la machine électrique (EM101) et la partie de rotation extérieure de la machine électrique (EM 102) est actionnée en tant que fonction de générateur d'électricité ou fonction de moteur pour effectuer des opérations interactives selon l'amortissement de la charge externe ou de l'énergie cinétique de rotation entrée de manière externe soutenue par le premier arbre de rotation (S101) et le second arbre de rotation (S102) ;
-- Lorsque le dispositif de frein commandable (BK102) est commandé pour être dans l'état de verrouillage de frein, le dispositif de frein commandable (BK101) et le dispositif de frein commandable (BK103) sont commandés pour être dans l'état de libération, et que la machine électrique double commande (EM 100) n'est pas actionnée en tant que fonction de machine électrique, la relation de transmission entre le premier arbre de rotation (S101) et l'arbre de rotation de type manchon (AS101) est dans une relation de connexion permettant une transmission ;
-- Lorsque le dispositif de frein commandable (BK101) est commandé pour être dans l'état de verrouillage de frein, et que la machine électrique double commande (EM 100) est actionnée en tant que fonction de machine électrique, entre la partie de rotation intérieure de la machine électrique (EM101) et la partie de rotation extérieure de la machine électrique (EM 102) est actionnée en tant que fonction de générateur d'électricité ou fonction de moteur pour effectuer des opérations interactives selon l'amortissement de la charge externe ou de l'énergie cinétique de rotation entrée de manière externe soutenue par le premier arbre de rotation (S101) et le second arbre de rotation (S102) ;
-- Lorsque le dispositif de frein commandable (BK103) est commandé pour être dans l'état de verrouillage de frein, le dispositif de frein commandable (BK101) et le dispositif de frein commandable (BK102) sont commandés pour être dans l'état de libération, et que la machine électrique double commande (EM 100) n'est pas actionnée en tant que fonction de machine électrique, la relation de transmission entre le second arbre de rotation (S102) et l'arbre de rotation de type manchon (AS101) est dans une relation de connexion permettant une transmission ;
-- Lorsque le dispositif de frein commandable (BK101) est commandé pour être dans l'état de verrouillage de frein, et que la machine électrique double commande (EM 100) est actionnée en tant que fonction de machine électrique, entre la partie de rotation intérieure de la machine électrique (EM101) et la partie de rotation extérieure de la machine électrique (EM 102) est actionnée en tant que fonction de générateur d'électricité ou fonction de moteur pour effectuer des opérations interactives selon l'amortissement de la charge externe ou de l'énergie cinétique de rotation entrée de manière externe soutenue par le premier arbre de rotation (S101) et le second arbre de rotation (S102) ;
-- Lorsque le dispositif de frein commandable (BK101) et le dispositif de frein commandable (BK102) sont tous deux commandés pour être dans l'état de verrouillage de frein, les relations entre le premier arbre de rotation (S101), le second arbre de rotation (S102) et l'arbre de rotation de type manchon (AS101) sont toutes dans l'état de verrouillage de frein ;
Les opérations interactives de fonction correspondante mises en oeuvre par la machine électrique double commande (EM 100) mentionnée comprennent la réception de la commande d'entraînement d'énergie électrique entrée de manière externe pour fonctionner en tant que fonction de moteur pour entraîner individuellement la charge, ou le travail avec l'énergie cinétique de rotation entrée de manière externe pour entraîner couramment la charge ;
Les opérations interactives de fonction correspondante mises en oeuvre par la machine électrique double commande (EM 100) mentionnée comprennent la réception de l'entraînement de l'énergie cinétique rotative entrée de manière externe ou de l'entraînement de l'énergie cinétique d'inertie de charge pour être actionnée en tant que fonction de générateur d'électricité, de façon à délivrer l'énergie électrique pour entraîner la charge électrique externe ou charger le dispositif de stockage d'énergie électrique externe.
